(19) Europäisches Patentamt
European Patent Office
Office européen des brevets

(11) EP 4 531 291 A1

(12) **EUROPEAN PATENT APPLICATION**
published in accordance with Art. 153(4) EPC

(43) Date of publication:
**02.04.2025 Bulletin 2025/14**

(21) Application number: **24822842.1**

(22) Date of filing: **14.06.2024**

(51) International Patent Classification (IPC):
***H04B 1/00*** *(2006.01)*

(52) Cooperative Patent Classification (CPC):
**G01S 7/282; G01S 7/285; G01S 7/35; G01S 7/40; G01S 7/41; H04B 1/00; H04B 1/04; H04B 1/16; H04B 1/40; H04B 1/525; H04B 10/40; H04B 17/21**

(86) International application number:
**PCT/CN2024/099438**

(87) International publication number:
**WO 2024/255895 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.06.2023 CN 202310702586**
**14.05.2024 CN 202410599441**

(71) Applicant: **Calterah Semiconductor Technology (Shanghai) Co., Ltd.**
**Shanghai 201210 (CN)**

(72) Inventors:
- **ZHANG, Zhan**
**Shanghai 201210 (CN)**
- **CHEN, Jiashu**
**Shanghai 201210 (CN)**

(74) Representative: **Murgitroyd & Company**
**165-169 Scotland Street**
**Glasgow G5 8PL (GB)**

(54) **SIGNAL TRANSMISSION LINK, SIGNAL CALIBRATION LINK, SIGNAL COMPENSATION LINK, SIGNAL TRANSCEIVING LINK, INTEGRATED CIRCUIT, ELECTROMAGNETIC WAVE SENSOR, AND DEVICE**

(57) The present disclosure relates to the technical field of electromagnetic wave sensors, in particular to a signal transmitting, calibration, compensation and transceiving links, an integrated circuit, an electromagnetic wave sensor and a device, wherein the transmitting link includes an analog signal source and a digital phase shifter, the analog signal source may be configured to provide an initial analog signal, and the digital phase shifter may be configured to provide a phase shift signal in a digital domain and to perform phase shifting on the initial analog signal based on the phase shift signal, so as to perform a preset phase shifting operation on the initial analog signal, thereby effectively improving the phase modulation resolution and phase modulation accuracy, and at the same time avoiding an off-line calibration operation on the phase shifter and other links and devices in the transmitting link, thereby reducing the complexity and difficulty of engineering implementation. In addition, it can effectively reduce area and loss of the transmitting link of the phase-shifting architecture, improve the stability of the system, and reduce a way coupling degree.

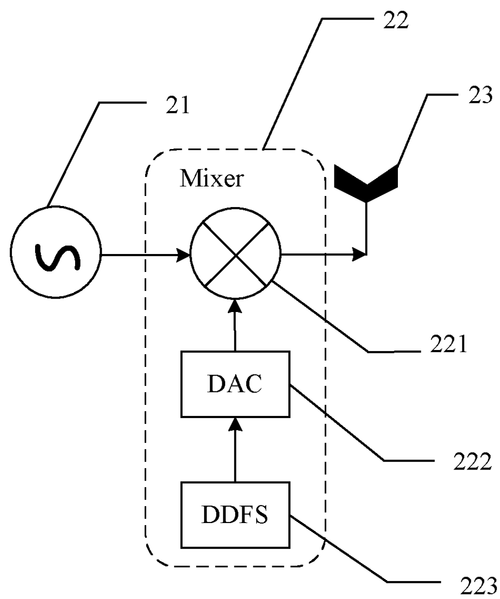

FIG. 2A

EP 4 531 291 A1

## Description

Cross-reference to related applications

The present application claims the priorities to Chinese Patent Application No. 202310702586.5 filed on June 14, 2023 and titled with "Signal Transmitting, Calibration, Compensation and Transceiving Links, IQ Mixer, Integrated Circuit, Sensor and Device" and Chinese Patent Application No. 202410599441.1 filed on May 14, 2024 and titled with "Signal Transmitting Link and Method, Transceiving Link, Integrated Circuit and Electromagnetic Wave Device", contents of which should be understood as being incorporated into the present disclosure by reference.

Technical Field

Embodiments of the present disclosure relate to, but are not limited to, the technical field of electromagnetic wave sensors, and particularly relate to signal transmitting, calibration, compensation and transceiving links, an integrated circuit, an electromagnetic wave sensor, and a device.

Background

Because a signal transmitting link using an analog phase shifter architecture has problems such as low phase modulation resolution and phase modulation accuracy, it cannot satisfy various requirements for high resolution and accuracy.

Summary

In order to solve the above technical problems, embodiments of the present disclosure provide signal transmitting, calibration, compensation and transceiving links, an IQ mixer, an integrated circuit, an electromagnetic wave sensor and a device, etc., and a signal transceiving link formed based on a digital phase shifter architecture and corresponding calibration and compensation links, etc., so as to effectively improve phase modulation resolution and phase modulation accuracy, and at the same time, an off-line calibration operation for links and devices such as phase shifters in the transmit link can be avoided, thereby reducing complexity and difficulty of engineering implementation. In addition, it can effectively reduce area and loss of the transmitting link of the phase-shifting architecture, improve the stability of the system, and reduce a channel coupling degree.

An embodiment of the present disclosure provides a signal transmitting link, applied in an electromagnetic wave sensor, wherein the transmitting link includes an analog signal source and a digital phase shifter, the analog signal source is configured to provide an initial analog signal, and the digital phase shifter is configured to generate a phase shift signal in a digital domain and to perform phase shifting on the initial analog signal based on the phase shift signal to perform a preset phase shifting operation on the initial analog signal.

Exemplarily, the signal transmitting link further includes a transmitting antenna, wherein the transmitting antenna is configured to radiate a phase-shifted initial analog signal to a preset space region.

Exemplarily, the digital phase shifter includes a digital phase shift signal source, a digital-to-analog converter and a mixer, wherein the digital phase shifter is configured to generate a digital phase shift signal, the digital-to-analog converter is configured to convert the received digital phase shift signal to an analog phase shift signal, and the mixer is configured to perform a mixing operation on the received initial analog signal using the received analog phase shift signal to perform a preset phase shifting operation on the initial analog signal.

Exemplarily, the digital phase shift signal source includes a direct digital frequency synthesizer, the digital-to-analog converter is an In-phase and Quadrature (IQ) digital-to-analog converter, and the mixer is an IQ mixer.

Exemplarily, the digital phase shift signal is a single-tone signal and the initial analog signal is a frequency sweep signal; or the digital phase shift signal is a frequency sweep signal, and the initial analog signal is a single-tone signal.

Exemplarily, the signal transmitting link transmits a frequency modulated continuous wave signal.

An embodiment of the present disclosure further provides a signal transmitting link, including a signal transmitting main path and a signal calibration link integrated in a same integrated circuit; wherein the signal calibration link is configured to calibrate the signal transmitting main path to acquire compensation information; and the signal transmitting main path is configured to generate a radio frequency transmitting signal after a compensation operation is performed according to the compensation information to implement target detection and/or communication.

Exemplarily, the compensation information includes at least one of a harmonic distortion compensation parameter, a local oscillator leakage compensation parameter, and a quadrature imbalance compensation parameter.

Exemplarily, the signal transmitting main path includes a first signal source and a phase shifter; wherein the first signal source is configured to generate a first analog signal; and the phase shifter is configured to perform frequency

shifting and/or phase shifting on the first analog signal to form a radio frequency transmit signal.

Exemplarily, when the phase shifter is of a non-quadrature architecture, the phase shifter includes a second signal source and a transmitting-end mixer, wherein the second signal source is configured to generate a second analog signal, and the transmitting-end mixer is configured to perform a frequency mixing processing on the first analog signal and the second analog signal to form the radio frequency transmitting signal.

When the phase shifter is of an quadrature architecture, wherein the phase shifter includes a second signal source, a digital-to-analog conversion module, and a transmitting-end mixer; wherein the second signal source is configured to generate a first digital signal; the digital-to-analog conversion module is configured to convert the first digital signal to a second analog signal; and the transmitting-end mixer is configured to perform frequency shifting and/or phase shifting on the first analog signal based on the second analog signal to form the radio frequency transmitting signal.

Exemplarily, the transmitting main path further includes a compensation circuit, wherein a signal input terminal of the compensation circuit is connected with the second signal source and a signal input terminal is connected with the phase shifter, and the compensation circuit is used for combining a compensation signal and a signal output by the second signal source before outputting.

Exemplarily, when signals output by the signal transmitting main path are two quadrature signals, a compensation signal used by the compensation circuit are two channel quadrature signals; when the signals output by the signal transmitting main path are not two quadrature signals, the compensation signal used by the compensation circuit is one channel signal of a same type as the signal output by the second signal source, wherein a signal type is a digital signal or an analog signal.

Exemplarily, the compensation circuit includes a compensation signal generator and an adder, the compensation signal generator may be configured to generate the compensation signal; the adder is connected with the compensation signal generator and the second signal source, and is configured to perform a signal superposition operation on the signal output by the second signal source and the compensation signal output by the compensation signal generator.

Exemplarily, when the signals output from the signal transmitting main path are two quadrature signals, the compensation signal generator includes at least one of a harmonic compensation signal unit, a quadrature imbalance compensation signal unit, and a local oscillator leakage compensation signal unit; when the signals output from the signal transmission main path are not two quadrature signals, the compensation circuit includes at least one of a harmonic compensation signal unit and a local oscillator leakage compensation signal unit; where the compensation signal generated by the harmonic compensation signal unit is used to cancel a harmonic signal of the main frequency signal in the signal transmitting main path; the compensation signal of the local oscillator leakage compensation signal unit is used for compensating the leakage signal generated by the transmitting-end local oscillator signal in the signal transmitting main path; The compensation signal generated by the quadrature imbalance compensation signal unit is used to compensate the image signal of the main frequency signal in the signal transmitting main path.

Exemplarily, a compensation signal generated by the harmonic compensation signal unit has a same frequency, a same amplitude, and an opposite phase as the harmonic signal in the signal transmitting main path.

Exemplarily, the harmonic compensation signal unit includes an n-power module or an n-frequency multiplier signal generator; the n-power module, where a signal input terminal of the n-power module is connected with a signal output terminal of the second signal source, and is configured to generate a signal having a frequency n times the frequency of the signal output by the second signal source by using the signal output by the second signal source to obtain the compensation signal. The n-frequency multiplier signal generator, is configured to generate a signal having a frequency n times the frequency of the signal output by the second signal source to obtain the compensation signal, where the value of n is a positive integer. Exemplarily, a value of n is an odd. Exemplarily, a value of n is 3.

Exemplarily, the compensation signal generated by the local oscillator leakage compensation signal unit is generated based on a leakage signal corresponding to the first analog signal used by the phase shifter.

Exemplarily, the compensation signal generated by the local oscillator leakage compensation signal unit has a same frequency and a same amplitude but opposite phases as the leakage signal.

Exemplarily, an image signal corresponding to the compensation signal used by the quadrature imbalance compensation circuit in the signal transmitting main path and an image signal corresponding to the desired signal generated by the signal transmitting main path have a same frequency, a same amplitude and opposite phases.

Exemplarily, the compensation signal used by the quadrature imbalance compensation circuit is determined from a signal output by the second signal source and a frequency-inverted complex conjugate signal of the signal output by the second signal source.

Exemplarily, acquiring methods of the compensation signal generated by the quadrature imbalance compensation circuit include: acquiring a product of a preset pre-compensation coefficient and the complex conjugate signal to obtain an adjustment signal corresponding to the complex conjugate signal; calculating a difference value between the signal output by the second signal source and the adjustment signal to obtain a compensation signal generated by the quadrature imbalance compensation circuit.

Exemplarily, the pre-compensation coefficient is determined based on a ratio value of an amplitude of a desired

signal to an amplitude of an image signal corresponding to the desired signal.

Exemplarily, the signal calibration link includes a signal receiving link corresponding to the signal transmitting main path, wherein the signal receiving link is configured to perform a receiving processing on an echo signal corresponding to an frequency modulated continuous wave (FMCW) radio frequency transmitting signal; wherein the signal receiving link is configured to acquire a sampling signal from the signal transmitting main path, and to obtain configuration information of a compensation signal according to the sampling signal; wherein the frequency of the transmitting-end local oscillator signal used in the signal transmitting main path and a frequency of a receiving-end local oscillator signal used in the signal receiving link are different.

Exemplarily, the signal calibration link further includes a frequency adjustment circuit configured to adjust a frequency of at least one of the sampling signal and the receiving-end local oscillator signal.

Exemplarily, a signal input terminal of the frequency adjustment circuit is connected between the signal transmitting main path and a transmitting antenna, and a signal output terminal of the frequency adjustment circuit is connected between the signal receiving link and a receiving antenna, wherein the frequency adjustment circuit is configured to adjust a frequency of the radio frequency transmitting signal output by the signal transmitting main path; correspondingly, the signal receiving link is configured to acquire a sampling signal from the frequency adjustment circuit and obtain configuration information of a compensation signal according to the sampling signal; alternatively, the frequency adjustment circuit is connected between a receiving-end mixer and a receiving-end local oscillator in the signal receiving link, and is configured to adjust a frequency of a receiving-end local oscillator signal, wherein the receiving-end local oscillator is configured to generate a receiving-end local oscillator signal, and the receiving-end mixer is configured to demodulate a received signal by using the receiving-end local oscillator signal; the signal receiving link is connected between the signal transmitting main path and the transmitting antenna, and is configured to acquire a sampling signal from the signal transmitting main path, and process the sampling signal by using a signal output by the frequency adjustment circuit to obtain configuration information of a compensation signal.

Exemplarily, when the radio frequency transmitting signal transmitted by the signal transmitting main path is two-way quadrature signals, the signal calibration link is a signal receiving link that supports processing an echo signal including the two-way quadrature signals.

Exemplarily, when the radio frequency transmitting signal transmitted by the signal transmitting main path are two-way quadrature signals, the signal calibration link is provided with a quadrature processing circuit and two-way signal receiving links, wherein each signal receiving link does not support processing quadrature echo signals; wherein the quadrature processing circuit is configured to perform a radio frequency processing on the received quadrature signals to obtain two-way signals, and send the two-way signals to the two- way signal receiving links respectively.

Exemplarily, the signal calibration link, a first input terminal of the signal calibration link is connected between a voltage-current converter and a current switch in the transmitting-end mixer in the signal transmitting main path, a second input terminal is connected between the signal transmitting main path and the transmitting antenna, and a signal output terminal is connected with the compensation circuit in the signal transmitting main path, and the signal output terminal is configured to acquire a signal in the signal transmitting main path from at least one of the first input terminal and the second input terminal, and determine compensation information according to the acquired signal.

Exemplarily, the signal calibration link includes a calibration demodulator, a multiplexer, and a calibration module; wherein the calibration demodulator is configured to acquire a signal in the signal transmitting main path from the second input terminal and perform a demodulation processing; the multiplexer has two signal input terminals and one signal output terminal, wherein one signal input terminal is connected between the V/I converter and the current switch in the transmitting-end mixer, and the other signal input terminal is connected to a signal input terminal of the calibration demodulator, and is configured to output a signal corresponding to one of the two signal input terminals; the calibration module is configured to determine the compensation information according to a signal output by the multiplexer.

Exemplarily, when the radio frequency transmitting signal transmitted by the signal transmitting main path is two-way quadrature signals, the acquisition signal transmitted by the signal calibration link is two-way quadrature signals.

Exemplarily, the acquisition signal transmitted by the signal calibration link is two-way quadrature signals, and the signal calibration link further includes an analog-to-digital converter, the analog-to-digital converter is connected between a signal acquisition circuit and the calibration module, and configured to perform analog-to-digital conversion processing on the acquisition signal output by the signal acquisition circuit.

An embodiment of the present disclosure further provides a signal transceiving link, including a signal transmitting link and a signal receiving link as described in any embodiment of the present disclosure; the signal receiving link includes a receiving-end mixer, an analog-to-digital converter and a digital signal processing module; wherein the receiving-end mixer may be configured to perform a down-conversion on a received echo signal based on a received receiving-end local oscillator signal to obtain an analog intermediate frequency signal, the analog-to-digital converter may be configured to perform an analog-to-digital conversion on the received intermediate frequency signal to obtain a digital intermediate frequency signal, and the digital signal processing module may be configured to process the digital intermediate frequency signal to obtain a target parameter; wherein the echo signal is a signal formed by reflection

and/or scattering of a signal transmitted by the signal transmitting link by a target object.

Exemplarily, the receiving-end mixer is a real mixer, and the analog-to-digital converter is a real analog-to-digital converter; alternatively, the receiving-end mixer is a quadrature mixer, and the analog-to-digital converter is a quadrature analog-to-digital converter.

Exemplarily, the receiving-end local oscillator signal is a frequency sweep signal; alternatively, the receiving-end local oscillator signal is a single-tone signal.

An embodiment of the present disclosure further provides a signal calibration link, including a signal transceiving link as described in any embodiment of the present disclosure; a receive antenna connection port of the signal receiving link is connected to a transmit antenna connection port of the signal transmitting link, the signal receiving link may be configured to perform calibration on the signal transmitting link.

Exemplarily, a local oscillator signal of the signal receiving link and a local oscillator signal of the signal transmitting link have a preset frequency difference.

Exemplarily, the signal calibration link further includes a Built-in Self-Test (BIST) module, the BIST module is disposed between the local oscillator signal source and the receiving-end mixer; wherein the BIST module is configured to mix received local oscillator signals based on a preset frequency offset signal to allow that there is a preset frequency difference between the local oscillator signal received by the receiving-end mixer and the local oscillator signal of the signal transmitting link.

An embodiment of the present disclosure further provides a signal calibration link, including a signal transceiving link as described in any embodiment of the present disclosure and a BIST module; a receive antenna connection port of the signal receiving link is connected to a transmit antenna connection port of the signal transmitting link through the BIST module, the signal receiving link may be configured to perform calibration on the signal transmitting link.

An embodiment of the present disclosure further provides a signal calibration link including two signal receiving links, a BIST module, an auxiliary circuit unit, and a signal transmitting link as described in any embodiment of the present disclosure. wherein any one of the signal receiving links each includes a real mixer, a real analog-to-digital converter and a digital signal processing module; the real mixer may be configured to perform a down-conversion on a received echo signal based on a received local oscillator signal to obtain an analog intermediate frequency signal, the real analog-to-digital converter is configured to perform an analog-to-digital conversion on the received intermediate frequency signal to obtain a digital intermediate frequency signal, and the digital signal processing module is configured to process the digital intermediate frequency signal to obtain a target parameter; wherein the echo signal is a signal formed by reflection and/or scattering of a signal transmitted by the signal transmitting link by a target object; receive antenna connection ports of the two signal receiving links are respectively connected to a transmit antenna connection port of the signal transmitting link through the auxiliary circuit unit and the BIST module in sequence, and a signal receiving link is configured to perform calibration on an intermediate frequency portion of the signal transmitting link.

An embodiment of the present disclosure further provides a signal calibration link of a signal transmitting main path, wherein the signal transmitting main path is configured to generate a radio frequency transmitting signal after performing a compensation operation on a generated signal according to a compensation coefficient, so as to achieve target detection and/or communication. The signal calibration link is configured to acquire current observation information of the signal transmitting main path at a current compensation coefficient; and when the current observation information satisfies an iteration condition, taking the current compensation coefficient as a compensation coefficient used by a compensation operation of the signal transmitting link; otherwise, the current compensation coefficient is iterated until obtained observation information satisfies the iteration condition.

Exemplarily, the compensation coefficient includes at least one of a harmonic distortion compensation parameter, a local oscillator leakage compensation parameter, and a quadrature imbalance compensation parameter.

Exemplarily, the signal transmitting main path and the signal calibration link are integrated in a same integrated circuit.

Exemplarily, the integrated circuit is a millimeter wave radar chip, and/or the radio frequency transmitting signal is an FMCW signal.

Exemplarily, a current compensation coefficient sequentially includes an initial compensation coefficient h (0), a first compensation coefficient h (1),..., a (k-1)-th compensation coefficient h (k-1), and a k-th compensation coefficient h (k), wherein the k-th compensation coefficient h (k) is determined according to the (k-1)-th compensation coefficient h (k-1) and a (k-1)-th observation information O (k-1); wherein k is an integer greater than or equal to 2.

Exemplarily, when a difference value between an initial observation information O (0) and the first observation information O (1) is greater than a preset difference threshold, the k-th compensation coefficient h (k) is determined according to the (k-1)-th compensation coefficient h (k-1) and the (k-1)-th observation information O (k-1); when the difference value between the initial observation information O (0) and the first observation information O (1) is less than a preset difference threshold, the initial observation information O (0) is adjusted according to a preset phase adjustment amount to obtain an adjusted first compensation coefficient h (1), and then a new first observation information O (1) is obtained according to the adjusted first compensation coefficient h (1), and the k-th compensation coefficient h (k) is

determined based on a new first observation information O (1); wherein a difference value between the initial observation information O (0) and the new first observation information O (1) is greater than the difference threshold.

Exemplarily, the determining the k-th compensation coefficient h (k) according to the (k-1)-th compensation coefficient h (k-1) and the (k-1)-th observation information O (k-1) includes: when a difference value between an absolute value of the initial observation information O (0) and an absolute value of the first observation information O (1) is larger than the preset difference threshold, a sum between the (k-1)-th compensation coefficient h (k-1) and the (k-1) observation information O (k-1) is iteratively calculated on the basis of updating the first compensation coefficient h (1) to the initial observation measure O (0), and the k-th compensation coefficient h (k) is determined. When a difference value between the absolute value of the first observation information O (1) and the absolute value of the initial observation information O (0) is larger than the preset difference threshold, a difference between the (k-1)-th compensation coefficient h (k-1) and the (k-1) observation information O (k-1) is iteratively calculated on the basis of updating the first compensation coefficient h (1) to an opposite number of the initial observation measure O (0), and the k-th compensation coefficient h (k) is determined.

Exemplarily, the determining the k-th compensation coefficient h (k) based on the new first observation information O (1) includes: when a difference value between the absolute value of the initial observation information O (0) and an absolute value of the new first observation information O (1) is greater than the difference threshold, a sum between the (k-1)-th observation information O (k-1) and an adjusted (k-1)-th observation information O (k-1) obtained after the (k-1)-th observation information O (k-1) is processed by the phase adjustment amount is iteratively calculated, and the k-th compensation coefficient h (k) is determined; when a difference value between an absolute value of the new first observation information O (1) and the absolute value of the initial observation information O (0) is greater than the difference threshold, the first compensation coefficient h (1) is updated to be an opposite number of the adjusted first compensation coefficient h (1), a difference value between the (k-1)-th compensation coefficient h (k-1) and the adjusted (k-1)-th observation information O (k-1) obtained after the (k-1)-th observation information O (k-1) is processed by the phase adjustment amount is iteratively calculated, and the k-th compensation coefficient h (k) is determined.

Exemplarily, the first compensation coefficient h (1) is determined according to the initial observation information O (0).

Exemplarily, a numerical value of the initial compensation coefficient h (0) is 0.

Exemplarily, the signal transmitting main path includes a baseband module and a radio frequency module, wherein the baseband module is configured to generate a baseband signal; the radio frequency module is configured to perform frequency shifting and/or phase shifting on the baseband signal by using the transmitting-end local oscillator signal to form a radio frequency transmitting signal; wherein the observation information is obtained from the radio frequency module.

Exemplarily, the radio frequency module includes an transmitting-end mixer and a power amplifier; wherein the transmitting-end mixer is configured to perform frequency shifting and/or phase shifting on the baseband signal using the transmitting-end local oscillator signal; the power amplifier is configured to perform a power amplification processing on a signal output by the transmitting-end mixer; wherein the observation information is acquired from at least one of a signal output terminal of a transmitting-end mixer, a signal output terminal of the power amplifier, and a signal output terminal of a voltage-current converter in the transmitting-end mixer.

An embodiment of the present disclosure further provides a signal calibration link of a signal transmitting main path, wherein the signal transmitting main path is configured to generate a radio frequency transmitting signal after performing a compensation operation on a generated signal according to a compensation coefficient for achieving target detection and/or communication. The signal calibration link is configured to determine an initial observation information O (0), a first observation information O (1), and a second observation information O (2) corresponding to the signal transmitting main path under a condition that the initial compensation coefficient h (0), the first compensation coefficient h (1), and the second compensation coefficient h (2) are numerically different; by using the initial observation information O (0), the first observation information O (1), and the second observation information O (2), a third compensation coefficient h (3) is determined as a compensation coefficient used by the compensation operation of the signal transmitting link.

Exemplarily, the compensation coefficient includes at least one of a harmonic distortion compensation parameter, a local oscillator leakage compensation parameter, and a quadrature imbalance compensation parameter.

Exemplarily, the signal transmitting main path and the signal calibration link are integrated in a same integrated circuit.

Exemplarily, the integrated circuit is a millimeter wave radar chip, and/or the radio frequency transmitting signal is an FMCW signal.

Exemplarily, the third compensation coefficient h (3) is determined by using the initial observation information O (0), the first observation information O (1), and the second observation information O (2), including: normalization processing is performed on the first observation information O (1) and the second observation information O (2) with the initial observation information O (0), respectively; on a condition that the third observation information O (3) is 0, the third compensation coefficient h (3) is determined by using the result of the normalization process.

Exemplarily, on a condition that the third observation information O (3) is 0, the third compensation coefficient h

(3) is determined by using the result of the normalization process, including: a first coefficient x1 corresponding to the first compensation coefficient h (1) and a second coefficient x2 corresponding to the second compensation coefficient h (2) are determined according to a first ratio d1 and a second ratio d2 on the condition that the third observation information O (3) is 0; wherein the first ratio d1 is a ratio between a first difference value and the initial observation information O (0), the first difference value is a difference value between the initial observation information O (0) and the first observation information O (1); a second ratio d2 is a ratio between a second difference value and the initial observation information O (0), the second difference value is a difference value between the initial observation information O (0) and the second observation information O (2); a product between the first coefficient x1 and the first compensation coefficient h (1) is calculated to obtain a first multiplication result; and a product between the second coefficient x2 and the second compensation coefficient h (2) is calculated to obtain a second multiplication result; the third compensation coefficient h (3) is determined according to the first multiplication result and the second multiplication result.

Exemplarily, a first coefficient x1 corresponding to the first compensation coefficient h (1) and a second coefficient x2 corresponding to the second compensation coefficient h (2) are determined according to a first ratio d1 and a second ratio d2, including: an observation equation is constructed, and a first coefficient x1 and a second coefficient x2 in the observation equation is determined; wherein a calculation expression of the observation equation is a second matrix, the second matrix is obtained by calculate a product between an inverse matrix of a 2 * 2 matrix and a first matrix of 1 row and 2 columns; wherein a first row of the 2 * 2 matrix records a value of a real part and a value of an imaginary part of the first ratio d1, and a second row records a value of a real part and a value of an imaginary portion of the second ratio d2; a value of the first row in the first matrix is 1, and a value of the second row is 0; a first row of the second matrix is a value of the first coefficient x1, and a second row is a value of the second coefficient x2.

Exemplarily, the third compensation coefficient h (3) is determined according to the first multiplication result and the second multiplication result, including: a sum of the first multiplication result and the second multiplication result is calculated to obtain the third compensation coefficient h (3).

Exemplarily, the first compensation coefficient h (1) and the second compensation coefficient h (2) are determined according to the initial observation information O (0). Exemplarily, a value of the initial compensation coefficient h (0) is 0.

Exemplarily, the signal transmitting main path includes a baseband module and a radio frequency module, wherein the baseband module is configured to generate a baseband signal; the radio frequency module is configured to perform frequency shifting and/or phase shifting on the baseband signal by using the transmitting-end local oscillator signal to form a radio frequency transmitting signal; wherein the observation information is obtained from the radio frequency module.

Exemplarily, the radio frequency module includes an transmitting-end mixer and a power amplifier; wherein the transmitting-end mixer is configured to perform frequency shifting and/or phase shifting on the baseband signal using the transmitting-end local oscillator signal; the power amplifier is configured to perform a power amplification processing on a signal output by the transmitting-end mixer; wherein the observation information is acquired from at least one of a signal output terminal of a transmitting-end mixer, a signal output terminal of the power amplifier, and a signal output terminal of a voltage-current converter in the transmitting-end mixer.

An embodiment of the present disclosure further provides a signal compensation link, including the signal transmitting link of any embodiment of the present disclosure, and a compensation unit. The compensation unit is configured to compensate at least one of an IQ mismatch, an IQ imbalance, a signal leakage, and harmonic distortion defects of the signal transmitting link.

Exemplarily, the compensation unit may be configured to compensate the signal transmitting link based on calibration data obtained from the signal calibration link according to any embodiment of the present disclosure.

Exemplarily, the signal receiving link of the signal calibration link is integrated as an auxiliary calibration module in a vicinity of the transmitting link to be calibrated to perform a real-time calibration operation in a working gap of the transmitting link.

An embodiment of the present disclosure further provides a feed line unequal length compensation method, which is applied to an antenna array of an electromagnetic wave sensor having at least two signal links, wherein the method includes: taking a signal link with a shortest feed line in the at least two signal links as a reference link, and acquiring a time delay difference of each remaining transmitting link with respect to the reference link; and performing feed line unequal length compensation on the antenna array in a digital domain based on the time delay difference.

Exemplarily, the feed line unequal length is happened between different transmit links or between different receive links, between the local oscillator (LO) and the mixer in each transmit channel, and/or between the PA of each transmit channel and its transmittting antenna.

An embodiment of the present disclosure further provides a signal calibration system, which is applied to an electromagnetic wave sensor. The signal calibration system includes a signal transmission link and an auxiliary link, wherein the auxiliary link is adjacent to the signal transmission link and integrated in the electromagnetic wave sensor; and the auxiliary link may be configured to perform real-time calibration on the signal transmission link.

Exemplarily, the signal transmission link includes a signal transmitting link and/or a signal receiving link; the auxiliary link corresponding to the signal transmission link includes an auxiliary receiving link and/or an auxiliary signal transmitting link; wherein the auxiliary receiving link may be configured to calibrate the transmitting link, and the auxiliary transmitting link may be configured to calibrate the receiving link.

Exemplarily, the signal receiving link includes a radio frequency part and a baseband part, and the auxiliary transmitting link corresponding to the signal receiving link includes a radio frequency auxiliary transmitting unit and a baseband auxiliary transmitting unit; and the radio frequency auxiliary transmitting unit may be configured to calibrate the radio frequency part, and the baseband auxiliary transmitting unit may be configured to calibrate the baseband part.

Exemplarily, the radio frequency auxiliary transmitting unit includes an IQ device; when the signal receiving link is calibrated by the auxiliary transmitting link, the baseband part is first calibrated by the baseband auxiliary transmitting unit, then the radio frequency auxiliary transmitting unit is calibrated by the calibrated baseband part, and then the radio frequency part is calibrated by the calibrated radio frequency auxiliary transmitting unit.

Exemplarily, the auxiliary receiving link includes an auxiliary receiving unit and a calibration receiving unit, wherein the auxiliary receiving unit includes an IQ device; and the calibration receiving unit may be configured to calibrate the auxiliary receiving unit, and the calibrated auxiliary receiving unit may be configured to calibrate the transmitting link.

An embodiment of the present disclosure further provides an IQ mixer, the IQ mixer includes an I-branch of mixing units, a Q-branch of mixing units and a transformer unit, wherein the I-branch of mixing units may be configured to output an I-way signal, the Q-branch of mixing units may be configured to output a Q-way signal, and the transformer unit may be configured to magnetically couple the I-way signal and the Q-way signal to synthesize an IQ frequency-mixed output signal.

Exemplarily, the transformer unit has a three-turn transformer structure, the three-turn transformer structure includes two branch inductors and one magnetic coupling inductor; wherein a branch inductor is respectively connected in series between output terminals of the I branch frequency mixing units and output terminals of the Q branch frequency mixing units, and the magnetic coupling inductor is disposed between the two branch inductors.

Exemplarily, the IQ mixer is applied to a digital phase shifter in the signal transmitting link according to any embodiment of the present disclosure, and/or is applied to the signal calibration link according to any embodiment of the present disclosure, and/or is applied to the signal calibration system according to any embodiment of the present disclosure.

An embodiment of the present disclosure further provides an integrated circuit, which includes a radio frequency module, an analog signal processing module, and a digital signal processing module connected in sequence; wherein the radio frequency module is configured to generate a radio frequency transmitting signal and receive a radio frequency receiving signal; the analog signal processing module is configured to perform a down-conversation processing on the radio frequency receiving signal to obtain an intermediate frequency signal; and the digital signal processing module is configured to perform an analog-to-digital conversion on the intermediate frequency signal to obtain a digital signal. And the radio frequency module includes the signal transmitting link according to any embodiment of the present disclosure, the signal transceiving link according to any embodiment of the present disclosure, the signal calibration link according to any embodiment of the present disclosure, the signal compensation link according to any embodiment of the present disclosure, the signal calibration system according to any embodiment of the present disclosure, and/or the IQ mixer according to any embodiment of the present disclosure; and/or the digital signal processing module performs compensation in a digital domain based on the feed line unequal length compensation method according to any embodiment of the present disclosure.

Exemplarily, the integrated circuit further includes a data processing module, wherein the data processing module is configured to process the digital signal to achieve target detection and/or wireless communication. Exemplarily, the integrated circuit is a millimeter wave chip or a UWB chip.

Exemplarily, the radio frequency receiving signal is an echo signal formed by reflection and/or scattering of the radio frequency transmitting signal by a target object, and the integrated circuit is a sensor chip.

An embodiment of the present disclosure further provides an electromagnetic wave sensor, which include a carrier; the integrated circuit described in any embodiment of the present disclosure, which is provided on the carrier; an antenna, the antenna is provided on the carrier, or the antenna is integrated with the integrated circuit as an integral device and provided on the carrier; wherein the integrated circuit is connected to the antenna and configured to transmit the radio frequency transmitting signal and/or receive the radio frequency receiving signal.

An embodiment of the present disclosure further provides a device, which includes: a device body; and an electromagnetic wave sensor according to any embodiment of the present disclosure provided on the device body; the electromagnetic wave sensor is used for target detection and/or communication to provide reference information to the operation of the device body.

An embodiment of the present disclosure further provides a non-transitory computer-readable storage medium having computer-readable instructions stored thereon, and when the instructions are executed by a processor, the processor performs the feed line unequal length compensation method according to any embodiment of the present

disclosure.

## Brief description of the drawings

The above and other objects, features, and advantages of the present disclosure will become more apparent from the following description of embodiments of the present disclosure with reference to the accompanying drawings.

FIG. 1A is a simplified schematic diagram of a signal transmitting link of an analog phase shifter architecture.

FIG. 1B is a simplified schematic diagram of an analog phase shifter in the signal transmitting link shown in FIG. 1A.

FIG. 2A is a simplified schematic diagram of a signal transmitting link of a digital phase shifter architecture according to an embodiment of the present disclosure.

FIG. 2B is a simplified schematic diagram of another signal transmitting link of a digital phase shifter architecture according to an embodiment of the present disclosure.

FIG. 2C is a schematic diagram of waveforms of an FMCW transmitting signal and an echo signal modulated using a sawtooth wave.

FIG. 3A is a schematic diagram of a signal model of a transmitter quadrature modulation under quadrature unbalance.

FIG. 3B is a schematic diagram of a signal generated by a real mixer.

FIG. 3C is a schematic diagram of third-order harmonic distortion.

FIG. 4A is a schematic diagram of a structure of a signal transmitting link according to an embodiment of the present disclosure.

FIG. 4B is a schematic diagram of quadrature imbalance compensation provided by an embodiment of the present disclosure.

FIG. 4C is a first schematic diagram of harmonic distortion compensation provided by an embodiment of the present disclosure.

FIG. 4D is a second schematic diagram of harmonic distortion compensation provided by an embodiment of the present disclosure.

FIG. 5A is a schematic diagram of a digital phase shifter architecture in a signal transmitting link according to an embodiment of the present disclosure.

FIG. 5B is a schematic diagram of a transmitting link including a specific compensation unit according to an embodiment of the present disclosure.

FIG. 6A is a schematic diagram of a structure of a signal transceiving link according to an embodiment of the present disclosure.

FIG. 6B is a schematic diagram of a structure of another signal transceiving link provided by an exemplary embodiment of the present disclosure.

FIG. 7A is a schematic diagram of a transceiving link including a TX IQ Mod, a BIST IQ Mod, and an RX Real Mixer according to an embodiment of the present disclosure.

FIG. 7B is a schematic diagram of a transceiving link including a TX IQ Mod, an RX IQ De-Mod, and an LO Freq Diff according to an embodiment of the present disclosure.

FIG. 8 is a schematic diagram of a transceiving link combined with BIST based on the structure shown in FIG. 7B according to an embodiment of the present disclosure.

FIG. 9 is a schematic diagram of a transceiving link including a TX IQ Mod, a BIST IQ Mod, and an RX IQ De-Mod according to an embodiment of the present disclosure.

FIG. 10 is a schematic diagram of a transceiving link including an auxiliary circuit and a BIST IQ Mod according to an embodiment of the present disclosure.

FIG. 11 is a schematic diagram of another transceiving link including an auxiliary circuit and a BIST IQ Mod according to an embodiment of the present disclosure.

FIG. 12A is a schematic diagram of a structure of a mixer according to an embodiment of the present disclosure.

FIG. 12B is a schematic diagram of a structure of a compensation unit in a transmitter according to an embodiment of the present disclosure.

FIG. 13A is a schematic diagram of a digital pre-compensation HD3 architecture based on a cubic module according to an embodiment of the present disclosure.

FIG. 13B is a schematic diagram of a digital pre-compensation HD3 architecture based on a frequency multiplier waveform generator module according to an embodiment of the present disclosure.

FIG. 13C is a schematic diagram of calibration compensation of a transmitting link based on a digital phase shifter architecture according to an embodiment of the present disclosure.

FIG. 14A is a schematic flowchart of a signal transmitting method according to an embodiment of the present disclosure.

FIG. 14B is a schematic diagram illustrating a principle of a method for determining a compensation coefficient according to an embodiment of the present disclosure.

FIG. 15 is a schematic diagram of a transmitting link having at least two transmitting channels according to an embodiment of the present disclosure.

FIG. 16 is a schematic diagram of a structure of a digital LO signal generator according to an embodiment of the present disclosure.

FIG. 17 is a schematic diagram of a structure of a transmitting link including a feed line unequal length compensation module according to an embodiment of the present disclosure.

FIG. 18 is a schematic diagram of calibrating and compensating a transceiving link using an auxiliary circuit according to an embodiment of the present disclosure.

FIG. 19 is a schematic diagram of calibrating and compensating a receiving link using an auxiliary transmitting circuit according to an embodiment of the present disclosure.

FIG. 20 is a schematic diagram of calibrating and compensating a transmitting link using an auxiliary receiving circuit according to an embodiment of the present disclosure.

FIG. 21 is a schematic diagram of a structure of an auxiliary circuit according to an embodiment of the present disclosure.

FIG. 22 is a schematic diagram of a structure of another auxiliary circuit according to an embodiment of the present disclosure.

FIG. 23 is a schematic diagram of a circuit module of an IQ Mixer according to an embodiment of the present disclosure.

FIG. 24 is a schematic diagram of a structure of an IQ Mixer according to an embodiment of the present disclosure.

FIG. 25 is a schematic diagram of a detailed structure corresponding to the structure shown in FIG. 24.

FIG. 26 is a schematic diagram of a physical structure of another IQ Mixer according to an embodiment of the present disclosure.

FIG. 27 is a schematic flowchart of another signal transmitting method according to an embodiment of the present disclosure.

FIG. 28 is a schematic flowchart of a yet another signal transmitting method according to an embodiment of the present disclosure.

FIG. 29 is a schematic flow diagram of a still another signal transmitting method according to an embodiment of the present disclosure.

detailed description

In order to facilitate the understanding of the present disclosure, the present disclosure will be described more fully below with reference to the accompanying drawings. Preferred embodiments of the present disclosure are shown in the accompanying drawings. However, the present disclosure may be implemented in different forms and is not limited to the embodiments described herein. Rather, these embodiments are provided for the purpose of providing a more thorough and comprehensive understanding of the present disclosure.

Unless otherwise defined, all technical and scientific terms used herein have the same meaning as commonly understood by those skilled in the art belonging to the present disclosure. The terms used in the specification of the present disclosure are for the purpose of describing specific embodiments only, and is not intended to limit the present disclosure.

Hereinafter, technical solutions of the present disclosure will be described in detail with reference to the accompanying drawings.

FIG. 1A is a simplified schematic diagram of a signal transmitting link of an analog phase shifter architecture, and FIG. 1B is a simplified schematic diagram of an analog phase shifter in the signal transmitting link shown in FIG. 1A.

As shown in FIG. 1A, when the sensor transmits a signal, for a transmitting link, an LO signal (such as a sweep signal in 77 GHz frequency band) is generated by a signal generator 11, such as a phase-locked loop (PLL), for example, the LO signal may be an FMCW signal. An analog phase shifter (Analog PS) 12 performs a phase shifting operation on the received LO signal, and then the received LO signal is radiated into a predetermined spatial region by the transmitting antenna 13 to perform operations such as target detection and measurement.

Optionally, in a transmitting link structure shown in FIG. 1A, an architecture of a corresponding analog phase shifter may be as shown in FIG. 1B, and a specific phase shifting principle thereof may be shown in the following formula:

$$\mathrm{LO_{IN}} \xrightarrow{0/90^\circ \text{ shifter}} \begin{cases} \mathrm{LO_I} = \sin\left(\omega_c t + \varphi(t)\right) \\ \mathrm{LO_Q} = \cos\left(\omega_c t + \varphi(t)\right) \end{cases} \xrightarrow{\mathrm{PA}} \mathrm{LO_{OUT}} = A \cdot \mathrm{LO_I} + B \cdot \mathrm{LO_Q} = \sqrt{A^2 + B^2}\sin\left(\omega_c t + \varphi(t) + \theta\right)$$

$$\theta = \tan\left(\frac{B}{A}\right)。$$

That is, two-way signals (i.e. $LO_I$ and $LO_Q$) are obtained after performing phase shifting of 0° and 90° respectively on the received LO signal (i.e. $LO_{IN}$), and the two-way signals are amplified by a power amplifier (PA) and fitted into a one-way output signal $LO_{OUT}$, that is, the output signal $LO_{OUT}$ is phase-shifted by $\theta$ compared with the $LO_{IN}$ input signal, a value of the phase-shifted $\theta$ is determined by an amplitude A of the two-way signal $LO_I$ and an amplitude B of $LO_Q$.

In addition, the analog phase shifter architecture described above may be implemented through a delay line (such as a Delay Line Unit), that is, using a Narrow-band assumption of a signal to perform phase shifting through time delay. The principle is as shown in the following formula:

$$\mathrm{LO_{IN}} = \sin\left(\omega_c t + \varphi(t)\right) \xrightarrow{\text{Delay Line Unit}} \mathrm{LO_{OUT}} = \sin\left(\omega_c (t-\tau) + \varphi(t-\tau)\right) \overset{\text{Narrow-band assumption}}{\approx} \sin\left(\omega_c (t-\tau) + \varphi(t)\right)$$

Herein, $\tau$ is a time delayed by the delay line.

Because a phase modulation resolution and a phase modulation accuracy of the analog phase shifter described above are low, it cannot satisfy the requirements of current sensors. At the same time, although the phase modulation resolution and phase modulation accuracy of the analog phase shifter can be improved through calibration, it is needed to

perform off-line calibration on the phase shifter of an analog architecture, which makes it difficult and complex for engineering implementation and product mass production. When the analog phase shifter operates in different states (temperatures), results of offline calibration may not be accurate. At the same time, the analog phase shifter still has some serious problems, such as a large area, large loss, stability and channel coupling. When multi-antenna phase shifters work together, performances of phase shifters will be affected by each other, which will further deteriorate performance of the system.

Based on this, the inventors of the present disclosure creatively propose a signal transmitting link of a digital phase shifter architecture, so as to effectively improve phase modulation resolution and phase modulation accuracy, and at the same time, it can avoid off-line calibration operation of links and devices such as phase shifters in the transmitting link, thereby reducing complexity and difficulty of engineering implementation. In addition, it can effectively reduce area and loss of the transmitting link of the phase-shifting architecture, improve the stability of the system, and reduce a channel coupling degree.

FIG. 2A is a simplified schematic diagram of a signal transmitting link of a digital phase shifter architecture according to an embodiment of the present disclosure. FIG. 2B is a simplified schematic diagram of another signal transmitting link of a digital phase shifter architecture according to an embodiment of the present disclosure. FIG. 2C is a schematic diagram of waveforms of an FMCW transmitting signal and an echo signal modulated using sawtooth wave.

An embodiment of the present disclosure provides a signal transmitting link, which may be applied to an electromagnetic wave sensor, and the transmitting link may include an analog signal source and a digital phase shifter. The analog signal source may be configured to provide an initial analog signal (such as an LO signal), and the digital phase shifter may be configured to generate a phase shift signal in a digital domain, and the digital phase shifter may perform phase shifting on the initial analog signal based on the phase shift signal to perform a phase shifting operation on the initial analog signal.

As shown in FIG. 2A, in some alternative embodiments, a signal transmitting link of a digital phase shifter architecture may include an analog signal source 21, a digital phase shifter (Digital PS) 22, a transmitting antenna 23, etc., that is, the analog signal source 21 may be configured to provide an LO signal, and the digital phase shifter 22 may be configured to perform a preset phase shifting operation on the received LO signal so that a phase-shifted LO signal is radiated into a preset spatial region through the transmitting antenna 23. However, the analog signal source 21 may be an architecture including a phase-locked loop (PLL), and may provide electromagnetic wave (such as laser, microwave, etc.) signals. Among them, the analog signal source 21, the digital phase shifter 22, and the transmitting antenna 23 may be integrated as an integrated device, or may be mutually separate components. For example, the analog signal source 21 and the digital phase shifter 22 may be integrated in a package to form such as a SoC chip, and the transmitting antenna 23 may be connected to and formed on a carrier such as a PCB board through a peripheral port of the chip. At the same time, in some alternative embodiments, the transmitting antenna 23 may be integrated on the package of the chip to form an AiP or an AoP, and has a chip structure of a packaged antenna.

As shown in FIG. 2A, the digital phase shifter 22 according to an embodiment of the present disclosure may include a Mixer 221, a digital-to-analog converter (i.e., DAC) 222, and a phase shift signal source (e.g., a digital baseband signal source (Baseband)) 223, and the like. The phase shift signal source 223 may be configured to provide a digital phase shift signal; The digital-to-analog converter 222 may be configured to perform an analog-to-digital conversion on the received digital phase shift signal to convert the digital phase shift signal into an analog phase shift signal; the mixer 221 may be configured to perform a mixing operation on the received analog phase shift signal and the received electromagnetic wave signal from the analog signal source 21 to achieve a set phase-shifting operation on the above electromagnetic wave signal using the digital phase shift signal. Optionally, when the signal transmitting link provides a frequency sweep signal, for example, providing an FMCW laser signal or an FMCW microwave signal, a frequency sweep electromagnetic wave signal may be provided based on the analog signal source 21, and/or a frequency sweep digital phase shift signal may be provided based on the phase shift signal source 223, so that a frequency sweep continuous wave signal may be output after being mixed by the mixer 221.

In some alternative embodiments, based on the structure shown in FIG. 2A, the analog signal source 21 may be configured to provide an FMCW signal in a centimeter wave frequency band or millimeter wave frequency band (e.g., 3.1 GHz, 24 GHz, 60 GHz, 77 GHz, etc.) in microwaves, the phase shift signal source 223 may be configured to provide a digital phase shift signal at MHz (e.g., 3 MHz to 5 MHz, e.g., 3 MHz, 4 MHz, 5 MHz, etc.) level , that is, the digital-to-analog converter 222 performs the digital-to-analog conversion on the digital phase-shifting signal at the MHz level to obtain an analog phase shift signal at a corresponding frequency range, and the mixer 221 may be configured to perform an up-mixing or a down-mixing operation on the received FMCW signal of the millimeter wave frequency band based on the received analog phase shift signal of a fixed frequency band to achieve a preset phase shift operation on the FMCW signal.

In some alternative embodiments, the centimeter wave signal in the 3.1 GHz frequency band may include 3.1 GHz to 10.6 GHz, such as 3.1 GHz, 5 GHz, 6 GHz, 8 GHz, 10.6 GHz, etc.; the millimeter wave signal in the 77 GHz frequency band may include a signal of 76 GHz to 81 GHz, for example, a frequency sweep signal such as 76 GHz to 77 GHz, 77 GHz to 79 GHz, and 79 GHz to 81 GHz, or a fixed frequency band signal such as 76 GHz, 77 GHz, 78 GHz, 79 GHz,

80 GHz, or 81 GHz, etc.

Based on the structure shown in FIG. 2A, because the phase shift signal source 223 provides a digital signal, in order to further adapt signal characteristics, the mixer 221 may be set as an IQ Mixer and the digital-to-analog converter 222 as an IQ DAC. Meanwhile, the phase shift signal source 223 may be configured to provide a digital baseband signal source (DDFS) for phase shifting and/or to provide a corresponding source signal as a Waveform Control.

As shown in FIG. 2B, an embodiment of the present disclosure provides a signal transmitting link, which is applied to a radar system. The signal transmitting link includes: a transmitting-end Baseband digital module 201 (including the phase shift signal source 223 described above), a digital-to-analog converter (DAC) module 202, a transmitting-end local oscillator 203 and a transmitting-end quadrature modulator 204. The digital-to-analog conversion module 202 includes two same digital-to-analog converters. The transmitting-end baseband digital module 201 is configured to generate two-way quadrature transmitting-end digital baseband signals (i.e., digital phase shift signals), and send the two-way quadrature transmitting-end digital baseband signals to the digital-to-analog conversion module 202, respectively. A digital-to-analog conversion module 202 is configured to convert two-way quadrature transmitting-end digital baseband signals into two-way transmitting-end analog baseband signals (i.e., analog phase shift signals). An transmitting-end local oscillator 203 is configured to provide an transmitting-end local oscillator signal TX_LO (i.e., an initial analog signal); the transmitting-end quadrature modulator 204 is configured to perform a phase shift operation while shifting the frequency of the transmitting-end local oscillator signal TX_LO based on the two transmitting-end analog baseband signals to form a predetermined phase-shifted FMCW radio frequency transmitting signal.

In an embodiment of the present disclosure, the transmitting-end digital baseband signal provided by the transmitting-end baseband digital module 201 includes preset phase information. The digital-to-analog conversion module 202 performs digital-to-analog conversion on the received transmitting-end digital baseband signal to convert the transmitting-end digital baseband signal into the transmitting-end analog baseband signal (e.g., without changing phase information); the transmitting quadrature modulator 204 performs mixing operation on the received transmitting-end analog baseband signal and the transmitting-end local oscillator signal TX_LO generated by the transmitting-end local oscillator 203 to perform a preset phase shifting operation while shifting the frequency of the transmitting-end local oscillator signal based on the transmitting-end analog baseband signal to form a predetermined phase-shifted FMCW radio frequency transmission signal.

In the signal transmitting link according to the embodiment of the present disclosure, a digital phase shifter architecture is formed by using the transmitting-end baseband digital module 201, the digital-analog conversion module 202 and the transmitting-end quadrature modulator 204. Because a baseband signal of the architecture is generated in the digital domain and has better quadrature and lower side lobes, the phase shift phase can be generated very accurately, so that the phase modulation resolution is higher, thus achieving the vehicle radar system with a high-resolution digital phase shift function, reducing the requirement of isolation degree between antennas, and at the same time the digital phase shifter architecture has the advantages of small link loss, low cost and no off-line calibration, and can support a more flexible wave transmitting solution, such as high-performance Doppler division multiplexing and frequency division multiplexing and frequency response compensation in the digital domain.

In the embodiment of the present disclosure, because the transmitting-end baseband digital module 201 provides a digital signal, in order to further adapt signal characteristics, the transmitting-end modulator is set as a quadrature modulator (IQ Modulator), and the digital-to-analog conversion module 202 is set as a quadrature digital-to-analog converter (IQ DAC).

In the embodiment of the present disclosure, the transmitting-end local oscillator 203 may be an architecture including a Phase-Locked Loop (PLL), and may provide electromagnetic wave (such as laser, microwave, etc.) signals.

In some exemplary implementations, the signal transmitting link further includes a Power Amplifier (PA) 205, and the power amplifier 205 is configured to perform power amplifying on a phase-shifted radio frequency signal and output the amplified signal to the transmitting antenna.

In some exemplary implementations, the signal transmitting link further includes a transmitting antenna 206, and the transmitting antenna 206 is configured to radiate the amplified signal to a preset spatial region.

In an embodiment of the present disclosure, the signal amplified by the power amplifier 205 may be radiated into a preset spatial region through the transmitting antenna 206 packaged as a whole or provided externally. That is, the transmitting-end local oscillator 203, the digital phase shifter 206, and the transmitting antenna 206 and the like may be integrated as an integrated device, or may be mutually separate components. For example, the transmitting-end local oscillator 203 and the digital phase shifter may be integrated in a package to form such as a SoC chip, and the transmitting antenna 206 may be connected to and formed on a carrier such as a PCB board through a peripheral port of the chip. At the same time, in some optional embodiments, the transmitting antenna 206 may be integrated on the package of the chip to form an AiP or an AoP, and has a chip structure of a packaged antenna.

In some exemplary implementations, the frequency bandwidth of the frequency sweep signal is above 2 GHz. For example, an electromagnetic wave of a transmitting signal emitted by a transmitting antenna of a frequency modulated continuous wave radar system is a high-frequency frequency modulated continuous wave, and an echo signal received by

a receiving antenna of the frequency modulated continuous wave radar system is an electromagnetic wave reflected/scattered back by a target object. FIG. 2C shows a schematic diagram of waveforms of an exemplary FMCW transmit signal and an echo signal. As shown in FIG. 2C, frequencies of the transmitting signal and the echo signal vary regularly with time. The frequency modulated continuous wave is generally a zigzag shape, a triangle shape, and the like. The present disclosure takes the zigzag shape as an example to illustrate. The electromagnetic wave in each frequency modulation period T is called a Chirp, and a frequency of a signal of each Chirp increases linearly with time. In an embodiment of the present disclosure, a bandwidth range B of one chirp is greater than or equal to 2 GHz.

In some exemplary implementations, the transmitting-end digital baseband signal is a single-tone signal and the transmitting-end local oscillator signal is a frequency sweep signal. In an embodiment of the present disclosure, the transmitting-end local oscillator 203 may be configured to provide an FMCW signal in a centimeter wave frequency band or millimeter wave frequency band (e.g., 3.1 GHz, 24 GHz, 60 GHz, 77 GHz, etc.) in microwaves, the transmitting-end baseband digital module 201 may be configured to provide a single stone transmitting-end digital baseband signal at MHz (e.g., 3 MHz to 5 MHz, e.g., 3 MHz, 4 MHz, 5 MHz, etc.) level , that is, the digital-to-analog conversion module 202 performs the digital-to-analog conversion on the single stone transmitting-end digital baseband signal at the MHz level to obtain an single stone transmitting-end analog baseband signal at a corresponding frequency range, and the transmitting-end quadrature modulator 204 may be configured to perform an up-mixing or a down-mixing operation on the received FMCW signal of the millimeter wave frequency band based on the received single stone transmitting-end analog baseband signal to achieve a preset phase shift operation on the FMCW signal.

Exemplarily, the FMCW signal in the 3.1 GHz frequency band may include the frequency sweep signal between 3.1 GHz and 10.6 GHz, such as 7.163 GHz-8.812 GHz; the FMCW signal in the 77 GHz band may include the frequency sweep of 76 GHz to 81 GHz, or the frequency sweep signal of 76 GHz to 77 GHz, 77 GHz to 79 GHz, 79 GHz to 81 GHz, or the like.

In other exemplary implementations, the transmitting-end digital baseband signal may be a frequency sweep signal and the transmitting-end local oscillator signal is a single stone signal.

In an embodiment of the present disclosure, the transmitting-end local oscillator 203 may be configured to provide an single-tone transmitting-end local oscillator signal in a centimeter wave frequency band or millimeter wave frequency band (e.g., 3.1 GHz, 24 GHz, 60 GHz, 77 GHz, etc.) in microwaves, the transmitting-end baseband digital module 201 may be configured to provide a transmitting-end digital baseband FMCW signal at MHz (e.g., 3 MHz to 5 MHz, e.g., 3 MHz, 4 MHz, 5 MHz, etc.) level, that is, the digital-to-analog conversion module 202 performs the digital-to-analog conversion on the transmitting-end digital baseband FMCW signal at the MHz level to obtain an transmitting-end analog baseband FMCW signal at a corresponding frequency range, and the transmitting-end quadrature modulator 204 may be configured to perform an up-mixing or a down-mixing operation on the received single-tone transmitting-end local oscillator signal of the centimeter wave frequency band or millimeter wave frequency band based on the received transmitting-end analog baseband FMCW signal to achieve a preset phase shifting and frequency sweeping operations on the single-tone transmitting-end local oscillator signal.

For example, the single-tone transmitting-end local oscillator signal in the 3.1 GHz frequency band may be a single-tone analog signal in a fixed frequency band such as 3.1 GHz, 5 GHz, 6 GHz, 8 GHz, and 10.6 GHz; the single-tone transmitting-end local oscillator signal in the 77GHz frequency band may be a single-tone analog signal in a fixed frequency band such as 76GHz, 77GHz, 78GHz, 79GHz, 80GHz, and 81GHz.

In some exemplary embodiments, the signal transmitting link further includes a Low Pass Filter (LPF) 207 disposed between the digital-to-analog conversion module 202 and the transmitting quadrature modulator 204, and the low pass filter is configured to perform low-pass filtering on the transmitting-end analog baseband signal output from the digital-to-analog conversion module 202 and output to the transmitting-end quadrature modulator 204.

As shown in FIG. 2B, the transmitting-end baseband digital module 201 generates two-way quadrature digital baseband signals, namely, an I-way digital baseband signal and a Q-way digital baseband signal, and sends the generated digital baseband signals to the digital-to-analog conversion module 202 (including two identical DACs, namely, an IQ DAC) to obtain two-way analog baseband signals. Then, the two analog baseband signals are input into the low-pass filter 207 to filter out an out-of-band noise signal, and a modulated radio frequency signal is obtained by the transmitting-end quadrature modulator 204 for quadrature modulation, and the modulated radio frequency signal is radiated out by the power amplifier 205 and the transmitting antenna 206.

In some exemplary implementations, the signal transmitting link may further include a Direct Digital Frequency Synthesizer (DDFS) (not shown in FIG. 2B) disposed between the transmitting-end baseband digital module 201 and the digital-to-analog conversion module 202, the Direct Digital Frequency Synthesizer may be configured to implement at least one of a plurality of signal waveforms and wave transmitting modes such as Code-Division Multiplexing (CDM), Doppler Division Multiplexing (DDM), Time-Division Multiplexing(TDM), Space Division Multiplexing (SDM), Circuit Switch Data (CSD), Digital Intermediate Frequency (Digital IF), etc. based on the received source signal to implement flexible configuration of signal transmission forms and transmission waveforms.

FIG. 3A is a schematic diagram of a signal model of a transmitter quadrature modulation when the quadrature is

unbalanced. As shown in the FIG. 3A, DSP is a digital signal processor, DAC is a digital-to-analog converter, LPF is a low-pass filter, and LO is a local oscillator signal source, $A_I(f)$ is a frequency domain expression of an output signal of an I-channel LPF, $E_I(f)$ is a baseband frequency response of an I-channel, $A'_I(f)$ is a frequency domain expression of a baseband output signal of the I-channel; $S_I(f)$ is a frequency domain expression of an output signal of an I-channel modulator, $G_I(f)$ is an Radio Frequency (RF) frequency response of the I-channel, $S'_I(f)$ is a frequency domain expression of a radio frequency output signal of the I-channel; herein, $\alpha_I$ is an amplitude gain of an I-channel mixer, $\varphi_I$ is a phase response of the I-channel mixer; $A_Q(f)$ is a frequency domain expression of an output signal of an Q channel LPF, $E_Q(f)$ is a baseband frequency response of an Q channel, $A'_Q(f)$ is a frequency domain expression of a baseband output signal of the Q channel; $S_Q(f)$ is a frequency domain expression of an output signal of an Q channel modulator, $G_Q(f)$ is an RF frequency response of the Q channel, $S'_Q(f)$ is a frequency domain expression of a radio frequency output signal of the Q-channel; $\alpha_Q$ is an amplitude gain of an Q-channel mixer, $\varphi_Q$ is a phase response of the Q-channel mixer; $U_{RF}(f)$ is a frequency domain expression of a transmitted modulated signal. In an embodiment of the present disclosure, the radio frequency circuit includes the mixer and all circuits passed through by the radio frequency signal, and the baseband circuit includes DAC and all circuits, passed through by the baseband signal, before the mixer.

According to the signal model shown in FIG. 3A, an output of the quadrature demodulator$U_{RF}(f)$ may be expressed as:

$$2U_{RF}(f)=A(f-f_m)V_1(f-f_m)+A^*(-f-f_m)V_1^*(-f-f_m)+A^*(-f+f_m)V_2(f-f_m)+A(f+f_m)V_2^*(-f-f_m)$$

Herein, $A(f - f_m)V_1(f - f_m)$ is a desired signal near frequency $f_m$;

$A^*(-f - f_m)V_1^*(-f - f_m)$ is a desired signal near frequency $-f_m$;

$A^*(-f + f_m)V_2(f - f_m)$ is an image signal near frequency $f_m$;

$A(f + f_m)V_2^*(-f - f_m)$ is an image signal near frequency $-f_m$;

$$V_1(f) = \frac{1}{2}\left[\alpha_I E_I(f)\tilde{G}_I(f)e^{j\phi I} + \alpha_Q E_Q(f)\tilde{G}_Q(f)e^{j\phi Q}\right];$$

$$V_2(f) = \frac{1}{2}\left[\alpha_I E_I(f)\tilde{G}_I(f)e^{j\phi I} - \alpha_Q E_Q(f)\tilde{G}_Q(f)e^{j\phi Q}\right].$$

$\tilde{U}_{RF}(f)$ denotes a complex baseband form of a signal $U_{RF}(f)$, i.e. $\bar{U}_{RF}(f) = 2\mathcal{U}(f + f_m)U_{RF}(f + f_m)$; when f < 0, u (f) = 0; when f ≥ 0, u (f) = 1.

Therefore, a baseband equivalent model of the quadrature modulator may be:

$$\tilde{U}_{RF}(f)=A(f)V_1(f)+A^*(-f)V_2(f)$$

; where, $A(f)V_1(f)$ is a desired signal near frequency $f_m$; $A^*(-f)V_2(f)$ is an image signal near frequency-$f_m$. An ability of the quadrature mixer to suppress unwanted image frequency components is measured by a relative image ratio (RIR). Therefore, a definition of RIR is a ratio of a power of a desired signal component and a power of an image signal component, so it can be written as $I_M(f) = \left|\frac{V_2(-f)}{V_1(f)}\right|^2$. The above equation illustrates that cascaded gains and phase responses of the I channel and Q channel need to be equal (both the cascaded gain and phase response of each channel should be considered), otherwise the channels are unbalanced and the image component does not be completely suppressed.

FIG. 3B is a schematic diagram of a signal generated by a real mixer. As shown in the FIG. 3B, $F_{IN}$ represents an input signal of the mixer, $F_{OUT}$ represents an output signal of the mixer, $F_{LO}$ represents a local oscillator signal used by the mixer, where the input signal of the mixer is a baseband signal with a frequency of $F_{BB}$, the local oscillator signal used by the mixer is a high frequency signal with a frequency of $F_{LO}$, and the output signal of the mixer is a signal with a frequency of $F_{LO} \pm F_{BB}$.

An ideal mixer will produce an output that is a product of the two inputs. In terms of frequency, the output should be $F_{LO}$+ $F_{BB}$ and $F_{LO}$-$F_{BB}$, excluding other items. If either input is not in the drive state, there is no output. However, in $F_{BB}$ and

$F_{LO}$, the real mixer will produce some energy. The energy generated at $F_{BB}$ may be negligible because it is far away from the desired output and is filtered out by a RF device after output by the mixer. Regardless of the energy generated at $F_{BB}$, the energy generated at $F_{LO}$ may be a problem. It is very close to or within the desired output signal and is difficult or impossible to be removed by filtering, as filtering will also filter out the desired signal. There are other pathways for LO to leak to the system output end, such as through the power supply or across silicon itself. Regardless of how the local oscillator leaks, its leakage may be referred to as LO Leakage (LOL).

Although the analog (radio frequency) circuit may be approximated by a linear model represented by a small signal, non-linearity of devices tends to produce some interesting and important phenomena that cannot be predicted. The input and output characteristics of nonlinearity in a memoryless system may be approximated as:

$$y(t) = \alpha_1 x(t) + \alpha_2 x^2(t) + \alpha_3 x^3(t) + \cdots \approx \alpha_1 x(t) + \alpha_2 x^2(t) + \alpha_3 x^3(t)$$

The nonlinear effects of many devices are caused by third-order terms, if $x_i(t) = A\cos(\omega t + \varphi)$ and $x_q(t) = A\sin(\omega t + \varphi)$, then

$$\begin{aligned} y_i(t) &\approx \alpha_1 A\cos(\omega t+\varphi) + \alpha_2 A^2 \cos^2(\omega t+\varphi) + \alpha_3 A^3 \cos^3(\omega t+\varphi) \\ &= \alpha_1 A\cos(\omega t+\varphi) + \alpha_2 A^2 \frac{1+\cos(2\omega t+2\varphi)}{2} + \alpha_3 A^3 \frac{3\cos(\omega t+\varphi)+\cos(3\omega t+3\varphi)}{4} \\ &= \frac{\alpha_2 A^2}{2} + (\alpha_1 A + \frac{3\alpha_3 A^3}{4})\cos(\omega t+\varphi) + \frac{\alpha_2 A^2}{2}\cos(2\omega t+2\varphi) + \underbrace{\frac{\alpha_3 A^3}{4}\cos(3\omega t+3\varphi)}_{3BB} \end{aligned}$$

$$\begin{aligned} y_q(t) &\approx \alpha_1 A\sin(\omega t+\varphi) + \alpha_2 A^2 \sin^2(\omega t+\varphi) + \alpha_3 A^3 \sin^3(\omega t+\varphi) \\ &= \alpha_1 A\sin(\omega t+\varphi) + \alpha_2 A^2 \frac{1-\cos(2\omega t+2\varphi)}{2} + \alpha_3 A^3 \frac{3\sin(\omega t+\varphi)-\sin(3\omega t+3\varphi)}{4} \\ &= \frac{\alpha_2 A^2}{2} + (\alpha_1 A + \frac{3\alpha_3 A^3}{4})\sin(\omega t+\varphi) - \frac{\alpha_2 A^2}{2}\cos(2\omega t+2\varphi) - \underbrace{\frac{\alpha_3 A^3}{4}\sin(3\omega t+3\varphi)}_{3BB} \end{aligned}$$

herein,

$$\cos^2(\alpha) = \frac{1+\cos(2\alpha)}{2},\ \sin^2(\alpha) = \frac{1-\cos(2\alpha)}{2},\ \cos^3(\alpha) = \frac{3\cos(\alpha)+\cos(3\alpha)}{4},\ \sin^3(\alpha) = \frac{3\sin(\alpha)-\sin(3\alpha)}{4}$$

If the system has odd symmetry, that is, the system is completely differential, then even harmonic terms can be cancelled, leaving odd harmonic terms, which is also called Harmonic distortion.

FIG. 3C is a schematic diagram of third-order harmonic distortion. As shown in FIG. 3C, a baseband signal generated by the baseband processor is a baseband signal with a frequency BB, and a desired signal "Wanted", a mirror signal IMG, and a third-order harmonic HD3 can be obtained after being processed by the IQ modulator. The signal output by the power amplifier PA includes the desired signal "Wanted", the mirror signal IMG, and the third-oder harmonic HD3.

The main source of HD3 is the third-order nonlinearity of a baseband analog device. As the above derivation, it can be seen that the third-order harmonic component HD3 of the baseband BB signal is located at -3BB. After passing through the mixer, the HD3 of the baseband is up-converted to LO-3BB, that is C-IM3. After PA amplification, the signal generated by modulation is difficult to distinguish at high frequencies.

From the above description, it can be seen that the digital quadrature modulated signal transmitting link needs to face problems such as IQ Imbalance, harmonic distortion, and LO Leakage and the like. After an ideal single-tone baseband signal passes through a quadrature up-mixer, multiple non-ideal single-tone signals with different frequencies will be generated at high frequencies. Therefore, in the present disclosure, from the system architecture, a digital pre-compensation module is added at the transmitting end to solve the problem caused by the non-ideal characteristics of the analog device in a digital quadrature modulation radar TX. When designing a system architecture, the present disclosure includes not only a pre-compensation module, but also a calibration loop to achieve real-time calibration and compensation.

FIG. 4A is a schematic diagram of a structure of a signal transmitting link according to an embodiment of the

present disclosure. As shown in FIG. 4A, the signal transmitting link includes a signal transmitting main path and a signal calibration link integrated in a same integrated circuit; the signal calibration link is configured to calibrate the signal transmitting main path to acquire compensation information; and the signal transmitting main path is configured to generate a radio frequency transmitting signal after a compensation operation is performed according to the compensation information to implement target detection and/or communication.

Because the signal calibration link is integrated in the integrated circuit including the transmitting main path, the signal calibration link can perform calibration operation on the transmitting main path in real time, and the calibration operation of the calibration link will not be changed if the operation environment of the transmitting main path is changed, so that the transmitting main path can obtain more accurate calibration information, and thus signal processing performance of the transmitting main path is improved.

Further, the compensation information includes at least one of a harmonic distortion compensation parameter, a local oscillator leakage compensation parameter, and a quadrature imbalance compensation parameter. Because the compensation information generated by the signal calibration link can solve the problems of quadrature imbalance, LO leakage and harmonic distortion, the signal quality in the main transmitting path of the digital phase shifter architecture can be effectively improved.

In one implementation, the integrated circuit is a millimeter wave radar chip, an Ultra Wide Band (UWB) chip, or the like, and/or the radio frequency transmitting signal is an FMCW signal.

The signal transmitting main path may include a first signal source and a phase shifter; the first signal source is configured to generate a first analog signal; and the phase shifter is configured to perform frequency shifting and/or phase shifting on the first analog signal to form a radio frequency transmit signal.

When the phase shifter is of a non-quadrature architecture, the phase shifter includes a second signal source and a transmitting-end mixer, the second signal source is configured to generate a second analog signal, the transmitting-end mixer is configured to perform a mixing processing on the first analog signal and the second analog signal to form the radio frequency transmitting signal; when the phase shifter is a quadrature architecture, the phase shifter includes a second signal source, a digital-to-analog conversion module, and an transmitting-end mixer; the second signal source is configured to generate a first digital signal; the digital-to-analog conversion module is configured to convert the first digital signal to a second analog signal; and the transmitting-end mixer is configured to perform frequency shifting and/or phase shifting on the first analog signal based on the second analog signal to form the radio frequency transmit signal.

The transmitting main path further includes a compensation circuit, wherein a signal input terminal of the compensation circuit is connected with the second signal source and a signal input terminal is connected with the phase shifter, and the compensation circuit is used for combining a compensation signal and a signal output by the second signal source before outputting.

When signals output by the signal transmitting main path are two-way quadrature signals, compensation signals used by the compensation circuit are two-way quadrature signals; when the signals output by the signal transmitting main path are not two-way quadrature signals, the compensation signal used by the compensation circuit is a signal of a same type as the signal output by the second signal source, where the signal type is a digital signal or an analog signal.

The compensation circuit includes a compensation signal generator and an adder, the compensation signal generator may be configured to generate the compensation signal; the adder is connected with the compensation signal generator and the second signal source, and is configured to perform a signal superposition operation on the signal output by the second signal source and the compensation signal output by the compensation signal generator.

Specifically, when the signals output from the signal transmitting main path are two-way quadrature signals, the compensation signal generator includes at least one of a harmonic compensation signal unit, a quadrature imbalance compensation signal unit, and a local oscillator leakage compensation signal unit; when the signals output from the signal transmitting main path are not two-way quadrature signals, the compensation circuit includes at least one of a harmonic compensation signal unit and a local oscillator leakage compensation signal unit ; where the compensation signal generated by the harmonic compensation signal unit is used to cancel a harmonic signal of the main frequency signal in the signal transmitting main path; the compensation signal of the local oscillator leakage compensation signal unit is used for compensating the leakage signal generated by the transmitting-end local oscillator signal in the signal transmitting main path; the compensation signal generated by the quadrature imbalance compensation signal unit is used to compensate the image signal of the main frequency signal in the signal transmitting main path.

An image signal corresponding to the compensation signal used by the quadrature imbalance compensation circuit in the signal transmitting main path and an image signal corresponding to the desired signal generated by the signal transmitting main path have a same frequency, a same amplitude and opposite phases.

In an exemplary embodiment, the compensation signal used by the quadrature imbalance compensation circuit is determined from a signal output by the second signal source and a frequency-inverted complex conjugate signal of the signal output by the second signal source. Acquiring methods of the compensation signal generated by the quadrature imbalance compensation circuit include: acquiring a product of a preset pre-compensation coefficient and the complex conjugate signal to obtain an adjustment signal corresponding to the complex conjugate signal; calculating a difference

value between the signal output by the second signal source and the adjustment signal to obtain a compensation signal generated by the quadrature imbalance compensation circuit. The pre-compensation coefficient is determined based on a ratio value of an amplitude of a desired signal to an amplitude of an image signal corresponding to the desired signal.

FIG. 4B is a schematic diagram of quadrature imbalance compensation provided by an embodiment of the present disclosure. As shown in FIG. 4B, in order to achieve compensation of the TX quadrature modulator, i.e. to suppress the presence of the undesired image signal, a pre-compensation method may be employed. Taking $h_{IQ}$ as a pre-compensation coefficient, acting on a complex conjugate signal A*(-f) of the baseband signal to be transmitted. A frequency domain expression of the pre-compensated baseband signal can be written as

$$A_{\mathrm{pc}}(f) = A(f) - h_{\mathrm{IQ}} \cdot A^*(-f) \longrightarrow a_{\mathrm{pc}}(n) = a(n) - h_{\mathrm{IQ}} \cdot a^*(n)$$

When the pre-compensated signal is now used as the signal for the input quadrature modulator, the frequency domain form of the modulator output can be expressed as:

$$\begin{aligned}\tilde{U}_{\mathrm{pc,RF}}(f) &= A_{\mathrm{pc}}(f)V_1(f) + A^*_{\mathrm{pc}}(-f)V_2(f) = \left[A(f) - h_{\mathrm{IQ}} \cdot A^*(-f)\right] V_1(f) + \left[A^*(-f) - h^*_{\mathrm{IQ}} \cdot A(f)\right] V_2(f) \\ &= A(f)\left[V_1(f) - h^*_{\mathrm{IQ}}V_2(f)\right] + A^*(-f)\left[V_2(f) - h_{\mathrm{IQ}}V_1(f)\right] \\ &= A(f)\left[V_1(f_t) - h^*_{\mathrm{IQ}}V_2(f_t)\right] + A^*(-f)\left[V_2(-f_t) - h_{\mathrm{IQ}}V_1(-f_t)\right]\end{aligned}$$

As can be seen from the above formula, it is only needed to ensure that $V_2(-f_t)-h_{IQ}V_1(f_t) = 0$, the image component can be suppressed by the manner of pre-compensation. Therefore, the pre-compensation coefficient can be expressed as: $h_{\mathrm{IQ}} = \frac{V_2(-f_t)}{V_1(-f_t)}$ ; where the pre-compensation coefficient represents a frequency response of an optimal pre-compensation filter that is used to perform the pre-distortion (pre-compensation) on I and Q signals before transmitting in the digital domain of the modulator. It can be seen that only a ratio of $V_2(-f_t)$ to $V_1(-f_t)$ needs to be estimated.

In an exemplary embodiment, the compensation signal generated by the local oscillator leakage compensation signal unit is generated based on a leakage signal corresponding to the first analog signal used by the phase shifter. Wherein the compensation signal generated by the local oscillator leakage compensation signal unit has a same frequency and a same amplitude but opposite phases as the leakage signal.

Specifically, cancellation of LOL (LO Leakage Correction, LOC) is achieved by generating a signal equal in amplitude but opposite in phase to the LOL, thereby canceling it. After obtaining an exact amplitude and phase of the LOL, a cancellation signal can be generated by applying a direct current offset to the input of the transmitter. The quadrature mixer structure enables it to produce cancellation signals well. Because quadrature signals of LO are present in the mixer, a signal of any phase and amplitude can be generated at the frequency of LO. The geometric interpretation can be done in a complex plane. A first row is a result of time-domain IQ two-way synthesis, and a second row is a geometric explanation from the perspective of IQ two-way signal spectrum. After a direct current bias is applied to the transmitting signal, the output terminal of the mixer contains a desired transmitting signal as well as a desired LOL cancellation signal. The deliberately generated cancellation signal LOC cancels the useless LOL, leaving only the desired transmit signal.

In an ideal condition $T\times_{LOC} = h_{DC,I} \times LO_I - h_{DC,Q} \times LO_Q = -T\times_{LOL}$. Therefore, The compensation method for LO leakage can be expressed as: $a_{pc}(n) = a(n) - h_{DC}$.

LOL can be modeled as follows:

Ideal IQ are respectively $\alpha_I\cos(w_m t)$ and $\alpha_Q\sin(w_m t)$; actual IQ are respectively $\alpha_I\cos(w_m t + \phi_I)$ and $\alpha_Q\sin(w_m t + \phi_Q)$; the LO leakage is $\beta_I\alpha_I cos(w_m t + \phi_I + \varphi_I)$-$\beta_Q\alpha_Q\cos(w_m t + \phi_Q + \varphi_Q)$; therefore, it is needed to cancel LO Leakage in the following way:

$$-Tx_{LOC} = h_{DC,I} \times \alpha_I \cos(w_m t + \phi_I) - h_{DC,Q}\alpha_Q \cos(w_m t + \phi_Q)$$

$$= \beta_I\alpha_I \cos(w_m t + \phi_I + \varphi_I) - \beta_Q\alpha_Q \cos(w_m t + \phi_Q + \varphi_Q) = Tx_{LOL}$$

Therefore, LOL can be cancelled by adding different direct current bias to I and Q signals.

In an exemplary embodiment, a compensation signal generated by the harmonic compensation signal unit has a same frequency, a same amplitude, and an opposite phase as the harmonic signal in the signal transmitting main path.

Specifically, the harmonic compensation signal unit includes an n-power module or an n-frequency multiplier signal generator; where a signal input terminal of the n-power module is connected with a signal output terminal of the second signal source, and is configured to generate a signal having a frequency n times the frequency of the signal output by the second signal source by using the signal output by the second signal source to obtain the compensation signal. The

n-frequency multiplier signal generator, is configured to generate a signal having a frequency n times the frequency of the signal output by the second signal source to obtain the compensation signal, where the value of n is a positive integer. Where the value of n is an odd. Further, n takes a value of 3.

FIGs. 4C and 4D are schematic diagrams of harmonic distortion compensation provided by an embodiment of the present disclosure. As shown in FIGs. 4C and 4D, similar to the principle of eliminating LOL, there are two compensation methods for third-order harmonic distortion, namely, a compensation architecture based on the n-th power module and a compensation architecture based on an n-frequency multiplier waveform generator.

$$a_{\mathrm{pc}}(n) = a(n) - h_{\mathrm{HD3}} \cdot \left(a^{*}(n)\right)^{3}$$

$$a_{\mathrm{pc}}(n) = a(n) - h_{\mathrm{HD3}} \cdot a_{3}(n)$$

FIG. 5A is a schematic diagram of the digital phase shifter architecture in the signal transmitting link shown in FIG. 2A; FIG. 5B is a schematic diagram of a transmitting link including a specific compensation unit according to an embodiment of the present disclosure. As shown in FIG. 5A, the signal transmitting link of the digital phase shifter architecture (TX digital phase shifter architecture) may include a digital baseband signal source (Baseband), a Direct Digital Frequency Synthesizer (DDFS), an IQ digital-to-analog converter (DAC), a Low-Pass Filter (LPF), an IQ modulator/IQ Mixer, a Power Amplifier (PA), etc. That is, the baseband signal source is configured to provide a digital phase shift source signal, and the direct digital frequency synthesizer may be configured to achieve at least one of a plurality of signal waveforms and wave transmitting modes such as Code-Division Multiplexing (CDM), Doppler Division Multiplexing (DDM), Time-Division Multiplexing (TDM), Space Division Multiplexing (SDM), Circuit Switch Data (CSD), and Digital Intermediate Frequency (Digital IF), etc. based on the received source signal, so as to achieve flexible configuration of signal transmitting forms and transmitting waveforms. The signal amplified by the power amplifier may be radiated into a preset spatial region through the transmitting antenna packaged as a whole or externally provided.

For the signal transmitting link of the digital phase shifter architecture according to the embodiment of the present disclosure, because the digital phase shifter architecture is configured to generate a baseband signal sequence in the digital domain, and can generate an analog baseband signal through a DAC, and then modulate the transmitted signal to a high frequency through a quadrature mixer, that is, because the baseband signal of the architecture is generated in the digital domain and has better quadrature and lower side lobes, the phase of the shift phase can be generated very accurately, so that the phase modulation resolution is higher.

In some alternative embodiments, for the signal transmitting link of the digital phase shifter architecture, when the transmitted signal obtained by RF LO frequency sweep is an FMCW signal, a compensation unit may be added to the signal transmitting link for possible problems such as TX IQ Imbalance, signal leakage (such as TX LO Leakage) and harmonic distortion (HD) caused by IQ Mismatch. As shown in FIG. 5A, a compensation unit (TX compensation) is provided between the TX DDFS and the IQ DAC to perform operations such as calibration and compensation on the signal transmitting link of the digital phase shifter architecture to solve at least one of the above-described problems. HD caused by the third-order nonlinearity of the baseband can be simply referred to as HD3.

In some alternative embodiments, as shown in FIGs. 5A-5B, the TX compensation unit may include at least one of an LO leakage compensation unit (TX LO leakage compensation), an IQ imbalance compensation unit (TX IQ Imbalance compensation) and an HD3 compensation unit (TX HD3 compensation), where the LO leakage compensation unit may be configured for a compensation operation for signal leakage, the IQ imbalance compensation unit may be configured for a compensation operation for an IQ imbalance, and the HD3 compensation unit may be configured for a compensation operation for the HD3 described above. The IQ imbalance compensation unit may be configured to perform a compensation operation on one of an IQ modulator imbalance (TX IQ Modulator imbalance), an IQ channel imbalance. In addition, when the TX compensation unit includes at least two of the LO leakage compensation unit, the IQ imbalance compensation unit, and the HD3 compensation unit, the compensation may be performed synchronously (for example, in a parallel mode) according to the actual demand, signal characteristics, and the like, or the compensation may be performed sequentially (for example, in a series mode). As shown in FIG. 5B, the IQ imbalance compensation may be performed first, then the LO leakage compensation may be performed, and finally the HD3 compensation may be performed.

In some alternative embodiments, the signal transmitting link of the digital phase shifter architecture may further include an error correction module (such as a TX DAC Board Error Correction) for DAC and an additive white Gaussian noise (AWGN ) module for a white gaussian noise, etc., which are not shown in the figures, and may be added or deleted according to actual needs. Herein, I in IQ mentioned in the embodiments of the present disclosure may be expressed as an abbreviation of In-Phase, Q may be expressed as an abbreviation of quadrature, and RF may be expressed as an abbreviation of radio frequency.

The embodiment of the present disclosure further provides a signal transceiving link, including a signal

transmitting link and a signal receiving link. As shown in FIG. 6A or FIG. 6B, the signal transmitting link may include: a transmitting-end baseband digital module 201, a digital-to-analog conversion module 202, a transmitting-end local oscillator 203, and a transmitting-end quadrature modulator 204, where the transmitting-end baseband digital module 201 is configured to generate two-way quadrature transmitting-end digital baseband signals and send the generated transmitting-end digital baseband signals to the digital-to-analog conversion module 202; the digital-to-analog conversion module 202 is configured to convert the transmitting-end digital baseband signals to transmitting-end analog baseband signals; the transmitting-end local oscillator 203 is configured to provide a transmitting-end local oscillator signal TX_LO; the transmitting-end quadrature modulator 204 is configured to perform a phase-shifting operation on the transmitting-end local oscillator signal TX_LO based on the transmitting-end analog baseband signal to obtain a phase-shifted radio frequency signal.

The signal receiving link may include a receiving-end local oscillator 302, a receiving-end mixer 303, an analog-to-digital converter (ADC) 304, and a receiving-end baseband digital module 305; the receiving-end local oscillator 302 is configured to provide a receiving-end local oscillator signal; the receiving-end mixer 303 is configured to perform a mixing operation on a received echo signal based on the receiving-end local oscillator signal to obtain a receiving-end analog baseband signal; the analog-to-digital converter 304 is configured to convert the receiving-end analog baseband signal to a receiving-end digital baseband signal; the receiving-end baseband digital module 305 is configured to perform a processing on the receiving-end digital baseband signal to achieve target detection and/or wireless communication, for example, to obtain parameter information such as distance, velocity, angle, altitude, and micro-motion characteristics of the target.

In an embodiment of the present disclosure, two-way ideal signal such as I-way digital baseband signal and Q-way digital baseband signal generated by the transmitting-end baseband digital module 201, pass through the digital-to-analog conversion module 202 to obtain a very ideal complex signal, and a phase of the complex signal can be accurately controlled by the transmitting-end baseband digital module 201. Through a receiver structure in the signal transceiving link as shown in FIG. 6A or FIG. 6B, phase information of a radio frequency signal of the signal transmitting link can be effectively acquired, and phase modulation of multi-antenna can be achieved.

In some exemplary implementations, the signal transmitting link may further include a power amplifier 205, and the power amplifier 205 is configured to perform power amplifying on a phase-shifted radio frequency signal and output the amplified signal to the transmitting antenna.

In some exemplary implementations, the signal transmitting link may further include a transmitting antenna 206, where the transmit antenna 206 is configured to radiate the amplified signal to a preset spatial region.

In some exemplary implementations, the signal receiving link may further include a receiving antenna 301, and the receiving antenna 301 is configured to receive an echo signal, and the echo signal is a signal formed by reflection and/or scattering of a signal transmitted by the signal transmitting link by a target object.

In some exemplary implementations, the receiving-end local oscillator signal may be a frequency sweep signal, or the receiving-end local oscillator signal may be a single-tone signal.

In an embodiment of the present disclosure, in the signal transceiving link described above, a frequency of a TX-LO signal received by the transmitting-end quadrature modulator 204 in the signal transmitting link and a RX-LO signal received by the receiving-end mixer 303 in the signal receiving link may be the same. For example, assuming that a signal output by the transmitting-end baseband digital module 201 is a sine wave of x MHz, then both the TX-LO signal and the RX-LO signal may be a sine wave of z GHz, where x and z are both positive numbers, generally between 0 and 1000.

Principles of the present disclosure are described below through the signal transceiving link shown in FIG. 6A. As mentioned above, for an FMCW radar system, the signal transmitting link may have two wave transmitting solutions: 1) the transmitting-end local oscillator signal is sweep frequency signal and the transmitting-end digital baseband signal is a single-tone signal; 2) the transmitting-end local oscillator signal is a single-tone signal, and the transmitting-end digital baseband signal is a sweep frequency signal. Assuming that the transmitting-end local oscillator signal TX_LO, the transmitting-end digital baseband signal and the modulated transmitting signal are represented by TLO (t), BB (t) and TX (t) respectively, and subscripts I and q are used to represent the I-way signal and the Q-way signal, and the superscript a is used to represent its complex signal form, then under the two wave transmitting solutions, signals at each stage of the signal transmitting link can be represented as follows:

the transmitting-end local oscillator signal is a sweep frequency signal and the transmitting-end digital baseband signal is a single-tone signal:

$$BB^a(t) = e^{j2\pi f_{bb}t+\emptyset_0}(1);$$

$$TLO^a(t) = e^{j2\pi\ (f_{tlo}t+\frac{\alpha}{2}t^2)\ +\varphi_0}(2);$$

$$TX^a(t) = BB^a(t) \times TLO^a(t) = e^{j2\pi\ (f_{tlo}t + f_{bb}t + \frac{\alpha}{2}t^2)\ + \emptyset_0 + \varphi_0}(3);$$

$$TX(t) = BB_I(t) \times TLO_I(t) - BB_Q(t) \times TLO_Q(t) = \cos\left(2\pi\ \left(f_{tlo}t + f_{bb}t + \frac{\alpha}{2}t^2\right)\ + \emptyset_0 + \varphi_0\right)(4).$$

the transmitting-end local oscillator signal is a single-tone signal, and the transmitting-end digital baseband signal is a sweep frequency signal:

$$BB^a(t) = e^{j2\pi(f_{bb}t + \frac{\alpha}{2}t^2) + \emptyset_0}(5);$$

$$TLO^a(t) = e^{j2\pi f_{tlo}t + \varphi_0}(6);$$

$$TX^a(t) = BB^a(t) \times TLO^a(t) = e^{j2\pi\ (f_{tlo}t + f_{bb}t + \frac{\alpha}{2}t^2)\ + \emptyset_0 + \varphi_0}(7);$$

$$TX(t) = BB_I(t) \times TLO_I(t) - BB_Q(t) \times TLO_Q(t) = \cos\left(2\pi\ \left(f_{tlo}t + f_{bb}t + \frac{\alpha}{2}t^2\right)\ + \emptyset_0 + \varphi_0\right)(8).$$

Wherein, $\alpha = \frac{B}{T_{sweep}}$ a frequency sweep slope of the FMCW signal, $f_{bb}$ is a starting frequency of the transmitting-end digital baseband signal,$f_{tlo}$ is the starting frequency of the transmitting-end local oscillator signal, $\emptyset_0$ is an initial phase of the transmitting-end digital baseband signal, $\varphi_0$ is an initial phase of the transmitting-end local oscillator signal.

Assuming that the receiving-end local oscillator signal RX_LO in the signal receiving link is represented by RLO (t), and in the present embodiment, assuming that the receiving-end local oscillator signal RX_LO is a frequency sweep signal, then RLO (t) can be expressed as:

$$RLO(t) = \cos\left(2\pi\ \left(f_{rlo}t + \frac{\alpha}{2}t^2\right)\ + \Phi_0\right)(9);$$

Where$f_{rlo}$ is a starting frequency of the receiving-end local oscillator signal, $\Phi_0$is an initial phase of the receiving-end local oscillator signal. The radio frequency signal transmitted by the signal transmitting link is reflected/scattered by the target to generate an echo signal, and after passing through the receiving antenna 301, the receiving-end mixer 303 and a receiving-end low-pass filter 307, an equation can be obtained:

$$x(t) = LPF(TX(t) \times RLO(t-\tau)) = \cos\left(2\pi((f_{tlo} + f_{bb} - f_{rlo})\tau + \alpha\tau t - \frac{\alpha\tau^2}{2})\ + \emptyset_0 + \varphi_0 - \Phi_0)\right)(10);$$

herein $\tau$ represents a time delay of the radio frequency signal transmitted by the signal transmitting link returning to the signal receiving link after being reflected/scattered by the target.

The above formula illustrates that in the above two frequency sweep methods, accurate phase modulation can be performed through controlling the initial phase of the transmitting-end digital baseband signal $\emptyset_0$, thereby achieving high-precision and high-accuracy phase shifting, and avoiding direct phase shifting at high frequencies.

In some alternative embodiments, the receiving antenna 301 may be connected through a peripheral port of the chip and formed on a carrier such as a PCB board. At the same time, in other alternative embodiments, the receiving antenna may be integrated on the package of the chip to form an AiP or an AoP, that is, a chip structure having a packaged antenna.

In some exemplary implementations, the signal receiving link may further include a Low Noise Amplifier (LNA) 306 disposed between the receiving antenna 301 and the receiving-end mixer 303, and the echo signal received by the receiving antenna 301 is low noise amplified, and then transmitted to the receiving-end mixer 303.

In some exemplary implementations, the signal receiving link may further include a series-connected Low Pass Filter (LPF) 307 and a High Pass Filter (HPF) 308 disposed between the receiving-end mixer 303 and the analog-to-digital converter 304. The Low Pass Filter 307 and the High Pass Filter 308 form a band pass filter for filtering out out-of-band noise.

In some exemplary implementations, as shown in FIG. 6A, in the signal receiving link, the receiving-end mixer 303 may be a real mixer and the analog-to-digital converter 304 may be a real analog-to-digital converter.

In the embodiment of the present disclosure, although the signal transmitting link has a digital phase shift architecture, the signal receiving link may include a receiver with an quadrature receiving architecture or a non-quadrature receiving architecture, so that sensors of the receiving links of various architectures can be effectively compatible with each other, and development cost of the entire transceiving link system can be effectively reduced.

In other exemplary implementations, as shown in FIG. 6B, in the signal receiving link, the receiving-end mixer 303 may be a quadrature mixer and the analog-to-digital converter 304 may be a quadrature analog-to-digital converter.

In order to match the signal transmitting link of the digital phase shifter architecture, the embodiment of the present disclosure adjusts the receiving-end mixer 303 in the signal receiving link to an IQ Demodulator, and adjusts the analog-to-digital converter 304 to an IQ ADC, and the echo signal received by the receiving antenna is sequentially processed by the low noise amplifier 306, the receiving-end mixer 303, the low-pass filter 307, the high-pass filter 308 and the analog-to-digital converter 304, and then converted into an IQ digital baseband signal. The subsequent receiving-end baseband digital module 305 processes the IQ digital baseband signal to obtain parameter information such as distance, velocity, angle, altitude and micro-motion characteristics (i.e. micro-Doppler) of the target.

When receiving-end mixer 303 is a quadrature mixer and the receiving-end local oscillator signal is a frequency sweep signal, the receiving-end local oscillator signal RX_LO can be expressed as: $RLO^a(t) = e^{j2\pi\ (f_{rlo}t+\frac{\alpha}{2}t^2)\ +\Phi_0}(11)$.

In other exemplary implementations, the receiving-end local oscillator signal of the signal receiving link may be a single-tone signal shown in Formula (12) or Formula (13) in addition to the sweep frequency signal shown in Formula (9) or Formula (11).

$$\text{Receiving-end mixer 303 is a real mixer: } RLO(t) = \cos(2\pi f_{rlo}t + \Phi_0)(12).$$

$$\text{Receiving-end mixer 303 is a quadrature mixer: } RLO^a(t) = e^{j2\pi f_{rlo}t+\Phi_0}(13).$$

When the receiving-end local oscillator signal is a single-tone signal, it is only needed to add a signal processing flow of the digital domain (including the mixing operation of the digital domain) to the receiving-end baseband digital module 305, and the required digital baseband signal can also be obtained.

To sum up, according to the embodiments of the present disclosure, a plurality of system-level technical solutions can be expanded according to a combination of different transmitting solutions and receiving solutions (for example, whether the transmitting-end adopts a digital baseband signal single-tone and a local oscillator signal frequency sweep or a digital baseband signal frequency sweep and a local oscillator signal single-tone; whether the receiving-end adopts a real mixer and a real analog-to-digital converter or a quadrature mixer and a quadrature analog-to-digital converter; whether the receiving-end adopts a single-tone local oscillator signal or a frequency-swept local oscillator signal).

FIG. 7A is a schematic diagram of a transceiving link including a TX IQ modulation (Mod) and an RX real demodulation (Real De-Mod) according to an embodiment of the present disclosure. FIG. 7B is a schematic diagram of a transceiving link including a TX IQ Mod and an RX IQ De-Mod according to an embodiment of the present disclosure. FIG. 8 is a schematic diagram of a transceiving link based on the structure shown in FIG. 7B combined with BIST. FIG. 9 is a schematic diagram of a transceiving link including a TX IQ Mod, a BIST IQ Mod, and an RX IQ De-Mod according to an embodiment of the present disclosure.

Hereinafter, based on the transmitting link structure recorded in the embodiment of the present disclosure, a transceiving link formed by the transmitting link structure will be described.

As shown in FIG. 7A, a transceiving link may include a transmitting link, a receiving link, etc. The transmitting link may include a digital baseband signal source (Baseband), a direct digital frequency synthesizer (TX DDFS), an IQ digital-to-analog converter (IQ DAC), a low-pass filter (LPF), an IQ Modulator, a power amplifier (PA), etc., which are connected in sequence, and a signal amplified by the power amplifier is radiated to a preset spatial region through a transmitting antenna. The receiving link may include a low noise amplifier (LNA), a Real Mixer, a Trans-Impedance Amplifier (TIA), a low-pass filter (LPF), a High-Pass Filter (HPF), a real digital-analog converter (Real ADC), etc., that is, an echo signal received by the receiving antenna is processed by the above-mentioned LNA, Real Mixer, TIA, LPF, HPF and Real ADC sequentially, and then converted into a real digital baseband signal. A subsequent digital signal processing module processes the real digital baseband signal and can obtain parameter information of a target such as distance, speed, angle, height and micro-motion characteristics. In the transceiving link, a frequency of a TX-LO signal received by the IQ modulator in the transmitting link may be the same as a frequency of an RX-LO signal received by the Real Mixer in the receiving link. For example, as shown in FIG. 7A, if a signal output by the Baseband is a sine wave of x MHz, both the TX-LO signal and the RX-LO signal may be a sine wave of z GHz.

In an embodiment shown in FIG. 7A, the transmitting link adopts a digital phase shift architecture, and the receiving link may adopt a component with an analog architecture, that is, a component of an IQ is not adopted, so it can effectively be compatible with a sensor of a receiving link of an analog architecture, and effectively reduce the development

cost of a whole transceiving link system.

Optionally, in an embodiment of the present disclosure, the receiving link may include a receiving antenna, that is, the receiving antenna may be connected through a peripheral port of the chip and formed on a carrier such as a PCB board. At the same time, in some alternative embodiments, the receiving antenna may be integrated on the package of the chip to form an AiP or an AoP, that is, a chip structure having a packaged antenna.

In some alternative embodiments, in order to match the transmitting link of the digital phase shifter architecture, relevant adjustments may be made correspondingly for the receiving link. The transceiving link shown in FIG. 7B may include a similar transmitting link architecture and a receiving link based on FIG. 7A (a same part will not be specifically described here to avoid redundant description). That is, the Real Mixer in the receiving link in FIG. 7A is adjusted to an IQ Demodulator, and the Real ADC is adjusted to an IQ ADC at the same time. That is, the receiving link may include a low noise amplifier (LNA), an IQ Demodulator (IQ Demodulator), a Trans-Impedance Amplifier (TIA), a low pass filter (LPF), a high pass filter (HPF), an IQ digital-to-analog converter (IQ ADC), etc. connected in sequence. That is, an echo signal received by the receiving antenna is processed by LNA, IQ Demodulator, TIA, LPF, HPF and IQ ADC in sequence, and then converted into an IQ digital baseband signal. The subsequent digital signal processing module processes the IQ digital baseband signal to obtain parameter information such as distance, velocity, angle, altitude and micro-motion characteristics (i.e. micro-Doppler) of a target.

At the same time, when performing a self-calibration based on the transceiving link shown in FIG. 7B, as long as a signal output port of the transmitting link and a signal input port of the receiving link are directly connected through a transmission line, that is, the transmitting link directly transmits a transmitting signal to the receiving link through the transmission line, so as to achieve a self-calibration operation of the receiving and/or transmitting links without passing through the transmitting antenna and the receiving antenna. At this time, there is a certain frequency offset between a TX-LO signal received by the IQ modulator in the transmitting link and an RX-LO signal received by the IQ Demodulator in the receiving link. For example, as shown in FIG. 7B, if the signal output by the Baseband is a sine wave of x MHz, the TX-LO signal may be a sine wave of z GHz, and the RX-LO signal may be a sine wave of (z GHz - y MHz), that is, the frequency offset at this time is y MHz.

In some alternative embodiments, as shown in FIG. 7B, the transmitting link (such as a Transmitter (TX) shown in the figure) may be calibrated by adding a receiving link (such as a Receiver (RX) shown in the figure), and a compensation operation is performed by a TX IQ imbalance compensation unit in the transmitting link based on calibrated data. At the same time, the transmitting link (such as the Transmitter (TX) shown in the figure) may be calibrated by multiplexing the receiving link (such as the Receiver (RX) shown in the figure) actually used for transmitting and receiving of the signal, and the compensation operation is performed based on the calibrated data through TX IQ imbalance compensation unit in the transmitting link and/or the receiving link. Similar implementations may be carried out in other embodiments, which will not be repeated herein for simplicity of illustration.

In some alternative embodiments, based on the structure shown in FIG. 7B, in order to achieve accurate calibration of the transceiving link, an Built-in Self-Test (BIST) module may be provided on an RX-LO port of the IQ Demodulator of the receiving link shown in FIG. 7B, that is, as shown in FIG. 8, based on the structure of the transceiving link shown in FIG. 7B, an IQ BIST architecture may be provided on the RX-LO port of the IQ Demodulator of the receiving link, so as to achieve an input of an LO signal having a preset frequency offset to the RX-LO port of the IQ Demodulator of the receiving link. For example, an IQ BIST is formed by a phase angle converter and an IQ Modulator (IQ Modulator), and a received signal such as a TX-LO signal is passed through the phase angle converter and the IQ Modulator, and is used to form a frequency offset signal based on a frequency offset signal of another input signal BIST-LO of the IQ Modulator to input to the RX-LO port of the IQ Demodulator. For example, if the signal of TX-LO is a sine wave of z GHz and the signal of BIST-LO is a sine wave of y MHz, then the frequency-offset signal input to the RX-LO port of the IQ Demodulator is (z GHz - y MHz). In different embodiments, each of x, y, and z is a schematic value, and specific numerical values may be the same or different.

In some alternative embodiments, based on the IQ BIST architecture of the transceiving link structure shown in FIG. 8, calibration may be performed for the transmitting link of the digital phase shifter architecture by multiplexing the receiving link of the transceiving link. In other embodiments, when it comes to the calibration operation for the transmitting link using the receiving link and the calibration operation for the receiving link using the transmitting link, the above-described calibration operation may be achieved by multiplexing a corresponding receiving link or the transmitting link in a link that actually transmits and receives signals, or the calibration operation of the corresponding transmitting link or the receiving link in the link that actually transmits and receives signals may be achieved by adding a corresponding calibration receiving link or calibration transmitting link.

Optionally, the IQ BIST may include a phase angle converter and an IQ Modulator. The phase angle converter is used to achieve calibrations for the I-way and the Q-way in the transmitting link of the digital architecture respectively, and the other input signal BIST-LO of the IQ Modulator may be a sine wave of y MHz, which is used to simulate characteristics related to an echo signal formed by reflection of a transmitting signal by a target, where each of x, y, and z in FIG. 8 is a positive number, $x \neq y \neq z$, and each of x, y, and z may be generally between 0 and 1000.

Optionally, in the transceiving link shown in FIG. 8, a TX IQ Imbalance Compensation unit (TX IQ Imbalance Compensation unit) may be provided in the transmitting link (e.g. between the TX DDFS and the IQ DAC) and/or a TX IQ Imbalance Compensation unit may be provided in the receiving link (e.g. after the IQ ADC). A transmitted and/or received signal may be supplemented based on a calibration parameter (or a coefficient) obtained from the above-described self-calibration operation to solve problems such as IQ imbalance.

In some alternative embodiments, based on the structure shown in FIG. 8, as shown in FIG. 9, the above-described IQ BIST module may be disposed between the signal output port of the transmitting link and the signal input port of the receiving link, that is, the transmitting link directly transmits a transmitting signal to the receiving link through the IQ BIST module, so as to achieve the self-calibration operation of the receiving link and/or the transmitting link without passing through the transmitting antenna and the receiving antenna.

Note that, in the transmitting link structure shown in FIG. 7A and FIG. 8 to FIG. 9, only an IQ imbalance compensation unit (such as a TX IQ Imbalance compensation unit) is exemplified, and in practical applications, an LO leakage compensation unit (such as a TX LO leakage compensation unit), an HD3 compensation unit (such as a TX HD3 compensation unit), etc. may be added to the transmitting link based on actual needs. So that a compensation unit (TX compensation) including an LO leakage compensation unit (TX LO leakage compensation unit), an IQ imbalance compensation unit (TX IQ Imbalance compensation unit), and/or an HD3 compensation unit (TX HD3 compensation unit), etc. is formed.

FIG. 10 is a schematic diagram of a transceiving link including an auxiliary circuit and a BIST IQ Mod according to an embodiment of the present disclosure, and FIG. 11 is a schematic diagram of another transceiving link including an auxiliary circuit and a BIST IQ Mod according to an embodiment of the present disclosure.

As shown in FIG. 10, a transceiving link may include a transmitting link, a receiving link, and a calibration link, in conjunction with the structures and related description shown in FIGs. 5B and 9. The transmitting link may include a TX digital baseband signal source (TX Baseband), a direct digital frequency synthesizer (TX DDFS), a compensation unit (Compensation), an IQ digital-to-analog converter (IQ DAC), a low-pass filter (LPF), an IQ Modulator and a power amplifier (PA), etc., which are connected in sequence, and a signal amplified by the power amplifier is radiated to a preset spatial region through a transmitting antenna. The receiving link may include a low noise amplifier (LNA), a Real Mixer (Real Mixer), a Trans-Impedance Amplifier (TIA), a High-Pass Filter (HPF), a Variable Gain Amplifier (VGA), a real digital-analog converter (Real ADC) and an RX Baseband for TX RF Calibration (Calibration), etc. That is, an echo signal received by the receiving antenna is processed by the above-mentioned LNA, Real Mixer, TIA, HPF, VGA and Real ADC sequentially, and then converted into a real digital baseband signal. A subsequent digital signal processing module may process the real digital baseband signal and can obtain parameter information of a target such as distance, speed, angle, height and micro-motion characteristics. For the transmitting link, a compensation unit (TX compensation) provided between the TX DDFS and the IQ DAC may include an LO leakage compensation unit (such as a TX LO leakage compensation), an IQ imbalance compensation unit (TX IQ Imbalance compensation), and/or an HD3 compensation unit (TX HD3 compensation), etc., so as to implement compensation operations corresponding to LO leakage, IQ Imbalance, HD3, etc. in the transmitting link of the digital phase shifter architecture.

In some alternative embodiments, a calibration module may be further provided between the transmitting link and the receiving link, and the calibration module may be configured to multiplex the receiving link to perform operations such as calibration on the transmitting link of the digital phase shifter architecture described above. At the same time, the compensation module (i.e., various compensation units in the foregoing embodiments) can achieve the compensation operation for the transmitting signal at the transmitting link terminal based on parameters or coefficients acquired by the calibration operation of the calibration module. In other embodiments, a corresponding receiving compensation module may be provided in the receiving link simultaneously or separately, that is, at this time, the receiving compensation module may achieve compensation for an echo signal at the receiving link based on the parameters or coefficients acquired by the above-described calibration operation.

As shown in FIG. 10, the above-described calibration module may include a BIST unit and an auxiliary circuit unit (auxiliary circuit), etc., that is, the output port of the transmitting link is connected to any node between the Real Mixer and the Real ADC in the receiving link through the BIST unit and the auxiliary circuit unit. For example, the IQ Modulator in the transmitting link generates a radio frequency signal of (z GHz ± x MHz) based on the digital phase shift baseband signal of x MHz and the LO signal of z GHz, and the radio frequency signal is output to the BIST unit. The BIST unit performs a frequency offset operation of y MHz on the received radio frequency signal to obtain an analog echo signal of (z GHz ± x MHz ± y MHz). After performing a down-conversion on the analog echo signal using the IQ De-Modulator in the auxiliary unit to obtain a preset intermediate frequency signal (z GHz ± x MHz ± y MHz-z GHz = ± x MHz ± y MHz), the intermediate frequency signal is input to a preset node in the receiving link to achieve the calibration operation for the transmitting link.

Optionally, the auxiliary circuit unit may be a quadrature demodulator circuit, and an output terminal of the auxiliary circuit unit may be connected to any one of a node between the TIA and the HPF, a node between the HPF and the VGA, and a node between the VGA and the Real ADC in the receiving link. In addition, in order to multiplex the structure of the receiving link to the greatest extent, after an output port of one-way transmitting link passes through the BIST unit and

the auxiliary circuit unit, the two branches I and Q may be connected to different transmitting links respectively, that is, as shown in FIG. 10, one-way transmitting link is calibrated by multiplexing two-way receiving links. After the calibration for the transmitting link is completed, an LO leakage compensation unit (TX LO leakage compensation), an IQ Imbalance compensation unit (TX IQ Imbalance compensation) and/or an HD3 compensation unit (TX HD3 compensation), etc. in the above-described compensation units (TX compensation) may be utilized to implement compensation operations corresponding to problems such as LO leakage, IQ Imbalance, and HD3 in the transmitting link of the digital phase shifter architecture based on parameters obtained by calibration.

In some alternative embodiments, the above-described BIST unit may include a phase angle converter and an IQ Modulator connected in sequence, and the auxiliary circuit unit may include an LNA, an IQ De-Modulator and a TIA connected in sequence, that is, the phase angle converter receives a radio frequency signal output from the transmitting link, and one input terminal of the IQ Modulator is connected to an output terminal of the phase angle converter, and the other input terminal receives a BIST-LO signal of y MHz to generate a preset echo signal. The LNA amplifies the received echo signal and sends it to one input terminal of the IQ De-Modulator. The other input terminal of the IQ De-Modulator is used to receive an RX-LO signal of z GHz. Two output branches of the IQ De-Modulator (I.e. I branch and Q branch) are connected to the corresponding nodes in their respective corresponding receiving links after TIA, so as to output generated preset intermediate frequency signals to the two receiving links, thereby implementing the calibration operation and more efficiently multiplexing the receiving link design.

It should be noted that, for the calibration operation in the embodiment of the present disclosure, if the transmitting link transmits a frequency sweep signal, in the actual calibration operation, the TX LO signal may be used to perform point-by-point calibration for a single-tone signal; at the same time, the TX LO signal may be used to perform a large bandwidth calibration operation on a frequency sweep signal, or even a frequency sweep bandwidth calibration may be adopted to implement a calibration operation for the frequency sweep signal of the whole frequency band at one time.

Based on the structure shown in FIG. 10, in order to further suppress the HD3, LO Leakage, IQ Imbalance, etc. in the transmitting link of the digital phase shifter architecture to a preset degree, at least two BIST units may be cascaded; as shown in Fig. 11, through two BIST units connected in series, the noise caused by the above defects can be suppressed to -50 dB, thereby effectively reducing the developing and designing difficulty of the related link analog devices.

In some optional embodiments, based on the transmitting link of the digital phase shifter architecture described in the embodiments of the present disclosure, when calibrating and compensating the IQ Imbalance is performed, a compensation coefficient of the IQ Imbalance may be obtained based on spectrum analysis in the Time-Domain, or a compensation coefficient of the IQ Imbalance may be obtained based on a spectrum peak ratio in the Frequency-Domain.

In some alternative embodiments, in order to further improve the accuracy of the IQ Imbalance compensation coefficient, an ideal compensation coefficient may be approximated by a way of iterative calibration and compensation, or the ideal compensation coefficient may be obtained by a way of multi-observation calibration and compensation.

For example, for the way of iterative calibration and compensation, it is possible to determine whether to stop the iterative operation based on a magnitude relationship between compensation coefficients of a previous calibration compensation and a subsequent calibration compensation, or whether a difference value between the compensation coefficients of the two calibration compensations satisfies a preset iteration condition, and the compensation coefficient obtained when the iterative operation is stopped may be used as a final compensation coefficient in subsequent operations in a current scene. For the way of multi-observation calibration and compensation, after multiple (such as three) calibration and compensation operations, an FFT (fast Fourier transform) can be performed on measurement data obtained by each operation and the corresponding amplitude and phase information can be obtained. And the measurements can be differentiated and normalized to obtain relevant data, and an observation matrix can be constructed; subsequently, the corresponding compensation coefficient is solved in reverse based on the data obtained by inverting the observation matrix.

In some alternative embodiments, based on a similar idea of obtaining the IQ Imbalance compensation coefficient described above, the compensation coefficient of LO leakage and/or HD3 may be obtained by the way of iterative calibration and compensation, or by the way of multi-observation calibration and compensation.

The problem of solving harmonic distortion in the transmitter is mentioned in the above examples of transmitters with compensation units. Through research, it is found that some harmonic distortion may come from the mixer in the transmitter and other devices with nonlinear characteristics.

Taking FIG. 12A as an example, FIG. 12A is a schematic diagram of a structure of a mixer according to an embodiment of the present disclosure. As shown in FIG. 12A, the mixer includes a voltage-to-current converter (V/I Converter), a Current Switch, and a current-to-voltage converter (I/V Converter). The voltage-to-current converter converts a received voltage signal into a current signal; the current switch is connected with the voltage-current converter and the second signal generator, and is used for processing the current signal output by the voltage-to-current converter by using a local oscillator signal; the current-to-voltage converter is connected with the current switch and is used for converting the current signal output by the current switch into a voltage signal.

In the above configuration, because the voltage-to-current converter is provided with a transistor amplifier, a

harmonic signal corresponding to the baseband signal is present in the current signal output by the voltage-current converter based on a nonlinear characteristic of the transistor amplifier and a characteristic that the frequency of the baseband signal is low. For example, HD caused by the third-order nonlinearity of the baseband can be simply referred to as HD3. Similarly, a harmonic caused by fifth-order nonlinearity are called HD5. When the current switch processes the current signal output by the voltage-to-current converter, a frequency of a harmonic becomes the radio frequency band after up-conversion processing. Due to a high operation complexity of suppressing harmonic signals in radio frequency band, the hardware cost is high. If the harmonic signal in the radio frequency band is not removed, it will affect the signal quality of radar transmitting and receiving, and further affect the accuracy of radar measurement.

The compensation unit is configured to input the generated cancellation signal to the signal transmitting link to cancel the harmonic signal in the radio frequency signal. The compensation unit and the first signal generator are independent of each other.

For this purpose, the compensation unit may include a cancellation signal generator. The cancellation signal output by the compensation unit can suppress the harmonic signal in the radio frequency signal and reduce the harmonic component in the radio frequency signal, thereby improving the signal quality of the radio frequency signal output by the transmitter.

In an embodiment of the present disclosure, for the harmonic signal in the signal transmitting link, the compensation unit inputs the generated cancellation signal to the signal transmitting link by feedback or according to the characteristics of the transmitted wave, so as to cancel the harmonic signal in the radio frequency signal output by the signal transmitting link. The cancellation signal has characteristics of opposite phase and similar amplitude to the harmonic signal transmitted in the radio frequency transmitting circuit, so as to achieve the purpose of suppressing the harmonic signal.

In some examples, the compensation unit generates a compensation signal including a cancellation effect according to parameters such as a phase, frequency, or amplitude of the baseband signal generated by the first signal generator, or even a path length combined with the LO signal.

For example, FIG. 5A shows an example of a transmitter in which a compensation unit is connected into a signal transmitting link. In the configuration shown in FIG. 5A, the compensation unit is a TX compensation unit. The TX compensation unit includes a cancellation signal generator (not shown) generated according to characteristics of a transmitting wave. The cancellation signal generator may be exemplified as a TX HD3 compensation unit as shown in FIG. 5B.

A baseband processor (referred to as a baseband frame for short in FIG. 5A) controls the quadrature digital baseband signal generated by the TX DDFS, and the TX compensation unit generates a quadrature compensation signal according to a parameter of the quadrature digital signal, combines the quadrature compensation signal and the quadrature digital signal and sends to the IQ DAC for conversion into an analog baseband signal. After an LPF filtering process, a mixer processing is performed by the mixer (i.e., the IQ modulator in FIG. 5A) to obtain a radio frequency signal based on the mixing of the TX LO signal and the analog baseband signal. The PA amplifies the mixed signal and outputs it through the transmitting antenna. The compensation signal cancels at least part of the harmonic signal in the radio frequency transmitting circuit, such as the HD3 harmonic signal. Therefore, clutter in transmitted radio frequency signal is greatly reduced. The radio frequency signal may be an FMCW signal.

In other examples, the compensation unit generates a compensation signal based on harmonic information fed back by the radio frequency transmitting circuit. Referring to FIG. 12B, FIG. 12B is a schematic diagram of a structure of the compensation unit in the transmitter shown in FIG. 5A. As shown in FIG. 12B, the compensation unit includes an acquisition circuit and a cancellation signal generator.

The acquisition circuit is coupled with the radio frequency transmitting circuit and is used for acquiring a signal in the radio frequency transmitting circuit to obtain an acquisition signal. The acquisition signal (or sampling signal) can reflect waveform information (also called a harmonic parameter) in a harmonic signal, such as a phase of a main frequency signal, a phase of the harmonic signal, a frequency of the harmonic signal, a frequency of the main frequency signal, a power of the harmonic signal, a power of the main frequency signal, etc.

It should be noted that a harmonic parameter reflected by the acquisition signal is related to information carried by a signal that can be acquired by the acquisition circuit. For example, if the acquisition circuit is a power acquisition circuit, a corresponding acquisition signal contains the power of the main frequency. For another example, when the acquisition circuit uses at least part of the circuit of the receiver, the acquisition signal reflects the phase of the main frequency signal, the phase of the harmonic signal, the frequency of the harmonic signal, the frequency of the main frequency signal, the power of the harmonic signal, the power of the main frequency signal, and the like.

The at least one harmonic parameter may be extracted by an analog circuit. For example, the power of the main frequency signal is output by a coupler and a power detector. Or using the advantages of digital circuits in radar chips in frequency domain calculation to extract harmonic parameters. For example, by coupling the radio frequency transmitting circuit, a signal identical to the signal transmitted at the coupling is acquired as an acquisition signal. The acquisition signal carries a main frequency signal and a harmonic signal. The acquisition signal is converted into a digital signal by ADC, and

then calculated by the digital circuit in frequency domain to obtain more harmonic parameters.

In one implementation, an input terminal of the acquisition circuit is connected with the output terminal of the mixer or a signal detection terminal. This method can detect the harmonic signal generated by the voltage-to-current converter, and has a simplified acquisition circuit.

In an exemplary embodiment, the signal calibration link, a first input terminal of the signal calibration link is connected between the voltage-current converter and the current switch in the transmitting-end mixer in the signal transmitting main path, a second input terminal is connected between the signal transmitting main path and a transmitting antenna, and a signal output terminal is connected with the compensation circuit in the signal transmitting main path, and the signal output terminal is configured to acquire a signal in the signal transmitting main path from at least one of the first input terminal and the second input terminal, and determine compensation information according to the acquired signal. For example, in a connection mode shown in FIGs. 13A and 13B, the input terminal of the acquisition circuit is connected to the detection terminal between the voltage-to-current converter and the current switch, and is coupled to the ADC.

Referring to FIG. 13C, the signal calibration link includes a calibration demodulator (IQ Demodulator), a multiplexer (MUX), and a calibration module (TX Calbration); the calibration demodulator is configured to acquire a signal in the signal transmitting main path from the second input terminal and perform a demodulation processing; the multiplexer has two signal input terminals and one signal output terminal, where one signal input terminal is connected between the V/I converter and the current switch in the transmitting-end mixer, and the other signal input terminal is connected to a signal output terminal of the calibration demodulator, and is configured to output a signal corresponding to one of the two signal input terminals; the calibration module is configured to determine the compensation information according to a signal output by the multiplexer.

In another mode, the input terminal of the acquisition circuit is connected with a radio frequency output terminal or a radio frequency detection terminal of the radio frequency transmitting circuit. The radio frequency output terminal is, for example, an output terminal of the radio frequency transmitting circuit. The radio frequency detection terminal is, for example, an input terminal or an output terminal of at least one PA stage in the radio frequency transmitting circuit. This mode can collect more accurate harmonic parameters in the radio frequency transmitting circuit, but it has a complicated circuit structure.

In some chips including a BIST module, the acquisition circuitry may acquire the acquisition signal by some or all of the circuitry in the BIST module. For example, as shown in FIG. 13B, the input terminal of the acquisition circuit is coupled to a radio frequency output terminal, which sequentially includes a down-converter, a filter, etc., and is connected to the IQ ADC to output a digital acquisition signal. The down-converters, the filter, etc. may be multiplexed with the BIST module or the receiver.

The collected acquisition signal is input to the cancellation signal generator. The cancellation signal generator is at least one circuit in the compensation unit. The cancellation signal generator is connected with the first signal generator such that a signal received by the radio frequency transmitting circuit includes both a baseband signal and a cancellation signal.

For example, the cancellation signal generator includes the aforementioned cancellation signal generator, and a digital circuit for extracting harmonic information. Wherein, the digital circuitry for extracting harmonic information may be independently configured or at least partially used in common with a digital circuitry in the radar chip.

For example, the digital circuit for extracting harmonic information extracts harmonic information such as harmonic frequency, main frequency, main frequency power, etc. by using the digital circuit used for processing a difference frequency baseband signal in the radar chip, and then supplies it to the cancellation signal generator. The cancellation signal generator generates the cancellation signal according to the received parameters.

For another example, the digital circuit for extracting harmonic information extracts an amplitude of the main frequency in the acquisition signal, and calculates a harmonic amplitude according to a difference between a preset amplitude of the main frequency and an amplitude of the harmonic. The cancellation signal generator generates a harmonic signal compensation signal according to the calculated amplitude of the harmonic and other pre-configured harmonic parameters. Herein, the various pre-configured harmonic parameters can be calculated according to a frequency sweep range, phase, etc. of the main frequency signal to be transmitted by the radar chip.

The cancellation signal generator in the cancellation signal generators may be independently configured or at least partially used in common with the first signal generator. For example, a cancellation signal generated by the cancellation signal generator is input to the first signal generator so that a baseband signal output by the first signal generator includes the cancellation signal. The cancellation signal generator may include a third harmonic generator and a fifth harmonic generator.

In another example, the compensation unit further includes an adder coupled to the cancellation signal generator and the first signal generator to combine the baseband signal generated by the first signal generator and the cancellation signal generated by the cancellation signal generator. In the present embodiment, the cancellation signal includes a cancellation signal Signal_HD3 generated by the third harmonic generator that cancels the third harmonic, and a cancellation signal Signal_HD5 generated by the fifth harmonic generator that cancels the fifth harmonic. The cancellation

signals Signal_HD3 and Signal_HD5 and the baseband signal generated by the first signal generator are combined by the adder and output to the radio frequency transmitting circuit.

In summary, it can be seen that each circuit example of the transmitter that pre-inputs a cancellation signal to the radio frequency transmitting circuit by a feedback method provided by the present disclosure can ensure that the radio frequency signal transmitted by the chip contains a sufficiently low harmonic signal under different environments.

In order to effectively suppress harmonic signals according to the actual operating environment of a chip during a using process of the chip, for example, considering influence of an ambient temperature on semiconductor devices, the present disclosure further provides a signal cancellation method for harmonic signals in the transmitter by using a feedback mechanism, the method includes the following steps. Step 10: an acquisition operation is performed on a signal in a signal transmitting link to obtain an acquisition signal; the signal transmitting link is configured to generate a radio frequency signal for radar detection, where the radio frequency signal includes a harmonic signal. Step 20: the acquisition signal is detected, a cancellation signal for cancelling the harmonic signal is generated and output to the signal transmitting link.

According to the method provided by the embodiment of the present disclosure, an acquisition operation is performed on the signal in the signal transmitting link to obtain the acquisition signal, and the cancellation signal is generated by using the acquisition signal, and the cancellation signal is output to the signal transmitting link, thereby suppressing the harmonic signal in the radio frequency signal by using the cancellation signal, reducing a harmonic component in the radio frequency signal, thereby improving the signal quality of the radio frequency signal output by the transmitter, and further improving receiving performance of the receiver for receiving the radio frequency signal.

Referring to FIGs. 7B to 13C, an example of a transmitter and its working process is shown below:
For example, an example of using a feedback mechanism to extract harmonic information in the transmitter so that a compensation unit generates a corresponding cancellation signal is shown in FIG. 7B. In a configuration shown in FIG. 7B, taking a compensation unit including a TX HD3 compensation unit as an example. The TX HD3 compensation unit generates a compensation signal according to waveform characteristics of a received signal. The feedback mechanism can be executed in a calibration mode of a radar chip to prevent a signal transmitting power of the radar chip during normal detection from being weakened.

A baseband processor in the transmitter (such as a baseband box in FIG. 7B) controls a quadrature digital baseband signal generated by a TX DDFS, which is combined with a quadrature digital cancellation signal generated by a TX compensation unit and sent to an IQ DAC to be converted into an analog baseband signal. The analog baseband signal is mixed with an analog cancellation signal for canceling the harmonic signal in the transmitting link. The analog baseband signal is processed by an LPF filtering and enters a first mixer (i.e., an IQ modulator in FIG. 7B). The first mixer uses TX LO to performs a mixing process on a received filtered signal to obtain a radio frequency signal. The radio frequency signal is coupled through a receiver and output to a TX HD3 calibration circuit in the compensation unit (e.g., a TX HD3 calibration block in FIG. 7B). The TX HD3 calibration circuit may be regarded as a digital circuit for extracting harmonic information.

In the receiver, an LNA amplifies the signal output by the transmitter, and outputs it to a second mixer (i.e., an IQ demodulator in FIG. 7B) to obtain a demodulated signal. The demodulated signal is sent to the Trans-Impedance Amplifier for an amplification processing, and then passes through an LPF and an HPF sequentially, and then passes through an IQ ADC for an analog-to-digital conversion operation, and then sent to the TX HD3 calibration circuit. The TX HD3 calibration circuit extracts harmonic information in the transmitter from a feedback signal, converts it into a parameter needed to generate the cancellation signal by an upper layer controller, and supplies it to the TX HD3 compensation unit. The harmonic information acquired by the TX HD3 calibration circuit includes, for example, one or more of the following parameters: an initial phase, a starting frequency, a cutoff frequency, a frequency change duration, a center frequency, and the like of the harmonic signal (or a main frequency signal). The TX HD3 compensation unit or the upper layer controller determines a parameter used for generating the cancellation signal (such as initial phase, frequency of the cancellation signal, time delay, etc.) in the compensation unit according to the harmonic information.

It should be noted that the cancellation operation involving the third harmonic and/or fifth harmonic in each of the above examples may be determined according to the needs of the transmitter.

FIG. 13A is a schematic diagram of a digital pre-compensation HD3 architecture based on a cubic module according to an embodiment of the present disclosure, and FIG. 13B is a schematic diagram of a digital pre-compensation HD3 architecture based on a frequency multiplier waveform generator module according to an embodiment of the present disclosure.

In some alternative embodiments, based on the transmitting link of the digital phase shifter architecture described in the embodiment of the present disclosure, when a calibration and compensation operation is performed for an HD3, a nonlinear third harmonic is generated from a V/I Converter as a main source based on HD3 in an active mixer, so it can be achieved through the compensation architecture based on the cubic module as shown in FIG. 13A or the compensation architecture based on the frequency-tripled waveform generator as shown in FIG. 13B.

FIG. 13C is a schematic diagram of calibration compensation of a transmitting link based on a digital phase shifter architecture according to an embodiment of the present disclosure. As shown in FIG. 13C, the related technical content of a

calibration compensation operation for IQ Imbalance, LO leakage, and HD3 according to the embodiment of the present disclosure is as follows: a compensation operation for IQ Imbalance may be implemented by compensating a conjugate signal of a BB (baseband) signal to reversely cancel a mirror component, and the compensation operation mode is not affected by the calibration mode of IQ Imbalance. A compensation for LO Leakage may be implemented by adjusting the DC components of I way and Q way (i.e. DC bias). Similarly, the calibration mode of LO Leakage has no impact on its compensation solution. For HD3, because a third-order harmonic distortion of a V/I Converter of a quadrature mixer is a main source of HD3, and the harmonic distortion will be affected by DC bias, when both the LO Leakage and HD3 of the transmitting link need to be calibrated, HD3 calibration needs to be performed after LO Leakage calibration to ensure accurate performance of HD3 calibration.

In addition, the compensation mode of HD3 based on the digital pre-compensation architecture of the digital cubic module and based on the digital pre-compensation architecture of the frequency multiplier waveform generator module directly affects a subsequent calibration solution and subsequent compensation process.

Specifically: in an alternative embodiment, for the digital pre-compensation architecture based on the digital cubic module, after calibrating and compensating the LO Leakage, a root source of a HD3 problem, that is, the compensation coefficient of HD3, can be calibrated under a stable DC bias; then, after calibrating the IQ Imbalance and continuing to compensate the IQ Imbalance, the third harmonic distortion is compensated for the I-way and Q-way according to a result of pre-compensation of the IQ Imbalance.

In an alternative embodiment, for the digital pre-compensation architecture based on the frequency multiplier waveform generator module, after calibrating and compensating the LO Leakage, the compensation coefficient of HD3 can be obtained by calibration, and the IQ Imbalance can be calibrated under a stable DC bias; and then be compensated. after that through a compensated result, actual waveforms of the I-way and Q-way signals and the compensation coefficient of HD3 are calculated respectively, and waveform information of frequency-tripled and frequency-quintupled that need to be pre-compensated is inversely calculated.

In another alternative embodiment, for the digital pre-compensation architecture based on the frequency multiplier waveform generator module, the LO Leakage can be calibrated and compensated at first, then the pre-compensation coefficients of HD3 and IQ Imbalance can be calibrated simultaneously by multiple (e.g. three) observations, and then the pre-compensation coefficients at the HD3 mirror position can be calibrated by re-observation (e.g. twice); finally, through the pre-compensation coefficients at positions of HD3 and HD3 mirror, frequency-tripled and frequency-quintupled coefficients that need to be pre-compensated are inversely calculated. It should be noted that an observation in the embodiment of the present disclosure is used to represent operations such as testing and comparison and analysis of different test results.

Referring to the structure shown in FIG. 13C, it can be seen that the acquisition circuit has two acquisition branches, and the two acquisition branches can be dynamically switched; where an input terminal of one acquisition branch is connected between the voltage-current converter and the current switch; an input terminal of the other acquisition branch is connected with an output terminal of the power amplifier, and the acquisition branch is provided with an IQ demodulator; in addition, in the structure shown in FIG. 13C, the acquisition circuit is further provided with a Multiplexers, and input terminals of the Multiplexers are respectively connected to output terminals of the two acquisition branches, and the output terminals are used for outputting the acquisition signal.

In the configuration shown in FIGs. 13A to 13C, the acquisition signal may be an analog signal, i.e., the output terminal of the acquisition circuit is connected with the IQ ADC; alternatively, the acquisition signal may be a digital signal, and the acquisition circuit includes at least an IQ ADC.

It should be noted that when the radio frequency signal transmitted by the signal transmitting link is not a quadrature signal, the acquisition circuit in FIGs. 13A to 13C may be completed by using a non-quadrature component. For example, a single-ended down-conversion mixer may replace the IQ demodulator, and a single-ended analog-to-digital converter may replace the IQ ADC.

As shown in FIG. 14A, an embodiment of the present disclosure further provides a signal transmitting method applied to an electromagnetic wave device having at least one signal transmitting link, and the signal transmitting method includes: Step 1401: a phase of a radio frequency transmitting signal of each signal transmitting link is determined; step 1402: an initial phase of a transmitting-end digital baseband signal in each signal transmitting link is determined according to the phase of the radio frequency transmitting signal; step 1403: a transmitting-end digital baseband signal is generated according to the determined initial phase; step 1404: the transmitting-end digital baseband signal is converted into a transmitting-end analog baseband signal, and a phase shifting operation is performed on a transmitting-end local oscillator signal based on the transmitting-end analog baseband signal.

In the signal transmitting method according to the embodiment of the present disclosure, a digital baseband signal in a digital domain is generated by using a digital phase shifter architecture, which has a better orthogonality and lower side lobes, and its phase shift phase can be generated very accurately, so that the phase modulation resolution is higher, thus achieving a vehicle radar system with a high-resolution digital phase shift function, reducing the requirement of isolation degree between antennas, and the signal transmitting method has the advantages of small link loss, low cost and

no off-line calibration. And a more flexible wave transmitting solution (such as high-performance Doppler division multiplexing and frequency division multiplexing) can be supported, and frequency response compensation in the digital domain can be supported.

In some exemplary implementations, the transmitting-end digital baseband signal is a single-tone signal, and the transmitting-end local oscillator signal is a frequency sweep signal; or the transmitting-end digital baseband signal is a frequency sweep signal, and the transmitting-end local oscillator signal is a single-tone signal.

In some exemplary implementations, a frequency bandwidth of the frequency sweep signal is above 2 GHz.

In some alternative embodiments, in order to further improve the accuracy of the IQ Imbalance compensation coefficient, an ideal compensation coefficient may be approximated by a way of iterative calibration and compensation, or the compensation coefficient in a actual working state may be obtained by a way of multi-observation calibration and compensation. Determination of the compensation coefficient needs to additionally consider an influence of a link characteristic on a calculation accuracy of the compensation coefficient.

Taking a quadrature imbalance as an example for illustration, a compensation coefficient h in an actual working state is $\frac{V_2(-f_t)\cdot\tilde{\Upsilon}(-f_t)\cdot W_1(\Delta_f-f_t)}{V_1(f_t)\cdot\tilde{\Upsilon}(f_t)\cdot W_1(\Delta_f+f_t)}$; a compensation coefficient H in an ideal condition is $\frac{V_2(-f_t)}{V_1(-f_t)}$. Due to an obvious difference between the two expressions, the compensation coefficient in the actual working state is different from that in the ideal state.

Herein, because $f_t$ is a narrowband signal compared with a carrier frequency, it may be approximately considered that $\tilde{\Upsilon}(f_t) = \tilde{\Upsilon}(-f_t)$;

It is need to ensure that $W_1(\Delta_f - f_t) \approx W_1(\Delta_f + f_t)$, or a ratio of these two coefficients can be estimated by a way of calibration;

A difference $V_1(f)$ between $V_1(f_t)$ and $V_1(-f_t)$ is obtained as follows: $(V_1(f) = \frac{1}{2}\left[\alpha_I E_I(f)\tilde{G}_I(f)e^{j\phi_I} + \alpha_Q E_Q(f)\tilde{G}_Q(f)e^{j\phi_Q}\right])$;

$E_I(f_t)$ ($E_Q(f_t)$) and $E_I(-f_t)$ ($E_Q(-f_t)$) have a same amplitude, but opposite phases.

Because $f_t$ = 5 MHz is a narrowband signal compared with a carrier frequency of 76 GHz-81 GHz, $\tilde{G}_I(f_t)$ ($\tilde{G}_Q(f_t)$) and $\tilde{G}_I(-f_t)$ ($\tilde{G}_Q(-f_t)$) may be approximately considered as equal;

$\alpha_I e^{j\phi I}$ and $\alpha Q e^{j\phi Q}$ are not affected.

If frequency response characteristics of the link are not considered, and an observation is directly used for compensation, a mirror component cannot be cancelled. Therefore, in an actual system, an influence of the frequency response of the link on a calibration operation must be considered.

Similarly, it can be seen that compensation coefficients of harmonic distortion and LO leakage are also different between the actual working state and the ideal state of the signal transmitting link.

FIG. 14B is a schematic diagram illustrating a principle of a method for determining a compensation coefficient according to an embodiment of the present disclosure. Contents in each coordinate system of FIG. 14B will be described one by one below: FIG. 14B (a) shows a phase and an amplitude of a compensation coefficient H of the signal transmitting link in an ideal state; FIG. 14B (b) shows the phase and amplitude of the compensation coefficient H of the signal transmitting link in the ideal state, a phase and an amplitude of the compensation coefficient h in an actual working state, and a difference D between the compensation coefficient h in the actual working state and the compensation coefficient H in the ideal state; FIG. 14B (c) shows that the three vectors in FIG. 14B (b) are not changed with a change in amplitude. Therefore, it is only needed to control the compensation coefficient H in phase to be infinitely approached to the compensation coefficient H, see FIG. 14B (d) for details. FIG. 14B (e) indicates that in region 1 the compensation coefficient h is close to the compensation coefficient H, and in region 2 the compensation coefficient h is not close to the compensation coefficient H; FIG. 14B (f) optimizes regions of FIG. 14B (e), including reducing a size of the region 1, thereby enlarging the region 2, and further dividing the enlarged region 2 to obtain a region 3 and a new region 2, among them, the compensation coefficient h of the region 3 is not close to the compensation coefficient H, and the new region 2 indicates that a compensation coefficient of an opposite value of a phase of the compensation coefficient h is close to the compensation coefficient H; for example, neither of the compensation coefficient h in FIG. 14B (g) nor the compensation coefficient h in FIG. 14B (h) is in the region 1, but the compensation coefficient h in FIG. 14B (h) is closer to the compensation coefficient H than the compensation coefficient h in FIG. 14B (g), which may be clearly seen by lengths of differences D in FIG. 14B (g) and FIG. 14B (h).

Based on the above analysis, an embodiment of the present disclosure proposes a method of an iterative calibration and compensation.

Specifically, it is possible to determine whether to stop the iterative operation based on a magnitude relationship

between compensation coefficients of a previous calibration compensation and a subsequent calibration compensation, or whether a difference value between the compensation coefficients of the two calibration compensations satisfies a preset iteration condition, and to perform a subsequent operation using the compensation coefficient obtained when the iterative operation is stopped as a final compensation coefficient in a current scene.

In some alternative embodiments, based on a similar idea of obtaining the IQ Imbalance compensation coefficient described above, the compensation coefficient of LO leakage and/or HD3 may also be obtained by the way of iterative calibration and compensation, or by the way of multi-observation calibration and compensation.

Specifically, an embodiment of the present disclosure provides a signal calibration link of a signal transmitting main path, where the signal transmitting main path is configured to generate a radio frequency transmitting signal after performing a compensation operation on a generated signal according to a compensation coefficient, so as to achieve target detection and/or communication. The signal calibration link is configured to acquire current observation information of the signal transmitting main path at a current compensation coefficient; and when the current observation information satisfies an iteration condition, taking the current compensation coefficient as a compensation coefficient used by a compensation operation of the signal transmitting link; otherwise, the current compensation coefficient is iterated until the obtained observation information satisfies the iteration condition.

The above-described signal calibration link will be described below with reference to an embodiment.

In some alternative embodiments, a method of signal calibration may include the following steps: step A1: based on an initial compensation coefficient h(0) being 0, a signal state of a signal transmitting link is acquired to obtain an initial observation information O(0). Step A2: a first compensation is performed on the signal transmitting link by using a first compensation coefficient h (1) determined by the initial observation information O (0), the signal state of the signal transmitting link is obtained to obtain a first observation information O (1). Step A3: If a difference value between the initial observation information O (0) and the first observation information O (1) is greater than a preset difference threshold, a k-th compensation coefficient h (k) is determined according to a (k-1)-th compensation coefficient h (k-1) and a (k-1)-th observation information O (k-1). Herein, k is an integer greater than or equal to 2. If a difference value between an absolute value of the initial observation information O (0) and an absolute value of the first observation information O (1) is larger than the preset difference threshold, then a sum between the (k-1)-th compensation coefficient h (k-1) and the (k-1) observation information O (k-1) is iteratively calculated on the basis of updating the first compensation coefficient h (1) to the initial observation information O (0), and the k-th compensation coefficient h (k) is determined. If a difference value between the absolute value of the first observation information O (1) and the absolute value of the initial observation information O (0) is larger than the preset difference threshold, a difference between the (k-1)-th compensation coefficient h (k-1) and the (k-1) observation information O (k-1) is iteratively calculated on the basis of updating the first compensation coefficient h (1) to an opposite number of the initial observation information O (0), and the k-th compensation coefficient h (k) is determined. Step A4: if the difference value between the initial observation information O (0) and the first observation information O (1) is less than a preset difference threshold, the initial observation information O (0) is adjusted according to a preset phase adjustment amount to obtain an adjusted first compensation coefficient h (1), and then a new first observation information O (1) is obtained according to the adjusted first compensation coefficient h (1), and the k-th compensation coefficient h (k) is determined based on a new first observation information O (1); where a difference value between the initial observation information O (0) and the new first observation information O (1) is greater than the difference threshold.

Optionally, if a difference value between the absolute value of the initial observation information O (0) and an absolute value of the new first observation information O (1) is greater than the difference threshold, a sum between the (k-1)-th observation information O (k-1) and an adjusted (k-1)-th observation information O (k-1) obtained after the (k-1)-th observation information O (k-1) is processed by the phase adjustment amount is iteratively calculated, and the k-th compensation coefficient h (k) is determined.

Optionally, if the difference value between an absolute value of the new first observation information O (1) and the absolute value of the initial observation information O (0) is greater than the difference threshold, the first compensation coefficient h (1) is updated to be an opposite number of the adjusted first compensation coefficient h (1), a difference between the (k-1)-th compensation coefficient h (k-1) and the adjusted (k-1)-th observation information O (k-1) obtained by processing the (k-1)-th observation information O (k-1) by the phase adjustment amount is iteratively calculated, and the k-th compensation coefficient h (k) is determined. In each iterative operation process in step A3 and step A4, it is determined whether observation information corresponding to each compensation coefficient is less than a preset iterative threshold; if the observation information is less than the iteration threshold, the iteration operation is stopped, and the compensation coefficient used by the observation information less than the iteration threshold is served as the compensation coefficient.

In other alternative embodiments, taking the compensation operation of quadrature imbalance as an example for illustration, a subscript of IQ distinguishes the symbols mentioned in the above embodiments, specifically: step B1: when $h_{IQ}(0)=0$, $O_{IQ}(0)$ is obtained by estimating. Step B2: when $h_{IQ}(1)=O_{IQ}(0)$, $O_{IQ}(1)$ is obtained. Step B3: magnitudes of $O_{IQ}(0)$ and $O_{IQ}(1)$ is compared to determine a subsequent iteration relationship; if $|O_{IQ}(0)|>|O_{IQ}(1)|+\varepsilon$, herein, $\varepsilon$ represents the threshold, the subsequent iteration expression is as follows: $h_{IQ}(1) = O_{IQ}(0)$; $h_{IQ}(k) = h_{IQ}(k - 1) + O_{IQ}(k - 1)$. Herein, k = 2,

3,.... If $|O_{IQ}(0)|<|O_{IQ}(1)|-\varepsilon$, herein, $\varepsilon$ represents the threshold, the subsequent iteration expression is as follows: $hIQ(1) = -O_{IQ}(0)$; $h_{IQ}(k)=h_{IQ}(k-1) - O_{IQ}(k-1)$. Herein, k = 2, 3,.... Step B4: If a relationship in the step B3 is not satisfied, let $h_{IQ}(1) = O_{IQ}(0)\cdot e^{j\frac{\pi}{3}}$, $O_{IQ}(1)$ is obtained again. If $|O_{IQ}(0)|>|O_{IQ}(1)|+\varepsilon$, herein, $\varepsilon$ represents the threshold, then the subsequent iteration expression is as follows: $h_{IQ}(1) = O_{IQ}(0)\cdot e^{j\frac{\pi}{3}}$; $h_{IQ}(k) = h_{IQ}(k-1)+O_{IQ}(k-1)\cdot e^{j\frac{\pi}{3}}$, herein, k = 2, 3,.... If $|O_{IQ}(0)|<O_{IQ}(1)-\varepsilon$, herein, $\varepsilon$ represents the threshold, then the subsequent iteration expression is as follows: $h_{IQ}(1) = O_{IQ}(0)\cdot e^{-j\frac{\pi}{3}}$; $h_{IQ}(k) = h_{IQ}(k-1)+O_{IQ}(k-1)\cdot e^{-j\frac{\pi}{3}}$, herein, k = 2, 3,.... Step B5: when $O_{IQ}(k)$ is less than a certain threshold (a value of the threshold is less than or equal to-50db), the iteration is stopped, at this time, $\hat{h}_{IQ}=h_{IQ}(k)$.

In other alternative embodiments, taking a compensation operation of the LO leakage as an example for illustration, a subscript of DC distinguishes the symbols mentioned in the aforementioned embodiments, specifically: step C1: when $h_{DC,I}(0) = h_{DC,Q}(0)=0$, $O_{DC}(0)$ is estimated; herein, $h_{DC,I}$ represents an initial compensation coefficient of I-way signal, $h_{DC,Q}$ represents an initial compensation coefficient of Q-way signal. Step C2: when $h_{DC,I}(1) = \mathrm{Re}\{O_{DC}(0)\}$, $h_{DC,Q}(1) = \mathrm{Im}\{O_{DCQ}(0)\}$, $O_{DC}(1)$ is obtained; herein, $\mathrm{Re}\{O_{DC}(0)\}$ represents a real part of $O_{DC}(0)$; $\mathrm{Im}\{O_{DCQ}(0)\}$ represents an imaginary part of $O_{DC}(0)$.Step C3: magnitudes of $O_{IQ}(0)$ and $O_{IQ}(1)$ are compared to determine a subsequent iteration relationship; If $|O_{IQ}(0)|>O_{IQ}(1)|+\varepsilon$, herein, $\varepsilon$ represents the threshold, the subsequent iteration expression is as follows: $h_{DC,I}(1) = \mathrm{Re}\{O_{DC}(0)\}$; $h_{DC,Q}(1) = \mathrm{Im}\{O_{DCQ}(0)\}$; $h_{DC,I}(k) = h_{DC,I}(k-1) + \mathrm{Re}\{O_{DC}(k-1)\}$, herein, k = 2, 3...; $h_{DC,Q}(k) = h_{DC,Q}(k-1) + \mathrm{Im}\{O_{DC}(k-1)\}$, herein, k = 2, 3...; If $|O_{IQ}(0)|<|O_{IQ}(1)|+\varepsilon$, herein, $\varepsilon$ represents the threshold, the subsequent iteration expression is as follows: $h_{DC,I}(1) = -\mathrm{Re}\{O_{DC}(0)\}$; $h_{DC,Q}(1) = -\mathrm{Im}\{O_{DCQ}(0)\}$; $h_{DC,I}(k) = h_{DC,I}(k-1) - \mathrm{Re}\{O_{DC}(k-1)\}$, herein, k = 2, 3....; $h_{DC,Q}(k) = h_{DC,Q}(k-1) - \mathrm{Im}\{O_{DC}(k-1)\}$, herein, k = 2, 3.... Step C4: If a relationship in step C3 is not satisfied, $h_{DC,I}(1) = \mathrm{Re}\{O_{DC}(0)\cdot e^{j\frac{\pi}{3}}\}$, $h_{DC,Q}(1) = \mathrm{Im}\{O_{DC}(0)\cdot e^{j\frac{\pi}{3}}\}$, $O_{DC}(1)$ is obtained again; if $|O_{IQ}(0)|>O_{IQ}(1)| + \varepsilon$, herein, $\varepsilon$ represents the threshold, the subsequent iteration expression is as follows: $h_{DC,I}(1) = \mathrm{Re}\{O_{DC}(0)\cdot e^{j\frac{\pi}{3}}\}$; $h_{DC,Q}(1) = \mathrm{Im}\{O_{DC}(0)\cdot e^{j\frac{\pi}{3}}\}$; $h_{DC,I}(k) = h_{DC,I}(k-1)+\mathrm{Re}\{O_{DC}(k-1)\cdot e^{j\frac{\pi}{3}}\}$, herein, k = 2, 3....; $h_{DC,Q}(k) = h_{DC,Q}(k-1)+\mathrm{Im}\{O_{DC}(k-1)\cdot e^{j\frac{\pi}{3}}\}$, herein, k =2, 3....; If $|O_{IQ}(0)| < |O_{IQ}(1)| + \varepsilon$, herein, ε represents the threshold, the subsequent interation expression is as follows: $h_{DC,I}(1) = \mathrm{Re}\{O_{DC}(0)\cdot e^{-j\frac{\pi}{3}}\}$; $h_{DC,Q}(1) = \mathrm{Im}\{O_{DCQ}(0)\cdot e^{-j\frac{\pi}{3}}\}$; $h_{DC,I}(k) = h_{DC,I}(k-1)+\mathrm{Re}\{O_{DC}(k-1)\cdot e^{-j\frac{\pi}{3}}\}$, herein, k=2, 3....; $h_{DC,Q}(k) = h_{DC,Q}(k-1)+\mathrm{Im}\{O_{DC}(k-1)\cdot e^{-j\frac{\pi}{3}}\}$, herein, k=2, 3.... Step C5: when $O_{DC}(k)$ is less than a certain threshold (where a value of the threshold is less than or equal to -50db), the iteration is stopped, at this time $\hat{h}_{DC} = [h_{DC,I}(k), h_{DC,Q}(k)]$..

In other alternative embodiments, taking a compensation operation of the harmonic distortion as an example for illustration, a subscript og HD3 distinguishes the symbols mentioned in the aforementioned embodiments.

An initial phase of a Baseband (BB) signals is x degree, then an initial phase of a subsequent 3BB signal needs to be 3x degree, and O (n) represents an amplitude and phase value of a frequency point corresponding to the 3BB signal ÷ an amplitude and phase value of a frequency point corresponding to the BB signal.

Specifically, step D1: when $h_{HD3}(0)=0$, $O_{HD3}(0)$ is obtained by estimating. Step D2: when $h_{HD3}(1)= O_{HD3}(0)$, $O_{HD3}(1)$ is obtained. Step D3: magnitudes of $O_{HD3}(0)$ and $O_{HD3}(1)$ are compared to determine a subsequent iteration relationship; If $|O_{HD3}(0)|>|O_{HD3}(1)|+\varepsilon$, herein, $\varepsilon$ represents a threshold, a subsequent interation expression is as follows: $H_{HD3}(1)=O_{HD3}(0)$; $h_{HD3}(k)=h_{HD3}(k-1)+O_{HD3}(k-1)$, herein, $k$=2, 3....; if $|O_{HD3}(0)|<|O_{HD3}(1)|-\varepsilon$, herein, $\varepsilon$ represents the threshold, the subsequent iteration expression is as follows: $h_{HD3}(1)=-O_{HD3}(0)$; $h_{HD3}(k)=h_{HD3}(k-1)-O_{HD3}(k-1)$, herein k =

2, 3...; step D4: if step D3 is not satisfied, let $h_{HD}(1) = O_{HD}(0) \cdot e^{j\frac{\pi}{3}}$, $O_{IQ}(1)$ is obtained again; if $|O_{HD3}(0)|>|O_{HD3}(1)|+\varepsilon$, herein, $\varepsilon$ represents the threshold, then the subsequent iteration expression is as follows: $h_{HD3}(1) = O_{HD3}(0) \cdot e^{j\frac{\pi}{3}}$; $h_{HD3}(k) = h_{HD3}(k-1) + O_{HD3}(k-1) \cdot e^{j\frac{\pi}{3}}$, herein, k=2, 3...; if $|O_{HD3}(0)|<|O_{HD3}(1)|-\varepsilon$, herein, $\varepsilon$ represents the threshold, the subsequent iteration expression is as follows: $h_{HD3}(1) = O_{HD3}(0) \cdot e^{-j\frac{\pi}{3}}$; $h_{HD3}(k) = h_{HD3}(k-1) + O_{HD3}(k-1) \cdot e^{-j\frac{\pi}{3}}$, herein, k= 2, 3.... Step D5: when $O_{HD3}(k)$ is less than a certain threshold (where a value of the threshold is less than or equal to -50db), the iteration is stopped, at this time $\hat{h}_{HD3} = h_{HD3}(k)$.

In addition, based on the above analysis, an embodiment of the present disclosure also proposes a way of multi-observation calibration and compensation.

Specifically, after multiple (such as three times) calibration and compensation operations, an FFT(fast Fourier transform) can be performed on measurement data obtained by each operation and the corresponding amplitude and phase information can be obtained. And the measurements can be differentiated and normalized to obtain relevent data, and an observation matrix can be constructed; subsequently, the corresponding compensation coefficient is solved in reverse based on the data obtained by inverting the observation matrix.

In some alternative embodiments, based on a similar idea of obtaining the IQ Imbalance compensation coefficient described above, the compensation doefficient of LO leakage and/or HD3 may be obtained by the way of iterative calibration and compensation, or by the way of multi-observation calibration and compensation.

Specifically, a signal calibration link of a signal transmitting main path, where the signal transmitting main path is configured to generate a radio frequency transmitting signal after performing a compensation operation on a generated signal according to a compensation coefficient for achieving target detection and/or communication. The signal calibration link is configured to determine an initial observation information O (0), a first observation information O (1), and a second observation information O (2) corresponding to the signal transmitting main path under a condition that the initial compensation coefficient h (0), the first compensation coefficient h (1), and the second compensation coefficient h (2) are numerically different; using the initial observation information O (0), the first observation information O (1), and the second observation information O (2), a third compensation coefficient h (3) is determined as a compensation coefficient used by the compensation operation of the signal transmitting link.

In another optional embodiment, the method for quadrature imbalance compensation may include step E1: a signal state of the signal transmitting link is acquired with an initial compensation coefficient h (0) being 0, and an initial observation information O (0) is obtained. Step E2: a first compensation is performed on signal transmitting link using a first compensation coefficient h (1) determined by the initial observation information O (0), a signal state of the signal transmitting link is obtained, and a first observation information O (1) is obtained; and performing a second compensation on the signal transmitting link using a second compensation coefficient h (2) determined by the initial observation information O (0), a signal state of the signal transmitting link is obtained, and the second observation information O (2) is obtained; where numerical values of the second compensation coefficient h (2) and the first compensation coefficient h (1) are different, and numerical values of the second observation information O (2) and the first observation information O (1) are different. Step E3: a ratio between the first difference value and the initial observation information O (0) is acquired to obtain a first ratio d1; and a ratio between a second difference value and the initial observation information O (0) is acquired to obtain a second ratio d2; among them, the first difference value is a difference value between the initial observation information O (0) and the first observation information O (1), and the second difference value is a difference value between the initial observation information O (0) and the second observation information O (2). Step E4: a first coefficient x1 corresponding to the first compensation coefficient h (1) and a second coefficient x2 corresponding to the second compensation coefficient h (2) are determined according to the first ratio d1 and the second ratio d2 on a condition that a third observation information O (3) is 0; specifically, a 2 * 2 matrix is constructed, where a first row of the 2 * 2 matrix records a numerical values of a real part and a numerical value of an imaginary part of the first ratio, and a second row records a numerical value of a real part and a numerical value of an imaginary part of the second ratio; a product between an inverse matrix of the 2 * 2 matrix and a first matrix of 1 row and 2 columns is calculated to obtain a second matrix of 1 row and 2 columns, a value of a first row in the first matrix is 1 and a value of a second row is 0, and a first row of the second matrix is a value of the first coefficient x1 and the second row is a value of the second coefficient x2. Step E5: a product between the first coefficient x1 and the first compensation coefficient h (1) is calculated to obtain a first multiplication result; and a product between the second coefficient x2 and the second compensation coefficient h (2) is calculated to obtain a second multiplication result; the first multiplication result and the second multiplication result are taken as the third compensation

coefficient h (3).

For example, step 1: when $h_{IQ}(0)$=0, $O_{IQ}(0) = a \cdot e^{j\varphi}$ is estimated; step 2: when$h_{IQ}(1) = b = |O_{IQ}(0)|$, equation $O_{IQ}(1) = (a - b) \cdot e^{j\varphi}$ makes sense; step 3: when $h_{IQ}(2) = c = \left|O_{IQ}(0)\right| \cdot e^{j\frac{\pi}{2}}$, equation $O_{IQ}(2) = (a - c) \cdot e^{j\varphi}$ makes sense; step 4: measurements are differentiated and normalized to obtain:

$$\frac{O_{IQ}(0) - O_{IQ}(1)}{O_{IQ}(0)} = \frac{b}{a} = d_1$$

$$\frac{O_{IQ}(0) - O_{IQ}(2)}{O_{IQ}(0)} = \frac{c}{a} = d_2$$

Step 5: an essence of compensation:

$$0 = (a - b \cdot x_1 - c \cdot x_2) \cdot e^{j\varphi}$$

$$\rightarrow 0 = (\frac{a - b \cdot x_1 - c \cdot x_2}{a}) = (1 - d_1 x_1 - d_2 x_2)$$

$$\rightarrow \underbrace{\begin{pmatrix} 1 \\ 0 \end{pmatrix}}_{I_1} = \underbrace{\begin{pmatrix} \mathrm{Re}\{d_1\} & \mathrm{Re}\{d_2\} \\ \mathrm{Im}\{d_1\} & \mathrm{Im}\{d_2\} \end{pmatrix}}_{A} \underbrace{\begin{pmatrix} x_1 \\ x_2 \end{pmatrix}}_{x}$$

$$\rightarrow x = A^{-1} I_1 \rightarrow \hat{h}_{IQ} = x_1 \cdot \left|O_{IQ}(0)\right| + x_2 \cdot \left|O_{IQ}(0)\right| \cdot e^{j\frac{\pi}{2}}$$

In another optional embodiment, a method for LO leakage may include: step F1: taking the initial compensation coefficients of the I-way signal and the Q-way signal each being 0, a signal state of the signal transmitting link is obtained, and an initial observation information O (0) is obtained. Step F2: taking a first compensation coefficient of the I-way signal as a first value and a first compensation coefficient of the Q-way signal being 0, a first compensation is performed on the signal transmitting link, a signal state of the signal transmitting link is acquired, and the first observation information O (1) is obtained; and taking a second compensation coefficient of the I-way signal being 0 and a second compensation coefficient of the Q-way signal being a second value, a second compensation is performed on the signal transmitting link, a signal state of the signal transmitting link is acquired, and a first observation information O (2) is obtained. Step F3: a ratio between a first difference value and the initial observation information O (0) is acquired to obtain an in-phase ratio CI; and a ratio between a second difference value and the initial observation information O (0) is acquired to obtain an quadrature ratio CQ; the first difference value is a difference value between the initial observation information O (0) and the first observation information O (1), and the second difference value is a difference value between the initial observation information O (0) and the second observation information O (2). Step F4: a third compensation coefficient h (3) of an in-phase signal and a third compensation coefficient h (3) of a quadrature signal is determined according to the in-phase ratio CI and the quadrature ratio CQ on a condition that a third observation information O (3) is 0.

Specifically, a 2 * 2 matrix is constructed. In the 2 * 2 matrix, a first row records numerical values of real parts of an in-phase ratio CI and a quadrature ratio CQ, and a second row records numerical values of imaginary parts of the in-phase ratio CI and the quadrature ratio CQ.

A product between an inverse matrix of the 2 * 2 matrix and a first matrix of 1 row and 2 columns is calculated to obtain a second matrix of 1 row and 2 columns, a value of a first row in the first matrix is a numerical value of a real part of the initial observation information O (0), and a value of a second row is a numerical value of an imaginary part of the initial observation information O (0), where a first row of the second matrix is the value of the in-phase ratio CI, and a second row is the value of the quadrature ratio CQ.

For example, specific steps of a method Multi-observation calibration compensation algorithm for LO leakage are as follows: (an FFT transform needs to be performed on each measurement data, and amplitude and phase information at $\Delta_f$ is obtained): step1: when $h_{DC,I} = h_{DC,Q}$ =0, $O_{DC}(0) = Tx_{LOL}$ □$TF$ is obtained by estimating; herein, $h_{DC,I}$ represents an ideal compensation coefficient of the I-way signal, $h_{DC,Q}$ represents an ideal compensation coefficient of the Q-way signal.

Step 2: when $h_{DC,I} = DC_I$, $h_{DC,Q} = 0$, equation $O_{DC}(1) = [Tx_{LOL} + DC_I \cdot \alpha_I \cos(w_m t + \phi_I)] \cdot TF$ makes sense. Step 3: when $h_{DC,I} = 0$ $h_{DC,Q} = DC_Q$, equation $O_{DC}(2) = [Tx_{LOL} - DC_Q \cdot \alpha_Q \cos(w_m t + \phi_Q)] \cdot TF$ makes sense. Step 4: The measurements are differentiated and normalized to obtain:

$$\frac{O_{DC}(1) - O_{DC}(0)}{DC_I} = TF \cdot \alpha_I \cos(w_m t + \phi_I) = c_I;$$

$$\frac{O_{DC}(2) - O_{DC}(0)}{DC_Q} = -TF \cdot \alpha_Q \cos(w_m t + \phi_Q) = c_Q;$$

Step 5: an essence of compensation:

$$Tx_{LOL} = h_{DC,I} \times \alpha_I \cos(w_m t + \phi_I) - h_{DC,Q} \times \alpha_Q \cos(w_m t + \phi_Q)$$

$$\rightarrow TF \cdot Tx_{LOL} = h_{DC,I} \cdot TF \cdot \alpha_I \cos(w_m t + \phi_I) - h_{DC,Q} \cdot TF \cdot \alpha_Q \cos(w_m t + \phi_Q)$$

$$= h_{DC,I} \cdot c_1 + h_{DC,Q} \cdot c_Q$$

$$\rightarrow \underbrace{\begin{pmatrix} \mathrm{Re}\{O_{DC}(0)\} \\ \mathrm{Im}\{O_{DC}(0)\} \end{pmatrix}}_{O_0} = \underbrace{\begin{pmatrix} \mathrm{Re}\{c_I\} & \mathrm{Re}\{c_Q\} \\ \mathrm{Im}\{c_I\} & \mathrm{Im}\{c_Q\} \end{pmatrix}}_{A} \underbrace{\begin{pmatrix} h_{DC,I} \\ h_{DC,Q} \end{pmatrix}}_{h_{DC}}$$

$$\rightarrow \hat{h}_{DC} = A^{-1} O_0$$

In another alternative embodiment, in a method for HD3 compensation, if an initial phase of a Baseband (BB) signal is x degree, an initial phase of a subsequent 3BB signal needs to be 3x degree, and O (n) represents an amplitude and phase value of a frequency point corresponding to the 3BB signal divided by an amplitude and phase value of a frequency point corresponding to the BB signal. Specifically, step G1: with an initial compensation coefficient h(0) being 0, a signal state of a signal transmitting link is acquired to obtain an initial observation information O(0). Step G2: a first compensation is performed on signal transmitting link using a first compensation coefficient h (1) determined by the initial observation information O (0), a signal state of the signal transmitting link is obtained, and a first observation information O (1) is obtained; and performing a second compensation on the signal transmitting link using a second compensation coefficient h (2) determined by the initial observation information O (0), a signal state of the signal transmitting link is obtained, and a second observation information O (2) is obtained; where numerical values of the second compensation coefficient h (2) and the first compensation coefficient h (1) are different, and numerical values of the second observation information O (2) and the first observation information O (1) are different. Step G3: a ratio between the first difference value and the initial observation information O (0) is acquired to obtain a first ratio d1; and a ratio between a second difference value and the initial observation information O (0) is acquired to obtain a second ratio d2; among them, the first difference value is a difference value between the initial observation information O (0) and the first observation information O (1), and the second difference value is a difference value between the initial observation information O (0) and the second observation information O (2). Step G4: a first coefficient x1 corresponding to the first compensation coefficient h (1) and a second coefficient x2 corresponding to the second compensation coefficient h (2) are determined according to the first ratio d1 and the second ratio d2 on a condition that a third observation information O (3) is 0. specifically, a 2 * 2 matrix is constructed, where a first row of the 2 * 2 matrix records a numerical values of a real part and a numerical value of an imaginary part of the first ratio, and a second row records a numerical value of a real part and a numerical value of an imaginary part of the second ratio; a product between an inverse matrix of the 2 * 2 matrix and a first matrix of 1 row and 2 columns is calculated to obtain a second matrix of 1 row and 2 columns, a value of a first row in the first matrix is 1 and a value of a second row is 0, and a first row of the second matrix is a value of the first coefficient x1 and the second row is a value of the second coefficient x2. Step G5: a product between the first coefficient x1 and the first compensation coefficient h (1) is calculated to obtain a first multiplication result; and a product of the second coefficient x2 and the second compensation coefficient h (2) is calculated to obtain a second multiplication result; the first multiplication result and the second multiplication result are taken as a third compensation coefficient h (3).

For example, step 1: when $h_{HD3}(0) = 0$, $O_{HD3}(0) = a \cdot e^{j\varphi}$ is obtained by estimating;

Step 2: when $h_{HD3}(1) = b = |O_{HD3}(0)$, equation $O_{HD3}(1) = (a - b) \cdot e^{j\varphi}$ makes sense;

Step 3: when $h_{HD3}(2) = c = \left|O_{HD3}(0)\right| \cdot e^{j\frac{\pi}{2}}$, equation $O_{HD3}(2) = (a - c) \cdot e^{j\varphi}$ makes sense;

Step 4: The measurements are differentiated and normalized to obtain:

$$\frac{O_{HD3}(0) - O_{HD3}(1)}{O_{HD3}(0)} = \frac{b}{a} = d_1$$

$$\frac{O_{HD3}(0) - O_{HD3}(2)}{O_{HD3}(0)} = \frac{c}{a} = d_2$$

Step 5: an essence of compensation.

$$0 = (a - b \cdot x_1 - c \cdot x_2) \cdot e^{j\varphi}$$

$$\rightarrow 0 = (\frac{a - b \cdot x_1 - c \cdot x_2}{a}) = (1 - d_1 x_1 - d_2 x_2)$$

$$\rightarrow \underbrace{\begin{pmatrix} 1 \\ 0 \end{pmatrix}}_{I_1} = \underbrace{\begin{pmatrix} \mathrm{Re}\{d_1\} & \mathrm{Re}\{d_2\} \\ \mathrm{Im}\{d_1\} & \mathrm{Im}\{d_2\} \end{pmatrix}}_{A} \underbrace{\begin{pmatrix} x_1 \\ x_2 \end{pmatrix}}_{x}$$

$$\rightarrow x = A^{-1} I_1 \rightarrow \hat{h}_{HD3} = x_1 \cdot \left|O_{HD3}(0)\right| + x_2 \cdot \left|O_{HD3}(0)\right| \cdot e^{j\frac{\pi}{2}}$$

In addition to being applied to an electromagnetic wave sensor to transmit and/or receive signals, an architecture of a transmitting link and/or a receiving link of a digital phase shifter architecture described in an embodiment of the present disclosure may solve the problem of unequal length of antenna feeder lines between different transmitting/receiving links, unequal length of feeder lines of a TXLO (that is, between an LO and a mixer in each transmitting channel), and performs a calibration operation on a receiving link and/or transmitting link of an analog phase shifter architecture by taking the architecture of the transmitting link and/or the receiving link of a digital phase shifter architecture described in an embodiment of the present disclosure as an auxiliary link.

The electromagnetic wave in the present disclosure includes a radio wave and a light wave, the radio wave includes a short wave, a medium wave, a long wave, a microwave, etc., and the microwave includes a centimeter wave (i.e., an electromagnetic wave of 3 GHz to 30 GHz, such as an electromagnetic wave of 3.1 GHz to 10.6 GHz, an electromagnetic wave of 24 GHz frequency band, etc.) and a millimeter wave (i.e., an electromagnetic wave of 30 GHz to 300 GHz, Such as an electromagnetic wave in the 60GHz frequency band, an electromagnetic wave of 77GHz frequency band (such as 77GHz ~ 81GHz, etc.), a light wave may include an ultraviolet ray, visible light, an infrared ray, and a laser, etc. An electromagnetic wave frequency band of the laser is (3.846 ~ 7.895) * 10^5GHz, that is, the laser are included in some frequency bands of ultraviolet ray and visible light.

FIG. 15 is a schematic diagram of a transmitting link having at least two transmitting ways according to an embodiment of the present disclosure, FIG. 16 is a schematic diagram of a structure of a digital LO signal generator according to an embodiment of the present disclosure, and FIG. 17 is a schematic diagram of a structure of a transmitting link including a feeder line unequal length compensation module according to an embodiment of the present disclosure.

As shown in FIG. 15, for a transmitting link using at least two transmitting ways, because each transmitting way (or transmitting channel) is connected with a same Local Oscillator (LO) source, feeder line lengths (TXLO for short) between the Local Oscillator signal and an Mixer in each transmitting channel are different, which leads to a problem of a relative delay between different transmit channels. In addition, adopting an unequal-length transmitting antenna feeder line in an antenna array can achieve better link budget, a simpler antenna design and wiring, lower coupling between antennas, a better target angle resolution performance, a smaller module and lower cost, etc., so an antenna design adopting the

unequal-length transmitting antenna feeder line is more and more widely applied, especially for application scenarios such as close-range measurement and a relatively closed space region (such as an indoor camp or a camp within a cabin), or in various scenarios using a packaged antenna chip (AiP) application, such as an application scenario with wide sweep frequency. However, due to different lengths of transmitting antenna feeder lines between different transmitting channels, it causes a relative time delay problem when a radio frequency signal passes through different transmitting antennas.

For the problem of a relative time delay of a signal caused by different lengths of feeder lines between different transmitting channels or between receiving channels in the transceiving link, an embodiment of the present disclosure provides a compensation solution for the relative delay caused by unequal lengths of feeder lines based on the digital phase shift architecture, so as to effectively improve the quality of a transmitting/receiving signal.

Specifically, as shown in FIG. 15, a transmitting antenna array of a digital phase shifter architecture includes four transmitting channels, and all of the transmitting channels share a waveform controller module (waveform control) and a local oscillator source LO. Any transmitting channel includes a transmitting direct digital frequency synthesizer (TX DDFS), an IQ digital-to-analog converter (DAC), an analog low-pass filter (Analog LPF), an IQ Mixer, a power amplifier (PA), a transmitting antenna, etc., which are connected sequentially, that is, the waveform controller module is respectively connected with the TX DDFS in each transmitting channel, and the local oscillator source LO is respectively connected to one input terminal of the Mixer in each transmitting channel, so as to perform a upper frequency mixing on the phase shift signal output by the LPF in each transmitting channel and form a radio frequency signal to be transmitted through various transmitting antenna. For the problem of unequal length of feeder lines between the local oscillator LO and the Mixer in each transmitting channel and/or the problem of unequal length of feeder lines between the PA in each transmitting channel and its transmitting antenna, a preset compensation may be performed in the transmitting direct digital frequency synthesizer (TX DDFS) to reduce the time delay problem of transmitting signals caused by the unequal length of feeder lines.

For example, for the problem of unequal length of feeder lines between the local oscillator LO and the Mixer in each transmitting channel, taking a shortest feeder line from the local oscillator LO to a Mixer in one of the transmitting channels as a reference, and then a length difference of a length from a Mixer in the other various transmitting channels to the local oscillator LO compared with the above reference is obtained. Because a propagation speed c of the transmitting signal is relatively fixed, a corresponding time delay value can be obtained by dividing the length difference of each of the transmitting channel by the speed c, and after that when signal transmitting is performed, a corresponding compensation can be performed directly in the TX DDFS to obtain the time delay of each transmitting channel compared to the reference. At the same time, for the problem of unequal length of feeder lines between the PA and the transmitting antenna of each transmitting channel, a similar method may also be used to obtain and compensate the time delay caused by the difference of feeder lines between various transmitting channels.

When specific compensation is performed for a transmitting link transmitting an FMCW wave, the above-mentioned time delay may be compensated by using a digital LO generator, based on parameters such as a time delay $\mu$ due to a difference of a feeder line length compared with the reference, a frequency sweep period T, a frequency sweep bandwidth $\beta$, and a frequency sweep starting frequency $f_c$, and adapting a clock signal of a subsequent DAC. As shown in the FIG.16, in DDFS, a compensation is performed by utilizing a Digital LO generator, that is, $\triangle\theta=\mu*\beta/T$ is input to one way, $\theta_0=f_c\mu-\mu^2*\beta/2T$ is input to the other way; herein, $\mu$ is a time delay difference between a feeder line corresponding to each transmitting way compared with a reference feeder line; at the same time, as shown in FIG. 16 to FIG. 17, the digital LO generator serves as an output of the signal compensator LO-I (i.e. cos ($\omega$n + $\psi$)) and serves as an input of an I-way in a DAC, and an output of the digital LO generator LO-Q (i.e. sin ($\omega$n + $\psi$)) serves as an input of a Q-way in the DAC.

It should be noted that FIGs. 16 to 17 illustrate schematic diagrams of a structure of one transmitting channel, while FIG. 15 shows a transmitting antenna array having four transmitting channels, and in a practical application, the transmitting antenna array only needs to include at least two (e.g., two, three or five, etc.) transmitting channels. A compensation operation may be performed in a process of receiving a signal and/or processing a signal. A similar idea may also be used for a structure with one transmitting channel and/or one receiving channel, and compensation can be performed directly in the TX DFFS or during a process of receiving a signal and/or processing a signal.

Refer to FIGs. 18 to 21 for a related technical solution of performing a calibration operation on a receiving link and/or transmitting link of an analog phase shifter architecture and a receiving link and/or transmitting link of an digital phase shifter architecture by taking the architecture of the transmitting link and/or the receiving link of a digital phase shifter architecture described in an embodiment of the present disclosure as an auxiliary link.

FIG. 18 is a schematic diagram of calibrating and compensating a transceiving link using an auxiliary circuit according to an embodiment of the present disclosure, and FIG. 19 is a schematic diagram of calibrating and compensating a receiving link using an auxiliary transmitting circuit according to an embodiment of the present disclosure.

Specifically, a signal transceiving link may generally include an antenna, a radio frequency analog device, a baseband analog device and a baseband digital processor, etc. The radio frequency analog device may include a phase-locked loop (PLL), a power amplifier (PA), a phase shifter (PS), a low noise amplifier (LNA), a mixer local oscillator (LO), and a power detector (PD), etc. The baseband analog device may include a low-pass filter (LPF), a high-pass filter (HPF),

and an analog-to-digital converter (ADC), etc.

Among them, there are various non-ideal conditions in an analog device or a circuit, and they change with change of temperature. For example, frequency responses of a radio frequency analog device and circuit in a transmitting link (TX), a baseband analog device and circuit in a receiving link (RX), a radio frequency analog device and circuit in receiving link (RX), etc. may have an imbalance defect, and a PA output port and a LNA input port may each have a PD accuracy problem. There may also be problems such as local oscillator leakage (LO leakage) in the receiving link (RX). At the same time, when the analog device work at different frequencies, their amplitude-frequency responses are different, which is equivalent to adding an unexpected window function to a received signal, which will adversely affect the subsequent target distance and velocity estimation operations, especially in a multi-target scenario, and even lead to detection of a false target or omission of a real target. In addition, for a case of at least two links, there may be different frequency responses between different receiving links, and additional noise information such as different phases and amplitudes will be introduced into the receiving link, especially the introduced phases will directly affect subsequent estimation of the echo direction of the target, thereby reducing an accuracy of the target angle estimation.

In some embodiments, an error of the analog device and circuit may be measured by an external device, and then a certain compensation operation (such as a Bench calibration or an ATE calibration) can be performed on the analog device and circuit to calibrate the performance of the analog device and circuit of the receiving link.

An embodiment of the present disclosure further provides a solution for calibrating the transmitting link and/or receiving link based on an auxiliary link mode, so as to achieve real-time calibration of the analog device and circuit while achieving accurate calibration, without participation of a peripheral device, and effectively reduce an influence of changes in a parameter index of radio frequency device caused by environmental change.

As shown in FIG. 18, a transceiving link for an electromagnetic wave signal may be calibrated in real time by a way of setting an auxiliary calibration circuit (Auxiliary). The auxiliary calibration circuit (i.e., an auxiliary calibration link) may be integrated into an electromagnetic wave sensor, so as to effectively reduce the influence of changes in parameters index of the radio frequency device caused by environmental changes while achieving real-time and accurate calibration without the participation of peripheral devices.

For example, for a transmitting path, an auxiliary reveiving path (Auxiliary Reveiver, ARX) may be disposed at a position adjacent to the transmitting path in the sensor to achieve real-time calibration operation of the transmitting path; similarly, for the receiving path, an auxiliary transmitting path (Auxiliary Transmitter, ATX) may also be disposed at a position adjacent to the receiving path (i.e., a signal receiving link) in the sensor to achieve real-time calibration operation of the receiving path. In addition, the auxiliary path may be disposed between two paths to be calibrated, so that one auxiliary path can be multiplexed for calibration for at least two different paths. As shown in FIG. 18, a common ARX is disposed between two transmitting paths, and a common ATX is disposed between two receiving paths, which can further avoid problems such as too long wire or line. In an alternative embodiment, for a four-transmitting and four-receiving antenna array shown in FIG. 18, two ARXs and two ATXs may be disposed, that is, each ARX is disposed between two transmitting ways, and each ATX is disposed between two receiving ways, so as to effectively reduce the difficulty of wiring and improve real-time performance of calibration.

As shown in FIG. 18, for the receiving path, because the receiving path may be divided into a radio frequency part (i.e., RF Rx) and a baseband part (i.e., Rx BB), in order to further improve the accuracy of calibration, an auxiliary calibration path may be respectively correspondingly provided for the RF Rx and the Rx BB, for example, a radio frequency auxiliary transmitting unit (which may be referred to as RF ATX for short) can be provided for the RF Rx. A baseband auxiliary transmitting unit (which can be simply referred to as IF ATX) is provided for the Rx BB. In addition, for the ARX path, the ARX can be calibrated by disposing an RF Tone Generator, and then the calibrated ARX can be used to calibrate the transmitting way (TX).

In some alternative embodiments, as shown in FIG. 18, for the RF Rx and Rx BB in the receiving path (Receiver), the Rx BB can be calibrated by the IF ATX, the RF ATX can be calibrated by the calibrated Rx BB, and finally the Rx BB can be calibrated by the calibrated RF ATX, thereby achieving the calibration operation of the entire receiving path.

Based on the structure shown in FIG. 18 and the contents shown in FIG. 19, a calibration solution for a receiving path (such as a Receiver) will be described, that is, the receiving path may include a receiving antenna (or receiving port), an LNA, a Mixer, a TIA, an LPF, an HPF, a Real ADC and a PD connected to an input port of the LNA, etc., which are connected sequentially, and the receiving path may be divided into RF Rx and Rx BB based on the Mixer, that is, along a direction of signal transmitting, the Mixer and a preceding part thereof may be defined as RF Rx, and a remaining part may be defined as Rx BB. As shown in FIG. 19, the RF Rx may include a receive antenna (or receive port), an LNA, a Real Mixer, a PD, etc.

The IF ATX provided corresponding to the Rx BB of the receiving path may include a frequency divider (e.g., Freq Divider 1/N) and a Real DAC (e.g., 1-bit Real DAC) connected in sequence, i.e., an output of a Real DAC is connected to an output of the Real Mixer. As shown in FIG. 19, the IF ATX may include a frequency divider (such as Freq Divider 1/N) and a Bit digital-to-analog converter (such as 1-bit Real DAC) connected in sequence, that is, the IF ATX can stably generate a single-tone signal through the frequency divider and the digital-to-analog converter in a variety of environments, and the

single-tone signal may also be freely configured to a variety of frequencies.

In some alternative embodiments, in order to improve the accuracy of the calibration, the IF ATX may be calibrated before the IF ATX calibrates the Rx BB, such as a calibration for an intermediate frequency (IF) frequency response in the IF ATX, or DC calibration, etc. At the same time, after completing the calibration of the IF ATX, the calibrated IF ATX may be used to calibrate the Rx BB of the receiving path. For example, the calibrated IF ATX can be used to transmit single-tone signals of different frequencies to complete the calibration and compensation operations of the Rx BB. Optionally, a frequency of the single-tone signal transmitted by the IF ATX (e.g., several tens of MHz) may be determined based on a sampling frequency of the Real ADC in the receiving path.

The RF ATX disposed corresponding to the RF Rx of the receiving way may include a TX DDFS, an IQ imbalance compensation unit (TX IQ Comp), an adder, an IQ digital-to-analog converter (IQ DAC), a low-pass filter (LPF), an amplifier (e.g. PA), a multiplier, a local oscillator (LO, not shown) and a squarer (x ^ 2), which are disposed in sequence. An output terminal of the multiplier is connected to an output of the Mixer in the receiving path via the squarer to form a first calibration branch, and the output terminal of the multiplier is also connected to a link between the PD and the transmitting antenna in the receiving path to form a second calibration branch. The IQ imbalance compensation unit may be configured to compensate for an imbalance of the IQ in the RF ATX, the adder may be configured to compensate for the local oscillator leakage (LO Leakage) in the RF ATX, and the squarer may be configured to compensate for a residual sideband effect caused by the imbalance of the IQ in the RF ATX.

In some alternative embodiments, in order to improve the accuracy of calibration, the RF ATX may be calibrated before the RF ATX calibrates the Rx ATX, for example, a calibration operation for problems such as local oscillator leakage, radio frequency response, and IQ imbalance in the RF ATX. At the same time, after the calibration of the RF ATX is completed, the calibrated RF ATX is used to calibrate the RF Rx of the receiving path, for example, the calibrated RF ATX may transmit single-tone signals of different frequencies, and then the baseband signal processing module in the receiving link is used to calibrate and compensate the power detector (PD) at the input terminal of the LNA in the radio frequency port RF Rx of the receiving path, a total gain of the receiving path LNA to the ADC, and the auxiliary calibration of the frequency response.

In some alternative embodiments, when calibrating the receiving path (Receiver) using the IF ATX and the RF ATX, the IF ATX may be calibrated first, the calibrated IF ATX may be used to calibrate the Rx BB in the receiving path, then the calibrated Rx BB may be used to calibrate the RF ATX through the first calibration branch of the RF ATX (that is, through the squarer), and finally the calibration of the RF Rx in the receiving path may be achieved by the second calibration branch of the calibrated RF ATX.

Specifically, as shown in FIG. 19, the Rx BB, the Real DAC, etc. may be calibrated through the 1-bit Real DAC, then the LO leakage and the IQ imbalance in the RF ATX may be calibrated by the calibrated Rx BB, and finally the calibrated RF ATX transmitting signal can be input from the LNA in the receiving path to calibrate the RF LO leakage and the RF frequency response of the RF Rx, etc.

FIG. 20 is a schematic diagram of calibrating and compensating a transmitting link using an auxiliary receiving circuit according to an embodiment of the present disclosure. As shown in FIG. 20, a transmitting path (Transmitter) may include a phase shifting module PS, an amplifier PA, a power detector PD, etc. For example, the transmitting path may adopt a transmitting link of a digital phase shifting architecture (Digital Phase Shifter) described in any embodiment of the present disclosure. Relevant drawings and descriptions can be referred to for details, and will not be repeated here. Because the transmitting path adopts a Digital Phase Shifter architecture, so that while achieving more accurate phase shifting operation, the transmitting way can simultaneously support multi-antenna DDM, FDM (Frequency Division Multiplexing) and other modes. It can also eliminate a calibration operation of a RF Phase Shifter, reduce isolation and coupling in a phase shifting system, and reduce link loss and manufacturing cost. In addition, for possible problems such as TX IQ Mismatch and LO leakage, etc., the transmitting path of the digital phase shifter architecture can also support calibration operations in the digital domain for RF Frequency Response compensation, and IQ imbalance and LO leakage, etc.

For problems such as TX IQ Mismatch, LO leakage, frequency response, etc. in the transmitting path, a relevant calibration and compensation operation may be performed by providing an auxiliary receiving path (such as an Auxiliary Receiver (ARX)). As shown in FIG. 20, the ARX may include a Mixer, a TIA, an LPF, an HPF, an IQ ADC, an adder, and an RF calibration module (RF Calib) connected in sequence, i.e. one input terminal of the Mixer receives an ARX IQ LO signal, and the other input terminal is connected to a node before the PD of the transmitting path, or any node after the phase shifter (module) along a direction of signal transmitting (i.e. arrow shown in the figures). For example, the terminal may be connected to an output terminal of the PA (synchronously implementing a calibration on the PA), an input terminal of the PA, etc. to perform a calibration operation on the transmitting path through the ARX. There is a set frequency difference between a frequency of the LO signal in the transmitting path and a frequency of an ARX IQ LO signal so that there is a cross frequency between the two signals to simulate a real transceiving signal loop.

In an optional embodiment, in order to further improve the calibration accuracy, a corresponding calibration circuit (i.e., a calibration receiving unit) may be provided for the ARX (i.e., an auxiliary receiving unit), for example, an RF single-tone signal generating circuit (RF Tone Generator) shown in FIG. 20. The RF Tone Generator may include a TX DDFS, an adder, a Real DAC, an LPF, an amplifier, a multiplier, and a Band Pass Filter (BPF) connected in sequence. Among them, the adder may be configured to perform a calibration compensation on the TX LO leakage (such as TX LO leakage Waveform), and the multiplier may be configured to compensate for the RF Tone Gen LO leakage, and the BPF may be configured to filter out a DC signal generated by the LO leakage of the RF Tone Generator. That is, the RF Tone Generator may be configured to generate a plurality of stable single-tone (Tone) signals of different frequencies to enable a calibration operation on the ARX.

In some alternative embodiments, as shown in FIG. 20, the ARX may be calibrated using the RF Tone Generator first, and then the calibrated ARX can be used to calibrate the transmitting path (such as a Transmitter) including the PA, such as to calibrate the PD at the PA output terminal, the phase shifter in the transmitter way, the total gain from the DAC to the PA output, and the devices and circuits of frequency response.

Specifically, as shown in FIG. 20, the RF Tone Generator may first generate a plurality of stable single-tone signals with different frequencies to assist in calibrating the ARX, and then problems such as IQ imbalance, local oscillator leakage, and frequency response inconsistency of the transmitting path TX may be calibrated based on the calibrated ARX.

FIG. 21 is a schematic diagram of a structure of an auxiliary circuit according to an embodiment of the present disclosure; FIG. 22 is a schematic diagram of a structure of another auxiliary circuit according to an embodiment of the present disclosure; FIG. 23 is a schematic diagram of a circuit module of an IQ Mixer according to an embodiment of the present disclosure; FIG. 24 is a schematic diagram of a structure of an IQ Mixer according to an embodiment of the present disclosure; FIG. 25 is a schematic diagram of a structure corresponding to the structure shown in FIG. 24.

In some alternative embodiments, based on the structure shown in FIGs. 18 to 19 and related description, the ATX may be implemented by a squarer in combination with a multi-bit DAC. As shown in FIG. 21, a receiving path includes an LNA, a mixer, a TIA, an HPF, an ADC, a BB processing module (BB Processor) and a local oscillator source LO connected in sequence. The mixer performs a down-conversion processing on an echo signal provided by the LNA using a first LO signal provided by the local oscillator to obtain an intermediate frequency signal (that is, an analog baseband signal). The ATX may include a first DAC (i.e. DAC1), a mixer and a squarer (x ^ 2) connected in sequence, where the first DAC provides an analog signal to a receiving terminal of the mixer in the ATX, and the other receiving terminal of the mixer may be connected to the local oscillator in the receiving path, so that a mixing processing is performed on the analog echo signal output by the first DAC by using a second LO signal provided by the local oscillator, and then an analog intermediate frequency signal is output to an input terminal of the squarer, and the squarer connects the processed analog intermediate frequency signal to an input terminal of the TIA to calibrate circuits and components of the TIA, HPF, ADC, etc. in the receiving path. In other alternative embodiments, the ATX may output the analog echo signal through the DAC directly to the receive terminal of the squarer, and the squarer sends the processed analog echo signal to an input terminal of the LNA to achieve the calibration of circuits and components such as the LNA, the mixer, the TIA, the HPF, the ADC, etc. in the receiving path.

In some alternative embodiments, as shown in FIG. 22, based on the structure shown in FIG. 21, a second DAC may be provided for a VGA included in the receiving path, and an ADC including an SDM unit and a Decimation filter unit (Decimation filter). And an output terminal of the second DAC may be connected to any node between the mixer and the TIA, between the TIA and the HPF, between the HPF and the VGA, and between the VGA and the ADC in the receiving path to calibrate corresponding circuits and components. Alternatively, the first DAC may be a multi-bit (e.g., 10-bit) DAC, and the second DAC may be a 1-bit DAC.

Those skilled in the art can make other reasonable changes to the ATX formed by the DAC and the squarer based on the above-described contents, and the specific implementation mode is not limited by the present disclosure as long as the ATX can achieve the same or similar functions as the ATX in an embodiment of the present disclosure.

In some alternative embodiments, when an ATX is provided in vicinity of the receiving paths, the ATX may be provided, for example, by utilizing a gap between receiving paths, and at the same time, two or more receiving paths may share one ATX; similarly, when an ARX is provided in vicinity of transmitting paths, the ARX may be provided by using a gap between the emission paths, and two or more transmitting paths may share one ARX. Alternatively, the ATX and/or ARX described above may work intermittently. For example, ATX may transmit a single-tone signal for calibration in a working gap of a receiving path (such as between frames or chirps) to effectively calibrate and compensate the receiver in real time. Similarly, the ARX may be effectively calibrated by using a single-tone signal for calibration generated by the Tone generator in a working gap of receiver (such as between frames or chirps). And then a transmitter is then effectively calibrated through the calibrated ARX to ensure that the calibration and compensation operations may be carried out in a preset manner.

According to the solution of achieving the calibration of the transmitting path and/or the receiving path based on the auxiliary link mode shown in FIGS. 18 to 22, based on the auxiliary link mode, an auxiliary circuit is added to an integrated circuit such as a chip (such as a chip or die) to assist in calibrating a main path circuit, so as to effectively improve the performance of an analog circuit and a module. At the same time, at least part of the radio frequency circuits and

devices can be calibrated in real time on-line (such as on the fly), thereby effectively improving the calibration performance, thereby effectively improving the radio frequency performance while reducing the difficulty of radio frequency implementation.

Because a frequency mixer is a very important and critical device for frequency conversion in a transceiving link, which is widely used in radio devices such as communication and a radar, for example, a single sideband mixer having a good suppression effect for an image signal, and an IQ mixer in the transceiving link in the embodiment of the present disclosure. Among them, the IQ mixer (such as a single sideband mixer) includes two branches, I branch and Q branch with a phase difference of 90 °, to transmit signals.

For an application scenario with a relatively compact layout area, such as in a high-frequency sensor application such as in a millimeter wave frequency band, physical distances between an I branch and an Q branch, and between an input branch and an output branch before mixing, etc. are short, as a result, electromagnetic wave signals can be coupled by means such as magnetic coupling, substrate coupling, electrical coupling, etc., and there may be a problem of signal leakage between branches, input and output ports, an IQ matching network and mixer output, etc., which leads to serious deterioration of image rejection ratio and local oscillator leakage of the mixer.

In an alternatively embodiment, the output network based on a mixer can ensure the power synthesis of two-way of I and Q and satisfy the requirements of impedance matching. The present disclosure provides a new mixer structure, that is, by improving the mixer output passive network, isolation between the I and Q branches is effectively improved, and the leakage of the local oscillator signal is effectively reduced.

FIG. 23 is a schematic diagram of a circuit module of an IQ Mixer according to an embodiment of the present disclosure. As shown in FIG. 23, an IQ mixer may include an I-branch mixing unit, a Q-branch mixing unit and a transformer unit, wherein the I-branch mixing unit may be configured to output an I-branch signal, the Q-branch mixing unit may be configured to output a Q-branch signal, and the transformer unit may be configured to magnetically couple the I-branch signal and the Q-branch signal to synthesize an IQ-mixed output signal, and transmit the IQ mixed output signal to a next stage circuit (Next Block). The transformer unit may be disposed between the I-branch mixing unit and the Q-branch mixing unit to increase a physical distance between the I-branch mixing unit and the Q-branch mixing unit with a relatively short-circuited IQ mixer, thereby effectively reducing coupling between the I-branch mixing unit and the Q-branch mixing unit, achieving a purpose of improving the rejection ratio of the IQ mixer while facilitating layout design of the layout.

The short-circuited IQ mixer implements signal synthesis by short-circuiting the outputs of two branches of the mixer IQ respectively and then matching them to the next stage circuit through a Matching Network, that is, the signals are synthesized by electrical coupling. As shown in FIG. 23, in an IQ mixer of an alternative embodiment of the present disclosure, a branch inductor may be connected in series between the output terminals of the I branch mixing unit and the output terminals of the Q branch mixing unit respectively, and then a magnetic coupling inductor is provided between the two branch inductors, thereby forming a three-turn transformer structure. That is, the output of the I branch mixing unit and the output of the Q branch mixing unit are magnetically coupled, thereby the above-mentioned IQ mixing output signal is obtained; common modes of the I branch mixing unit and the Q branch mixing unit are not directly connected, so they can be adjusted separately, so that application scenarios of the device are more flexible; then, two terminals of the above-described magnetic coupling inductor are directly transmitted to the Next Block as output terminals. That is, the three-turn transformer structure has four input terminals and two output terminals.

Based on the three-turn transformer structure shown in FIG. 23, after an LO signal and a signal to be mixed (such as echo signal) enter the respective P and N terminals of the I and Q branches of the three-turn transformer, current directions and magnetic field directions formed on the three-turn transformer are shown in FIG. 24. At this time, the lsb magnetic fields are superimposed and usb magnetic fields are cancelled, and then a high-quality single sideband signal can be output. That is, based on the three-turn transformer structure, a down-mixing operation or an up-mixing operation of the signals to be mixed can be achieved.

In some alternative embodiments, even in a scenario where there is a phase difference between an LO signal and a signal to be mixed, because the cancellation modes of the signals on the three-turn transformer are consistent, an output of the three-turn transformer is still a single sideband signal when there is no imbalance between the LO signal and the signal to be mixed itself.

In the magnetically coupled IQ mixer provided in the embodiment of the present disclosure, the magnetically coupled IQ mixer performs power synthesis by magnetically coupling as compared with the short-circuit IQ mixer that performs power synthesis by electrically coupling mode. At the same time, for the two branches of the I and Q, the magnetically coupled IQ mixer may be completely consistent and axisymmetric, and no additional phase error will be introduced due to the inconsistent line length of the two branches I and Q, which can make related circuits (such as high-frequency circuits such as millimeter wave) more robust in the subsequent manufacturing process and have higher resistance to process instability. For example, in the magnetically coupled IQ mixer in the embodiment of the present disclosure, as shown in FIG. 25, a transformer tap may be disposed on a midline between the P and N ports, so that the structure of the mixer may be axisymmetric based on the midline, so that lengths of common mode paths of the P port and the N port are equal, that is, a symmetry of PN in the magnetically coupled IQ mixer is better than that in the short-circuit IQ

mixer, and the leakage of the local oscillator signal is smaller.

In some alternative embodiments, the magnetically coupled IQ mixer provided by an embodiment of the present disclosure may be applied to various circuits such as a transmitting channel and on-chip self-test, and may be served as an up-conversion mixer in each electromagnetic wave circuit. For example, the IQ mixer in each transmitting channel (or transmitting link) and the BIST in an embodiment of the present disclosure may adopt the magnetically coupled IQ mixer in the embodiment of the present disclosure.

FIG. 26 is a schematic diagram of a physical structure of another IQ Mixer according to an embodiment of the present disclosure. As shown in FIG. 26, the embodiment of the present disclosure further provides a structure of another magnetically coupled IQ mixer, that is, tap feed lines of I and Q branches are partially overlapped. For example, for the I branch, a tap of the I branch may be bypassed from one side of the Q branch (such as through a via) and extended to one side of the I branch, and then connected to a common mode bias voltage. Similarly, a tap of the Q branch may be bypassed from one side of the I branch (for example, through the via) and extended to one side of the Q branch, and then connected to the common mode bias voltage. The above-described line mode can make the path of the common mode path more definite and less susceptible to interference from other circuits. Meanwhile, the three-turn transformer in the IQ Mixer in the embodiment of the present disclosure may be in a shape of square, octagonal, regular octagonal, ect., that is, as long as it can be axisymmetrically distributed along a center between N and P in a top view or a bottom view.

As shown in FIG. 27, an embodiment of the present disclosure further provides a signal transmitting method applied to an electromagnetic wave device having at least one signal transmitting link, and the signal transmitting method includes: step 2701: a phase of a radio frequency transmitting signal of each signal transmitting link is determined; step 2702: an initial phase of a baseband signal in each signal transmitting link is determined according to the phase of the radio frequency transmitting signal; step 2703: an initial baseband signal is generated according to the determined initial phase; step 2704, the initial baseband signal is compensated by using compensation information acquired in advance to obtain the baseband signal; step 2705: a phase shifting operation is performed on a transmitting-end local oscillator signal based on the baseband signal to obtain the radio frequency transmitting signal.

In the signal transmitting method according to the embodiment of the present disclosure, a digital baseband signal in a digital domain is generated by using a digital phase shifter architecture, which has a better orthogonality and lower side lobes, and its shifted phase can be generated very accurately, so that the phase modulation resolution is higher, thus achieving a vehicle radar system with a high-resolution digital phase shift function, reducing the requirement of isolation degree between antennas, and the signal transmitting method has the advantages of small link loss, low cost and no off-line calibration. And a more flexible wave transmitting solution (such as high-performance Doppler division multiplexing and frequency division multiplexing) can be supported, and frequency response compensation in the digital domain can be supported.

As shown in FIG. 28, an embodiment of the present disclosure further provides a signal transmitting method, which is applied to an electromagnetic wave device having at least one signal transmitting link, and the signal transmitting method includes: step 2801, observation information of a signal transmitting main path is obtained under a current compensation coefficient, wherein the signal transmitting main path is used to perform a compensation operation on a generated signal according to a compensation coefficient and then a radio frequency transmitting signal is generated for achieving target detection and/or communication. Step 2802: when the current observation information satisfies an iteration condition, the current compensation coefficient is taken as a compensation coefficient used by a compensation operation of the signal transmitting link; otherwise, the current compensation coefficient is iterated until the obtained observation information satisfies the iteration condition. Step 2803, a baseband signal is compensated by using the compensation coefficient. Step 2804: a phase shifting operation is performed on a transmitting-end local oscillator signal based on the compensated baseband signal to obtain a radio frequency transmitting signal.

In the signal transmitting method according to the embodiment of the present disclosure, the signal calibration link, the transmitting link and the method thereof, the transceiving link, the integrated circuit according to the embodiment of the present disclosure, the compensation information generated by the signal calibration link can compensate the generated signal, solve the problems of quadrature imbalance, LO leakage, and harmonic distortion, and thus effectively improve the signal quality in the signal transmitting main path. The compensation coefficient required by the signal transmitting main path is determined by iteration, the accuracy of the functional compensation coefficient can be effectively improved.

As shown in FIG. 29, an embodiment of the present disclosure further provides a signal transmitting method applied to an electromagnetic wave device having at least one signal transmitting link, and the signal transmitting method includes: step 2901, initial observation information O (0), first observation information O (1), and second observation information O (2) corresponding to a signal transmitting main path are determined under a condition of an initial compensation coefficient h (0), a first compensation coefficient h (1), and a second compensation coefficient h (2) having different numerical values, wherein the signal transmitting main path is used to perform a compensation operation on a generated signal according to a compensation coefficient and generate a radio frequency transmitting signal for achieving target detection and/or communication. Step 2902, a third compensation coefficient h (3) is determined by using the initial

observation information O (0), the first observation information O (1), and the second observation information O (2). Step 2903, a baseband signal is compensated by using the compensation coefficient. Step 2904: a phase shifting operation is performed on a transmitting-end local oscillator signal based on the compensated baseband signal to obtain a radio frequency transmitting signal.

In the signal transmitting method according to the embodiment of the present disclosure, the signal calibration link, the transmitting link and the method thereof, the transceiving link, the integrated circuit according to the embodiment of the present disclosure, the compensation information generated by the signal calibration link can compensate the generated signal, solve the problems of quadrature imbalance, LO leakage, and harmonic distortion, and thus effectively improve the signal quality in the signal transmitting main path. The observation information is obtained through multiple calibration operations, so as to determine the compensation coefficient required by the signal transmitting main path, the accuracy of the functional compensation coefficient can be effectively improved.

In some exemplary implementations, the transmitting-end digital baseband signal is a single-tone signal, and the transmitting-end local oscillator signal is a frequency sweep signal; or the transmitting-end digital baseband signal is a frequency sweep signal, and the transmitting-end local oscillator signal is a single-tone signal. In some exemplary implementations, the frequency bandwidth of the frequency sweep signal is above 2 GHz.

An embodiment of the present disclosure further provides an integrated circuit, which may include a radio frequency module, an analog signal processing module, and a digital signal processing module connected in sequence; the radio frequency module is configured to generate a radio frequency transmitting signal and a radio frequency receiving signal; the analog signal processing module is configured to perform a down-conversation processing on the radio frequency receiving signal to obtain an intermediate frequency signal; the digital signal processing module is configured to perform an analog-to-digital conversion on the intermediate frequency signal to obtain a digital signal; and the radio frequency module includes the signal transmitting link of any of the above, the signal transceiving link of any of the above, the signal calibration link of any of the above, the signal compensation link of any of the above, the signal calibration system of any of the above, and/or the IQ mixer of the above; and/or the digital signal processing module. Compensation is performed in a digital domain based on the feeder unequal length compensation method described above; wherein the radio frequency receiving signal is an echo signal formed by the radio frequency transmitting signal being transmitted and/or scattered by the target. Alternatively, the integrated circuit may further include a data processing module for processing a digital signal to achieve target detection and/or wireless communication, for example, the integrated circuit may be a millimeter wave radar chip (such as a chip or die).

In some alternative embodiments, the integrated circuit may be an AiP (Antenna-In-Package) chip structure, an AoP (Antenna-On-Package) chip structure, an AoC (Antenna-On-Chip) chip structure, or a RoP (Radiator on Package), that is, by disposing a radiation structure (such as a Radiator) on the Package and forming a waveguide structure with balls around the Radiator, the RF signal is transitioned into the waveguide structure through the radiation structure, and then converted from the waveguide structure to an external antenna structure.

According to other embodiments of the present disclosure, an electromagnetic wave sensor is further provided. The electromagnetic wave sensor may include an antenna, as well as the integrated circuit as previously described. The integrated circuit is electrically connected with the antenna and is used for transmitting and receiving an electromagnetic wave signal. For example, the electromagnetic wave sensor may include: a carrier; an integrated circuit and an antenna as described in any of the above embodiments, and the integrated circuit may be provided on the carrier; the antenna may be provided on the carrier, or the antenna is integrated with the integrated circuit as an integral device provided on the carrier (i.e., at this situation, the antenna may be an antenna disposed in the AiP, AoP or AoC structure); wherein, the integrated circuit is connected with the antenna (i.e., at this situation, the sensor chip or the integrated circuit is not integrated with the antenna, such as the conventional SoC, etc.), and is used for transceiving an electromagnetic wave signal. The carrier may be a printed circuit board (PCB), and the first transmission line may be a PCB line.

An embodiment of the present disclosure provides a device, which may include: a device body; and an electromagnetic wave sensor as described above provided on the device body; the electromagnetic wave sensor is used for target detection and/or communication to provide reference information to operation of the device body.

An embodiment of the present disclosure further provides an electronic device, which may be embodied in a form of a general-purpose computing device. The components of the electronic device may include, but are not limited to, at least one processing unit, at least one storage unit, a bus connecting different system components (including the memory unit and the processing unit), a display unit, etc. The memory unit stores program code, and the program code may be executed by the processing unit so that the processing unit executes the method according to various exemplary embodiments of the present disclosure described in the present specification. The storage unit may include a readable medium in a form of a volatile memory unit, such as a random access memory unit (RAM) and/or a cache memory unit, and may further include a read-only memory unit (ROM).

The memory unit may further include a program/utility having a set (at least one) of program modules, and the program modules include, but not limited to, an operating system, one or more application programs, other program modules, and program data, which may include implementations of a network environment in each or some combination of

these examples.

The bus may represent one or more of several types of bus structures, including a memory unit bus, a memory unit controller, a peripheral bus, a graphics acceleration port, a processing unit, or a local bus using any of a variety of bus structures.

The electronic device may communicate with one or more external devices (e.g., keyboards, pointing devices, bluetooth devices, etc.), and may communicate with one or more devices that enable a user to interact with the electronic device, and/or with any device (e.g., a router, modem, etc.) that enables the electronic device to communicate with one or more other computing devices. Such communication may occur through an input/output (I/O) interface. Moreover, the electronic device may communicate with one or more networks, such as a local area network (LAN), a wide area network (WAN), and/or a public network (such as the Internet) through a network adapter. The network adapter may communicate with other modules of the electronic device through a bus. It should be understood that, although not shown in the drawings, other hardware and/or software modules (which includes, but not limited to, microcodes, device drivers, redundant processing units, external disk drive arrays, RAID systems, tape drives, and data backup storage systems, etc.) may be used in conjunction with the electronic device.

For example, the electronic device in the embodiment of the present disclosure may further include: a device body; and an electromagnetic wave sensor as described in any of the above embodiments disposed on the device body; the electromagnetic wave sensor may be used to achieve functions such as target detection and/or wireless communication.

Specifically, on the basis of the above embodiments, in an optional embodiment of the present disclosure, the electromagnetic wave sensor may be disposed outside the device body or inside the device body, while in other alternative embodiments of the present disclosure, the electromagnetic wave sensor may be partially disposed inside the device body and partially disposed outside the device body. The embodiments of the present disclosure are not limited thereto, it depends actual situation.

In an optional embodiment, the above device body may be components and products applied to fields such as smart cities, smart houses, transportation, smart homes, consumer electronics, security monitoring, industrial automation, in-cabin detection (such as smart cockpits), medical devices and health care. For example, the device body can be smart transportation device (such as automobiles, bicycles, motorcycles, ships, subways, trains, etc.), security device (such as cameras), liquid level/flow rate detection device, smart wearable device (such as bracelets, glasses, etc.), smart home device (such as sweeping robots, door locks, televisions, air conditioners, smart lights, etc.), various communication devices (such as mobile phones, tablet computers, etc.), as well as road gates, smart traffic lights, smart signs, traffic cameras and various industrial mechanical arms (or robots), etc. The device body can be various instruments for detecting vital signs parameters and various devices equipped with the instruments, such as vital signs characteristics detection in automobile cabins, indoor personnel monitoring, intelligent medical devices, consumer electronic devices, etc.

An embodiment of the present disclosure further provides a non-transitory computer-readable storage medium having computer-readable instructions stored thereon, and when the instructions are executed by a processor, the processor performs the feeder unequal length compensation method as described above.

From the above description of the embodiments, it will be readily understood by those skilled in the art that the example implementation modes described herein may be implemented by software, or may be implemented by software in combination with needed hardware. The technical solution according to the embodiment of the present disclosure may be embodied in a form of a software product, and the software product may be stored in a non-volatile storage medium (which may be a CD-ROM, a U disk, a mobile hard disk, etc.) or on a network. Several instructions are included in the storage medium to cause a computing device (which may be a personal computer, a server, or a network device, etc.) to perform the above-described method according to embodiments of the present disclosure.

The software product may employ any combination of one or more readable media. The readable medium may be a readable signal medium or a readable storage medium. The readable storage medium may be, for example, but is not limited to, an electrical, magnetic, optical, electromagnetic, infrared, or semiconductor system, apparatus, or device, or a combination of any of the above. More specific examples (a non-exhaustive list) of readable storage media include an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing.

The computer-readable storage medium may include a data signal propagated in a baseband or as part of a carrier wave with readable program code carried therein. Such propagated data signals may take a variety of forms, including, but not limited to, electromagnetic signals, optical signals, or any suitable combination of the foregoing. The readable storage medium may also be any readable medium other than a readable storage medium. The readable medium may transmit, propagate, or transmit a program used by or in connection with an instruction execution system, apparatus, or device. The program code contained on the readable storage medium may be transmitted using any suitable medium, including, but not limited to, wireless, wired, fiber optic cable, RF, etc., or any suitable combination of the

foregoing.

Program code for performing the operations of the present disclosure may be written in any combination of one or more programming languages, including object-oriented programming languages, such as Java, C + +, and the like, as well as conventional procedural programming languages, such as the "C" language or similar programming languages. The program code may be executed entirely on the user computing device, partially on the user device, as a stand-alone software package, partially on the user computing device and partially on a remote computing device, or entirely on a remote computing device or server. Where a remote computing device is involved, the remote computing device may be connected to the user computing device through any kind of network, including a local area network (LAN) or a wide area network (WAN), or may be connected to an external computing device (e.g., using an Internet service provider to connect through the Internet).

The computer-readable medium carries one or more programs, and when the one or more programs are executed by one of the devices, the computer-readable medium implements the aforementioned functions.

Those skilled in the art can understand that the above-described modules may be distributed in the apparatus according to the description of the embodiments, or may be changed accordingly in one or more devices uniquely different from the present embodiment. The modules of the above-described embodiments may be merged into one module, or may be further split into a plurality of sub-modules.

According to an embodiment of the present disclosure, a computer program is proposed, the computer program includes a computer program or an instruction that, when executed by a processor, can perform the above-described method. In an optional embodiment, the above integrated circuit may be a millimeter wave radar chip. The types of digital function modules in the integrated circuit can be determined according to the actual requirements. For example, in the millimeter wave radar chip, the data processing module can be used for operations such as range-dimensional Doppler transform, velocity-dimensional Doppler transform, constant false alarm detection, direction of wave arrival detection, point cloud processing, etc., for obtaining information such as range, horizontal angle, pitch angle, velocity, altitude, micro-Doppler motion characteristics, shape, size, surface roughness and dielectric characteristics of the target.

It should be noted that, the radio device may achieve functions such as target detection and/or communication by transmitting and receiving radio signals to provide detection target information and/or communication information to the device body, thereby assisting or even controlling the operation of the device body.

For example, when the above-mentioned device body is applied to advanced driving assistance system (ADAS), the radio device (such as millimeter wave radar) as on-board sensor can assist ADAS system to achieve application scenarios such as adaptive cruise, autonomous emergency braking (AEB), blind spot detection (BSD), lane change assist (LCA), rear cross traffic alert (RCTA), parking assistance, rear vehicle warning, collision avoidance, pedestrian detection, etc.

The various technical features of the above-mentioned embodiments may be arbitrarily combined, and for the sake of brevity of description, not all possible combinations of the various technical features of the above-described embodiments have been described; however, as long as there is no conflict in these combinations of technical features, they should be considered to be within the scope of the present specification.

The above-described embodiments are intended to express only the preferred embodiments of the present invention and the principles of the techniques employed, and the description is more specific and detailed, but should not therefore be construed as limiting the scope of the invention patent. It is possible for those skilled in the art to make various significant changes, readjustments and substitutions without departing from the scope of the present invention. Therefore, although the present invention has been described in more detail by the above embodiments, the present invention is not limited to the above embodiments, but may include more other equivalent embodiments without departing from the idea of the present invention, and the scope of protection of the patent of the present invention is defined by the scope of the appended claims.

## Claims

1. A signal transmitting link, applied in an electromagnetic wave sensor, wherein the transmitting link comprises an analog signal source and a digital phase shifter, the analog signal source is configured to provide an initial analog signal, and the digital phase shifter is configured to generate a phase shift signal in a digital domain and to perform phase shifting on the initial analog signal based on the phase shift signal to perform a preset phase shifting operation on the initial analog signal.

2. The signal transmitting link according to claim 1, further comprising a transmitting antenna, wherein the transmitting antenna is configured to radiate a phase-shifted initial analog signal to a preset space region.

3. The signal transmitting link according to claim 1, wherein the digital phase shifter comprises a digital phase shift signal

source, a digital-to-analog converter (DAC) and a mixer, wherein the digital phase shifter is configured to generate a digital phase shift signal, the DAC is configured to convert the digital phase shift signal received to an analog phase shift signal, and the mixer is configured to perform a mixing operation on the initial analog signal received using the analog phase shift signal received to perform the preset phase shifting operation on the initial analog signal.

**4.** The signal transmitting link according to claim 3, wherein the digital phase shift signal source comprises a direct digital frequency synthesizer, the DAC is an In-Phase and Quadrature (IQ) digital-to-analog converter, and the mixer is an IQ mixer.

**5.** The signal transmitting link according to claim 1, wherein the digital phase shift signal is a single-tone signal and the initial analog signal is a frequency sweep signal; or,
the digital phase shift signal is a frequency sweep signal, and the initial analog signal is a single-tone signal.

**6.** A signal transmitting link according to any one of claims 1 to 5, wherein the signal transmitting link transmits a frequency modulated continuous wave (FMCW) signal.

**7.** A signal transmitting link, comprising a signal transmitting main path and a signal calibration link integrated within a same integrated circuit (IC), wherein:
the signal calibration link is configured to calibrate the signal transmitting main path to acquire compensation information; the signal transmitting main path is configured to generate a radio frequency transmitting signal, after being compensated according to the compensation information, to implement target detection and/or communication.

**8.** The signal transmitting link according to claim 7, wherein the compensation information comprises at least one of a harmonic distortion compensation parameter, a local oscillator (LO) leakage compensation parameter, and a quadrature imbalance compensation parameter.

**9.** The signal transmitting link according to claim 7, wherein:
the signal transmitting main path comprises a first signal source and a phase shifter, wherein the first signal source is configured to generate a first analog signal; and the phase shifter is configured to perform frequency shifting and/or phase shifting on the first analog signal to form a radio frequency (RF) transmit signal.

**10.** The signal transmitting link according to claim 9, wherein:

when the phase shifter has a non-quadrature architecture, the phase shifter comprises a second signal source and a transmitting-end mixer, wherein the second signal source is configured to generate a second analog signal, and the transmitting-end mixer is configured to perform a mixing processing on the first analog signal and the second analog signal to form the RF transmitting signal; and
when the phase shifter has an quadrature architecture, the phase shifter comprises a second signal source, a digital-to-analog conversion module, and a transmitting-end mixer; wherein the second signal source is configured to generate a first digital signal; the digital-to-analog conversion module is configured to convert the first digital signal to a second analog signal; and the transmitting-end mixer is configured to perform frequency shifting and/or phase shifting on the first analog signal based on the second analog signal to form the RF transmitting signal.

**11.** The signal transmitting link according to claim 10, wherein the transmitting main path further comprises a compensation circuit, wherein a signal input terminal of the compensation circuit is connected with the second signal source and a signal input terminal is connected with the phase shifter, and the compensation circuit is used for combining a compensation signal and a signal output by the second signal source and outputting the combined signal.

**12.** A signal transceiving link, comprising the signal transmitting link according to any one of claims 1 to 11, and a signal receiving link;

wherein the signal receiving link comprises a receiving-end mixer, an analog-to-digital converter (ADC) and a digital signal processing (DSP) module;
wherein the receiving-end mixer is configured to perform a down-conversion on a received echo signal based on a received receiving-end local oscillator (LO) signal to obtain an analog intermediate frequency (IF) signal, the analog-to-digital converter (ADC) is configured to perform an analog-to-digital conversion on the intermediate frequency signal received to obtain a digital IF signal, and the DSP module is configured to process the digital IF

signal to obtain a target parameter; and
the echo signal is a signal formed by a signal, transmitted by the signal transmitting link and reflected and/or scattered by a target object.

**13.** The signal transceiving link according to claim 12, wherein the receiving-end mixer is a real mixer and the ADC is a real ADC; or,
the receiving-end mixer is a quadrature mixer, and the ADC is a quadrature ADC.

**14.** The signal transceiving link according to claim 12, wherein the receiving-end LO signal is a frequency sweep signal; or, the receiving-end LO signal is a single-tone signal.

**15.** A signal calibration link, comprising the signal transceiving link according to claim 12,
wherein a receive antenna connection port of the signal receiving link is connected to a transmit antenna connection port of the signal transmitting link, the signal receiving link is configured to perform calibration on the signal transmitting link.

**16.** The signal calibration link according to claim 15, wherein there is a preset frequency difference between a local oscillator (LO) signal of the signal receiving link and a LO signal of the signal transmitting link.

**17.** The signal calibration link according to claim 16, further comprising a Built-in Self-Test (BIST) module disposed between a LO signal source and the receiving-end mixer,
wherein the BIST module is configured to mix received LO signals based on a preset frequency offset signal to enable there is the preset frequency difference between the LO signal received by the receiving-end mixer and the LO signal of the signal transmitting link.

**18.** A signal calibration link, comprising the signal transceiving link according to claim 12, and a BIST module;
wherein a receive antenna connection port of the signal receiving link is connected to a transmit antenna connection port of the signal transmitting link through the BIST module, the signal receiving link is configured to perform calibration on the signal transmitting link.

**19.** A signal calibration link, comprising two signal receiving links, a BIST module, an auxiliary circuit unit and the signal transmitting link according to any one of claims 1 to 11,

wherein any one of the signal receiving links comprises a real mixer, a real analog-to-digital converter (ADC) and a digital signal processing (DSP) module; the real mixer is configured to perform a down-conversion on a received echo signal, based on a received local oscillator (LO) signal, to obtain an analog intermediate frequency (IF) signal, the real ADC is configured to perform an analog-to-digital conversion on the IF signal received to obtain a digital IF signal, and the DSP module is configured to process the digital IF signal to obtain a target parameter;
wherein the echo signal is a signal formed by a signal, transmitted by the signal transmitting link and reflected and/or scattered by a target object; and
receive antenna connection ports of the two signal receiving links are respectively connected to a transmit antenna connection port of the signal transmitting link through the auxiliary circuit unit and the BIST module in sequence, and a signal receiving link is configured to perform calibration on an intermediate frequency portion of the signal transmitting link.

**20.** A signal calibration link for a signal transmitting main path, wherein the signal transmitting main path is configured to compensate a generated signal according to a compensation coefficient and generate a radio frequency transmitting signal for achieving target detection and/or communication, wherein
the signal calibration link is configured to acquire current observation information of the signal transmitting main path at a current compensation coefficient; when the current observation information satisfies an iteration condition, taking the current compensation coefficient as a compensation coefficient used by a compensation operation of the signal transmitting link; otherwise, the current compensation coefficient is iterated until obtained observation information satisfies the iteration condition.

**21.** The signal calibration link according to claim 20, wherein the compensation coefficient comprises at least one of a harmonic distortion compensation parameter, a local oscillator leakage compensation parameter, and an quadrature imbalance compensation parameter.

**22.** The signal calibration link according to claim 20, wherein the signal transmitting main path and the signal calibration link are integrated in a same integrated circuit.

**23.** A signal compensation link, comprising the signal transmitting link according to any one of claims 1 to 11, and a compensation unit, wherein the compensation unit is configured to compensate at least one of an IQ mismatch, an IQ imbalance, a signal leakage, and a harmonic distortion of the signal transmitting link.

**24.** The signal compensation link according to claim 23, wherein the compensation unit is configured to compensate the signal transmitting link based on calibration data obtained from the signal calibration link according to any one of claims 15 to 22.

**25.** The signal compensation link according to claim 24, wherein the signal receiving link of the signal calibration link is integrated, as an auxiliary calibration module, to a vicinity of the transmitting link to be calibrated to perform a real-time calibration operation in a working gap of the transmitting link.

**26.** A feed line unequal length compensation method, applied to an antenna array of an electromagnetic wave sensor with at least two signal links, wherein the method comprises:

allowing a signal link with a shortest feed line in at least two signal links as a reference link, and acquiring a time delay difference of each of remaining transmitting links with respect to a reference link; and
performing feed line unequal length compensation on the antenna array in a digital domain based on the time delay difference.

**27.** An integrated circuit, comprising a radio frequency module, an analog signal processing module, and a digital signal processing module connected in sequence, wherein:

the radio frequency module is configured to generate a radio frequency transmitting signal and a radio frequency receiving signal; the analog signal processing module is configured to perform a down-conversion processing on the radio frequency receiving signal to obtain an intermediate frequency signal; the digital signal processing module is configured to perform an analog-to-digital conversion on the intermediate frequency signal to obtain a digital signal; and
the radio frequency module comprises the signal transmit link according to any one of claims 1 to 11, the signal transceiving link according to any one of claims 12 to 14, the signal calibration link according to any one of claims 15 to 22, a signal compensation link according to any one of claims 23 to 25; and/or
the digital signal processing module performs compensation in a digital domain based on the feed line unequal length compensation method according to claim 26.

**28.** The integrated circuit according to claim 27, further comprising a data processing module, wherein the data processing module is configured to process the digital signal to achieve target detection and/or wireless communication.

**29.** The integrated circuit according to claim 27 or 28, wherein the integrated circuit is a millimeter wave chip.

**30.** The integrated circuit according to claim 27 or 28, wherein the radio frequency receiving signal is an echo signal formed by reflection and/or scattering of the radio frequency transmitting signal by a target object, and the integrated circuit is a sensor chip.

**31.** An electromagnetic wave sensor, comprising:

a carrier;
the integrated circuit according to any one of claims 27 to 30, disposed on the carrier; and
an antenna, provided on the carrier, or integrated with the integrated circuit as an integral device provided on the carrier;
wherein the integrated circuit is connected with the antenna and configured to transmit the radio frequency transmitting signal and/or receive the radio frequency receiving signal.

**32.** A device, comprising:

a device body; and
the electromagnetic wave sensor according to claim 31, disposed on the device body;
wherein the electromagnetic wave sensor is used for object detection and/or communication to provide reference information to operation of the device body.

**33.** A non-transitory computer-readable storage medium, having stored thereon computer-readable instructions, wherein when the computer-readable instructions are executed by a processor, the processor is caused to perform the method according to claim 26.

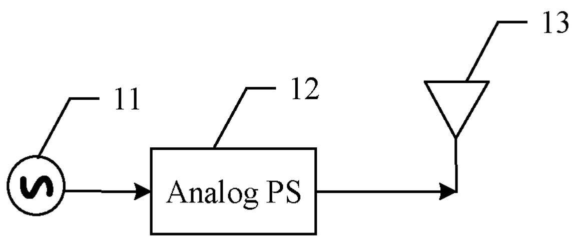


FIG. 1A

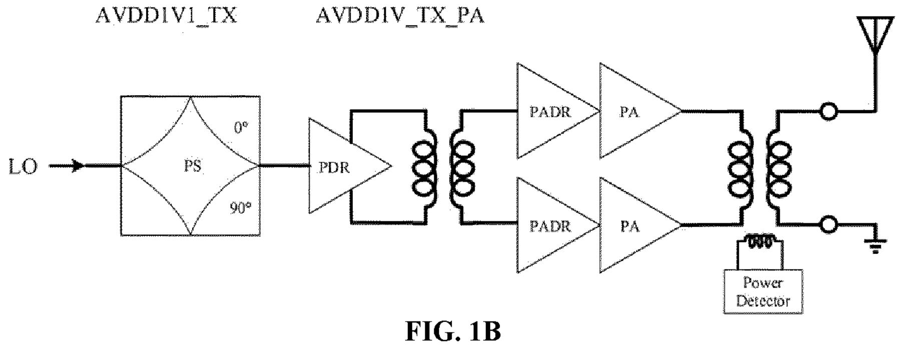


FIG. 1B

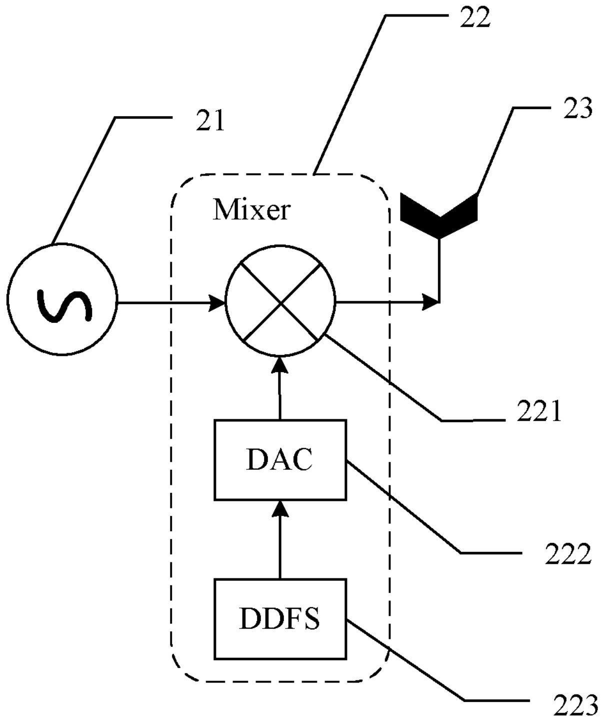


FIG. 2A

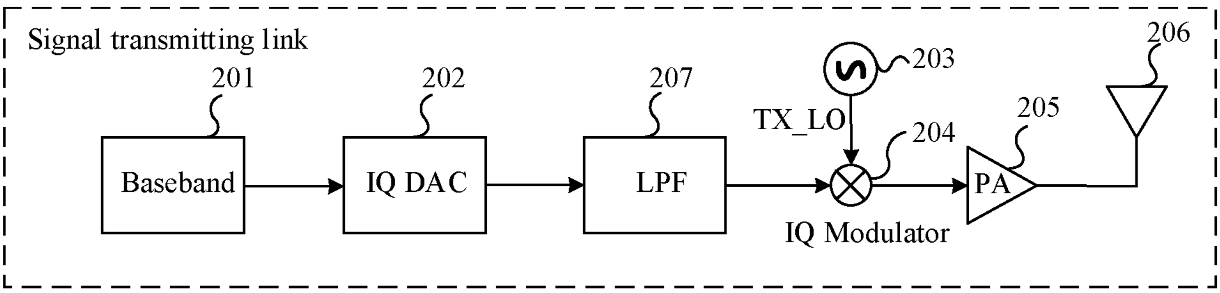


FIG. 2B

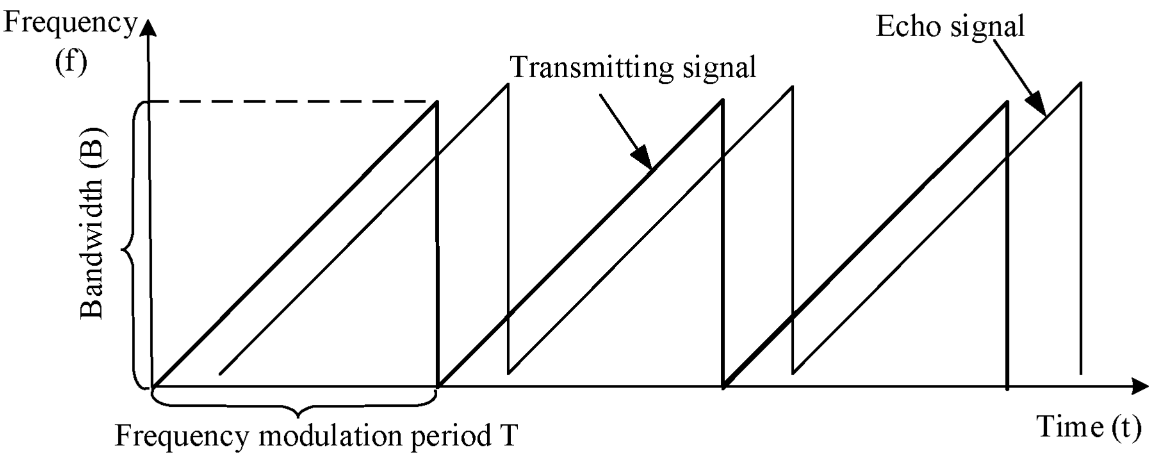


**FIG. 2C**

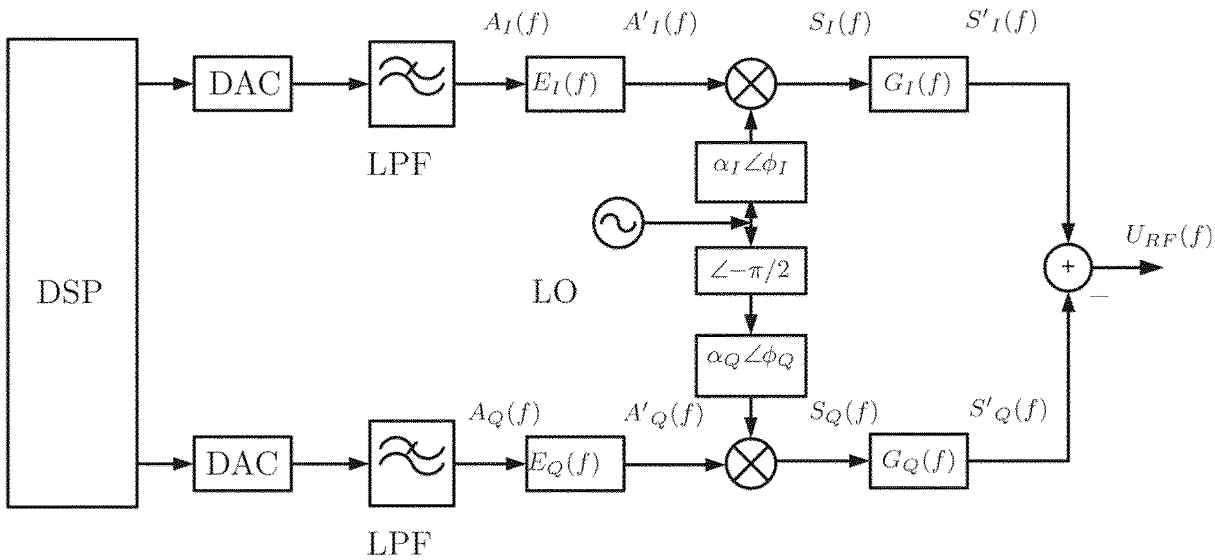


**FIG. 3A**

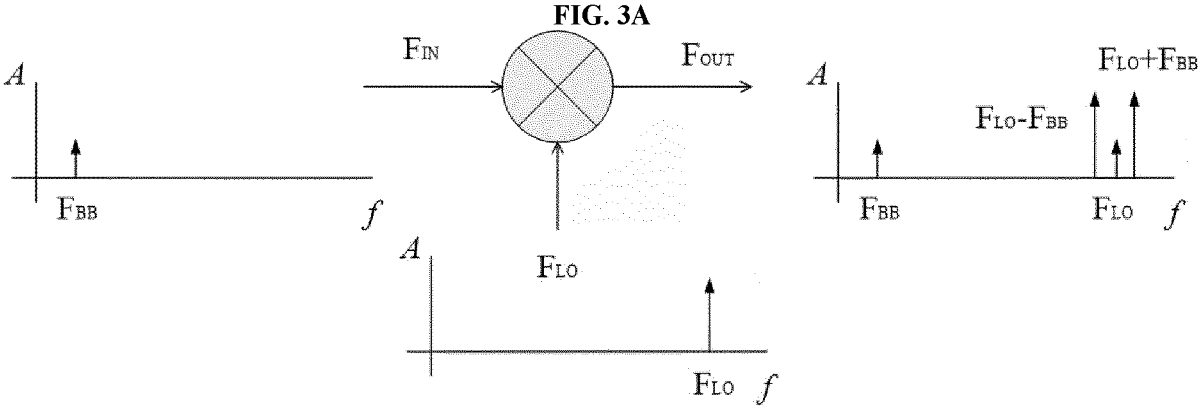


**FIG. 3B**

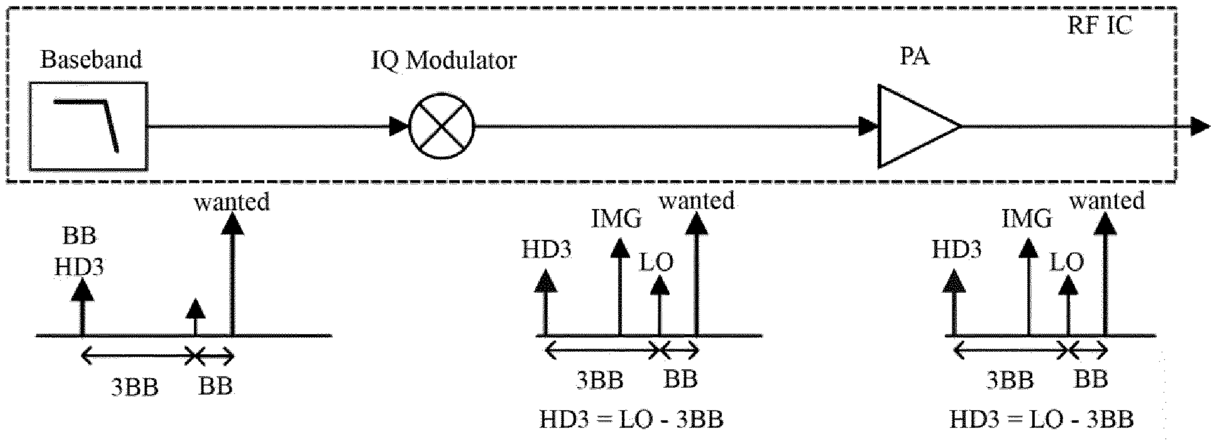


FIG. 3C

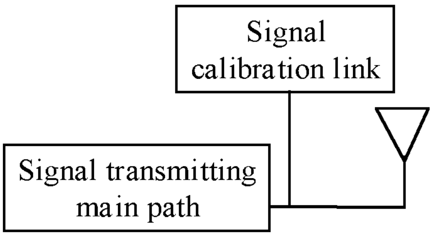


FIG. 4A

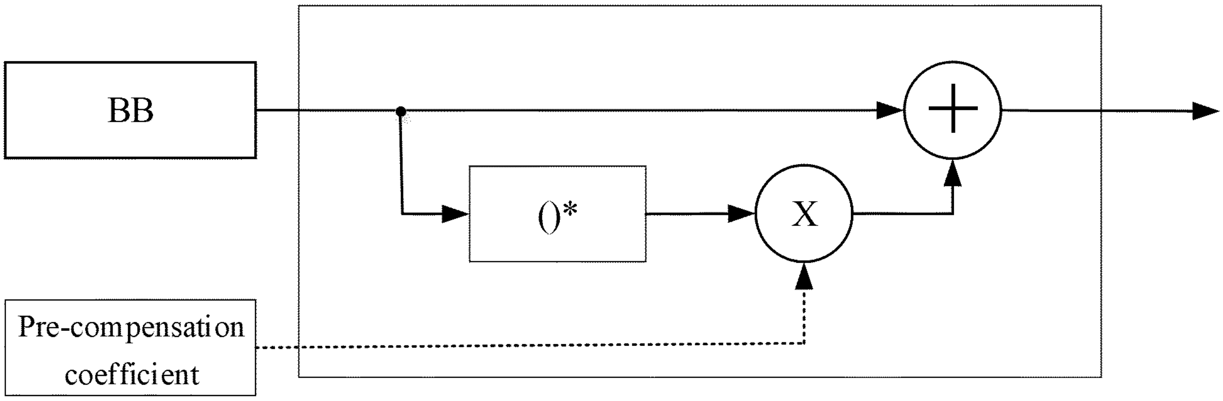


FIG. 4B

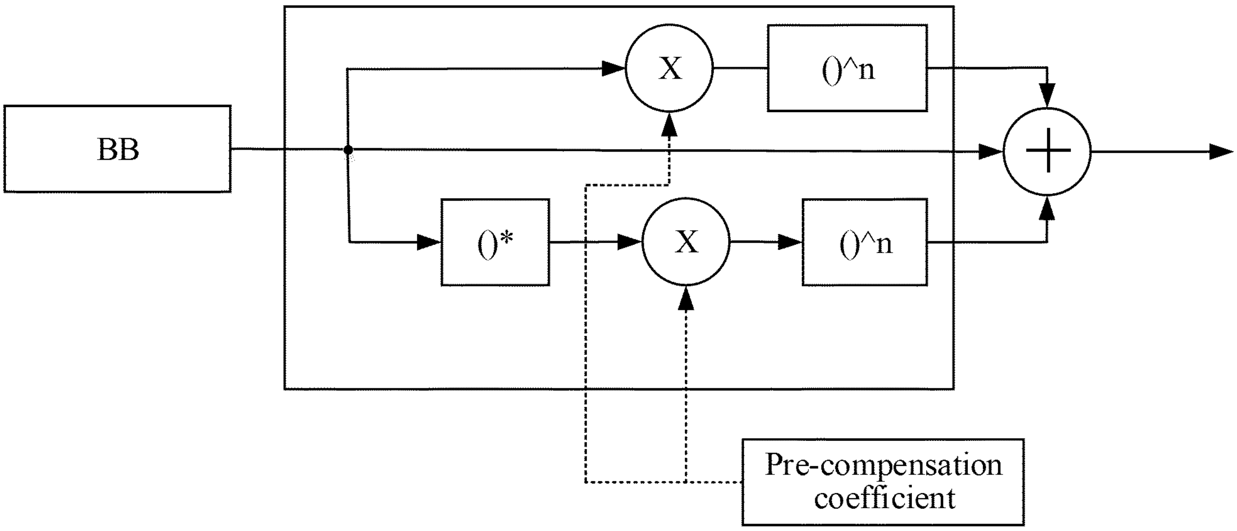


FIG. 4C

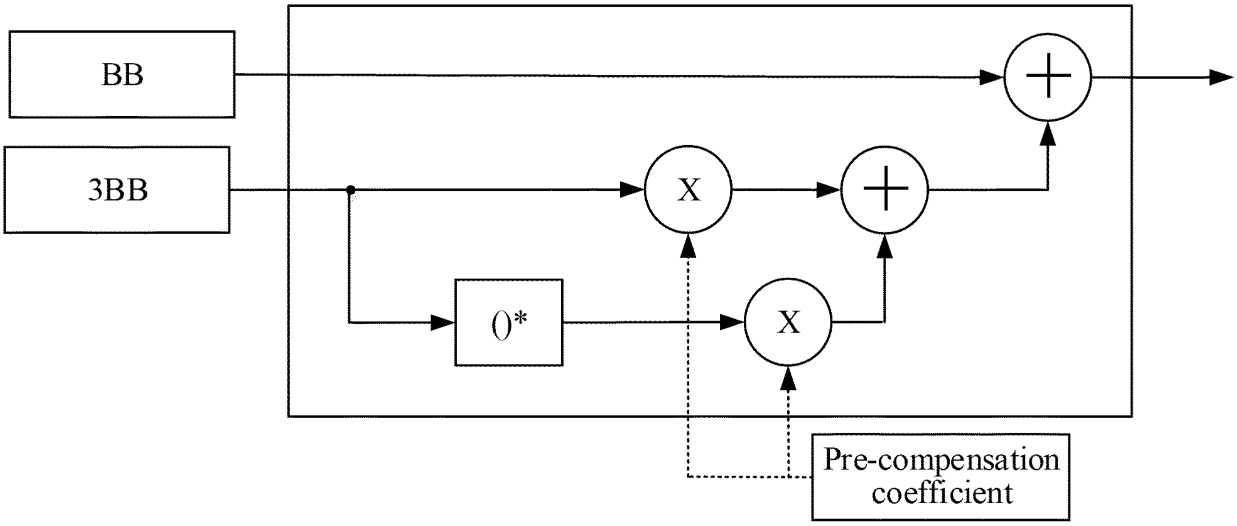


FIG. 4D

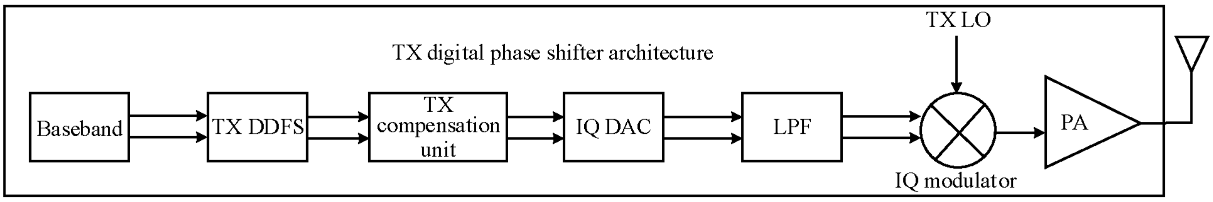


FIG. 5A

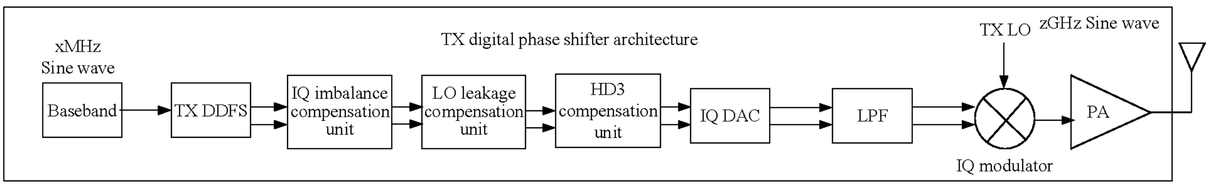


FIG. 5B

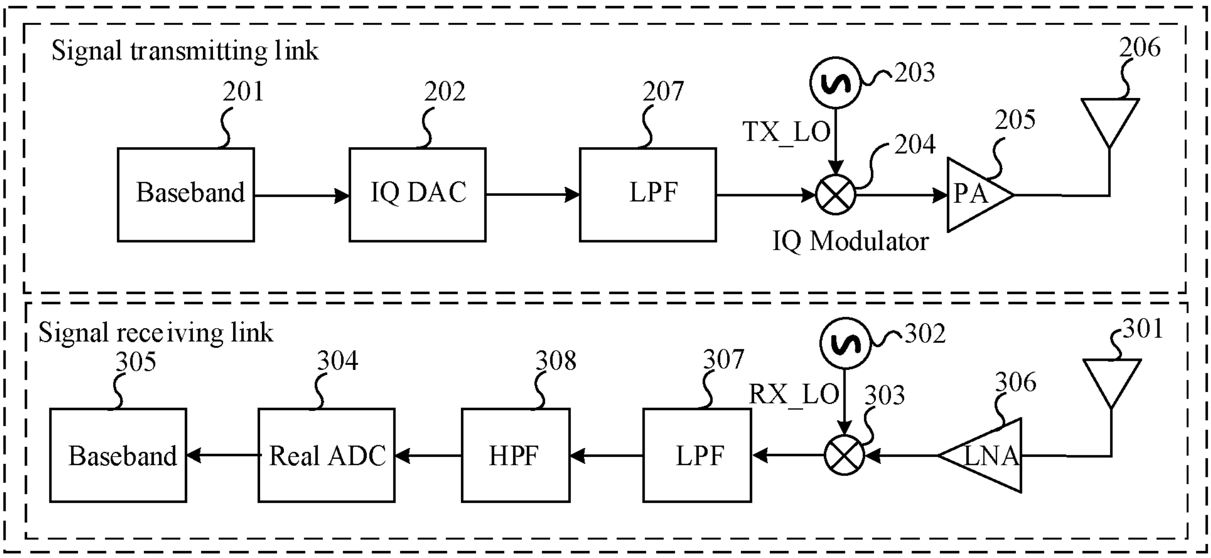


FIG. 6A

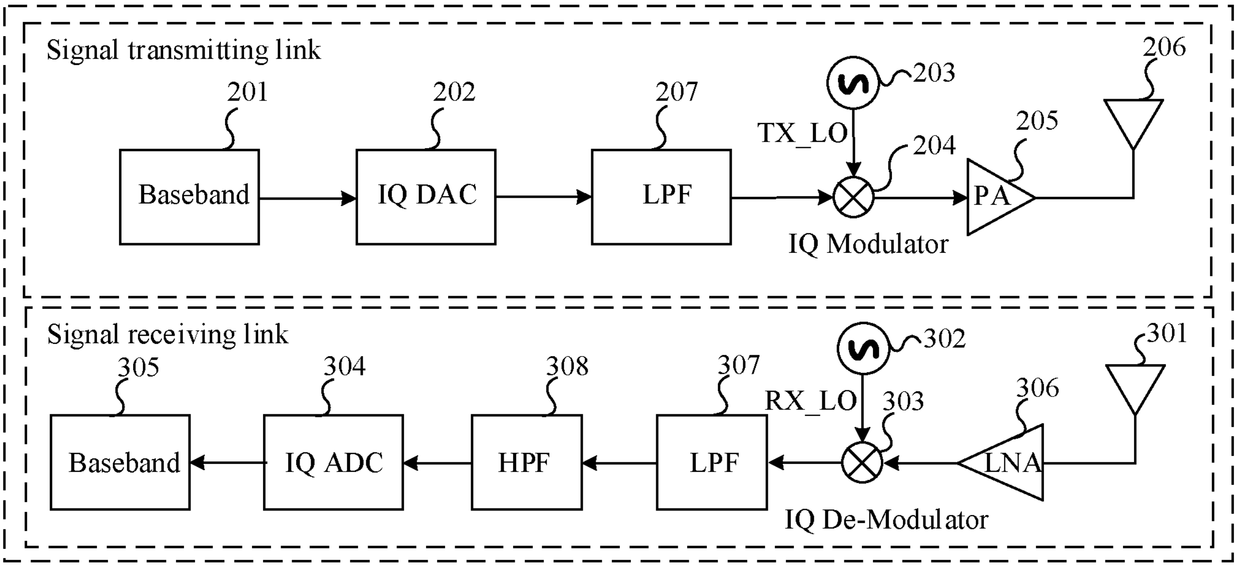


FIG. 6B

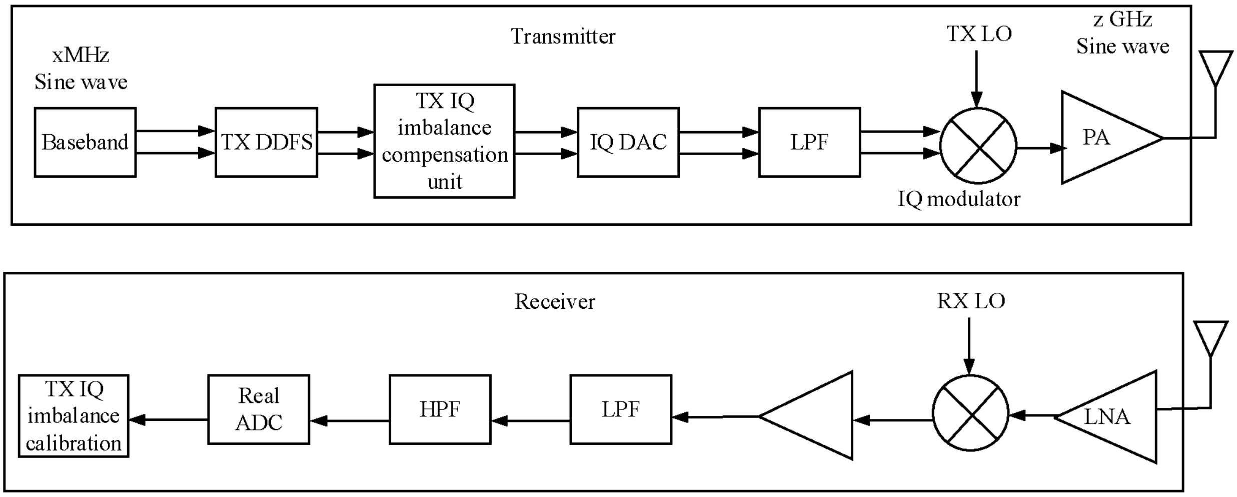


FIG. 7A

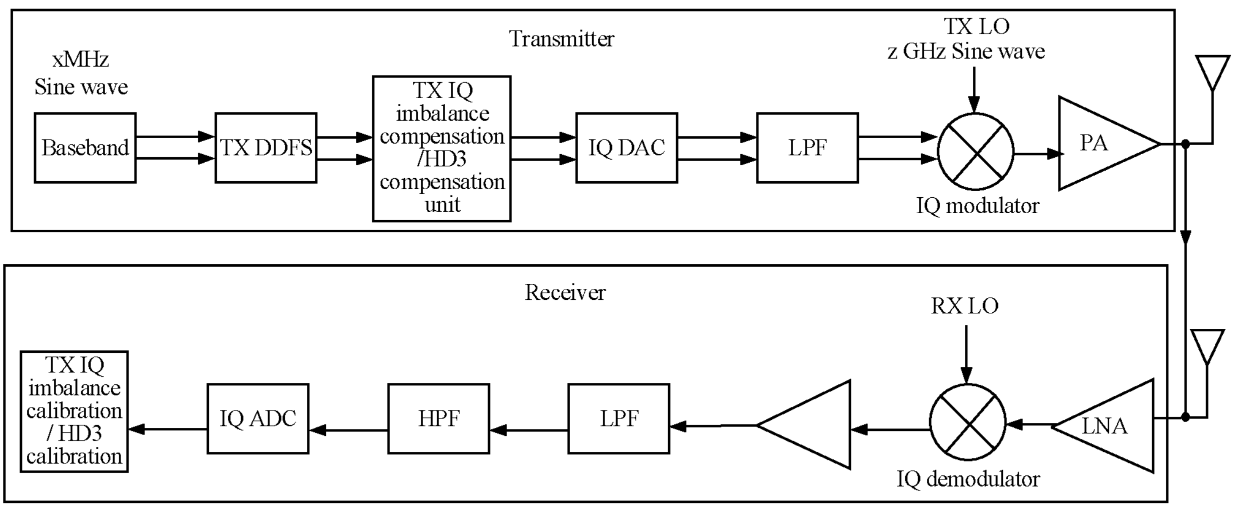


FIG. 7B

**Solution: TX IQ Mod + RX IQ De-Mod + LO Freq Diff**

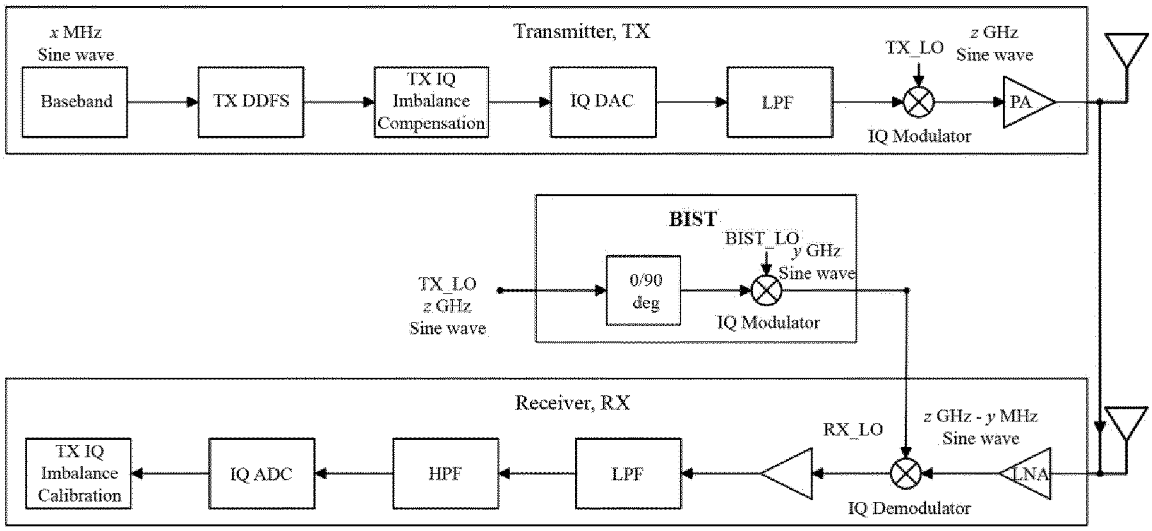


FIG. 8

**Solution: TX IQ Mod + BIST IQ Mod + RX IQ De-Mod**

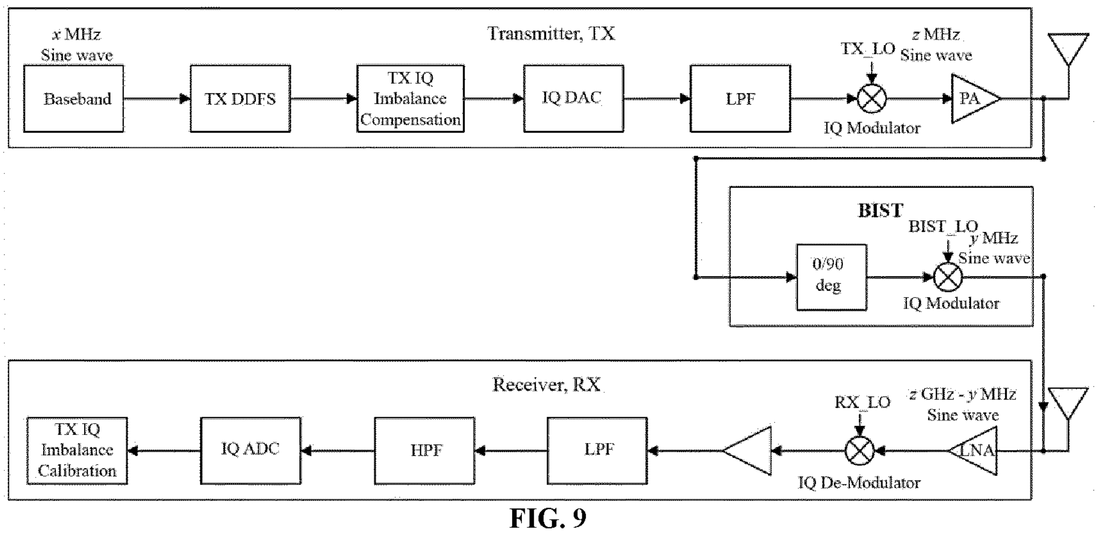


FIG. 9

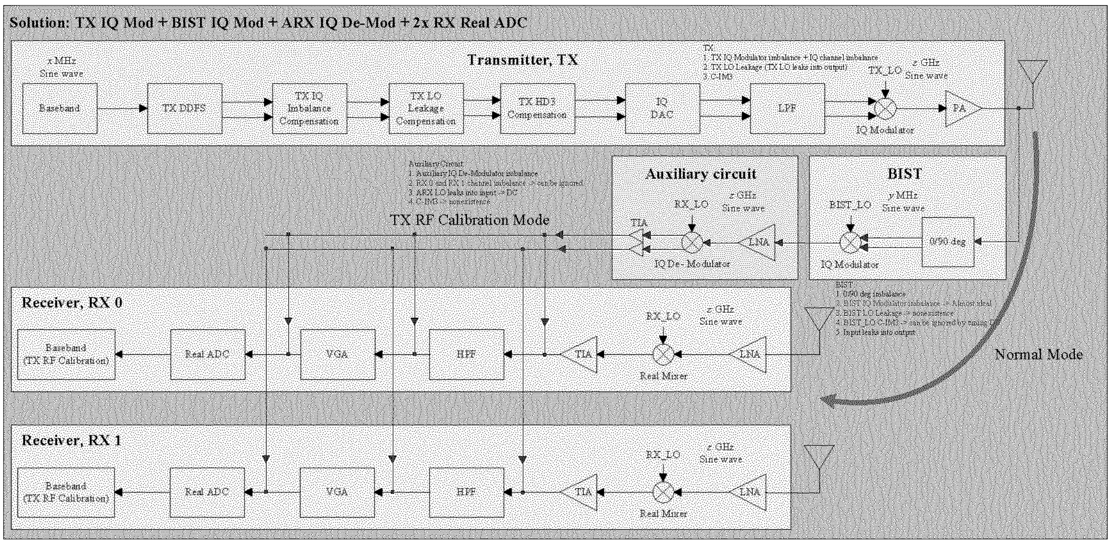


FIG. 10

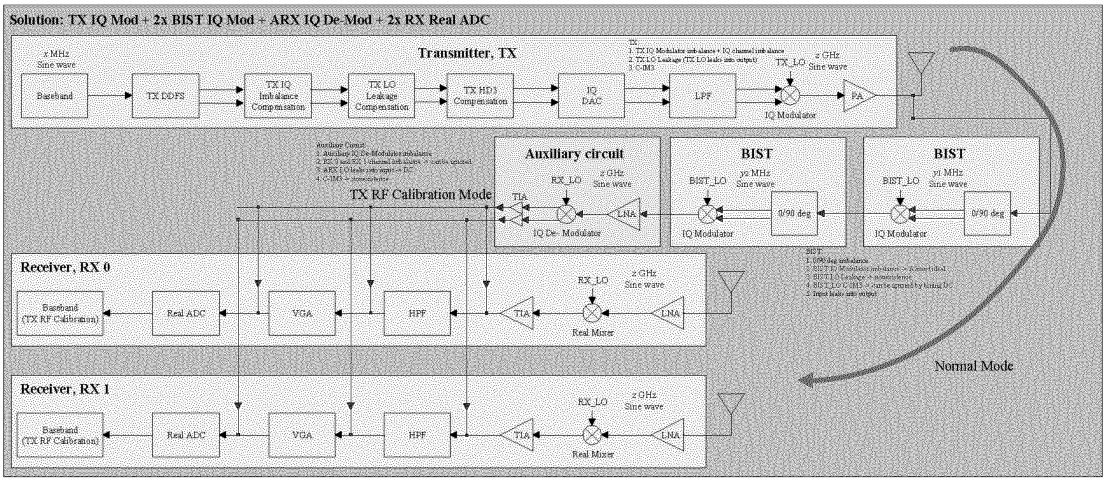


FIG. 11

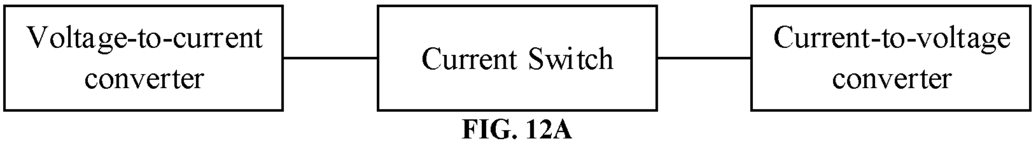


FIG. 12A

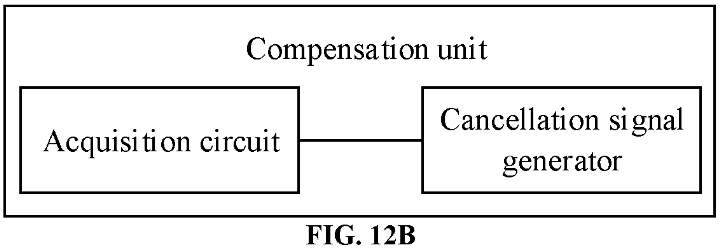


FIG. 12B

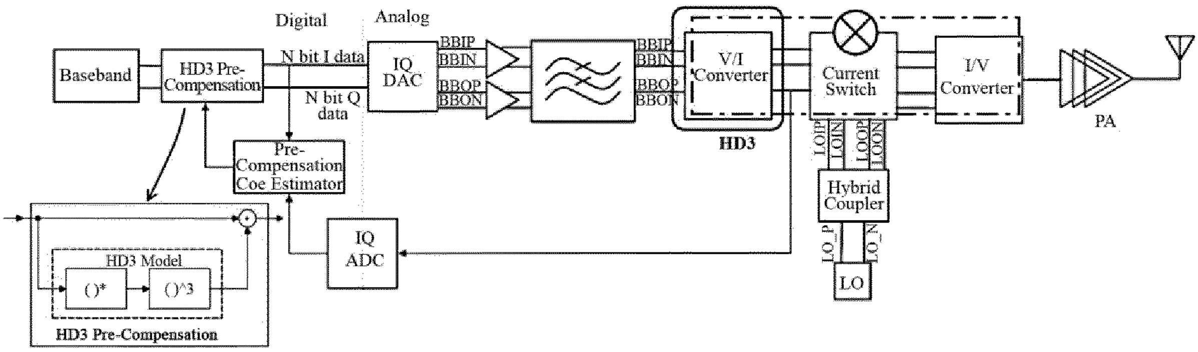


FIG. 13A

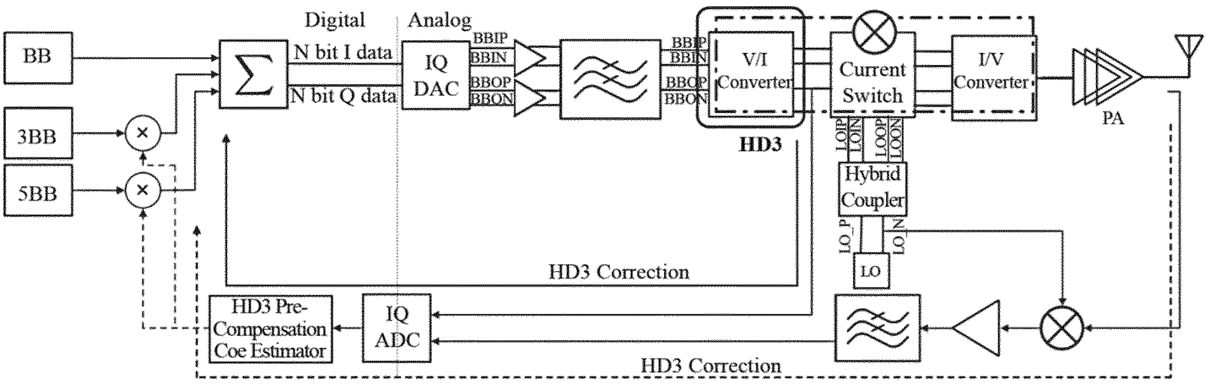


FIG. 13B

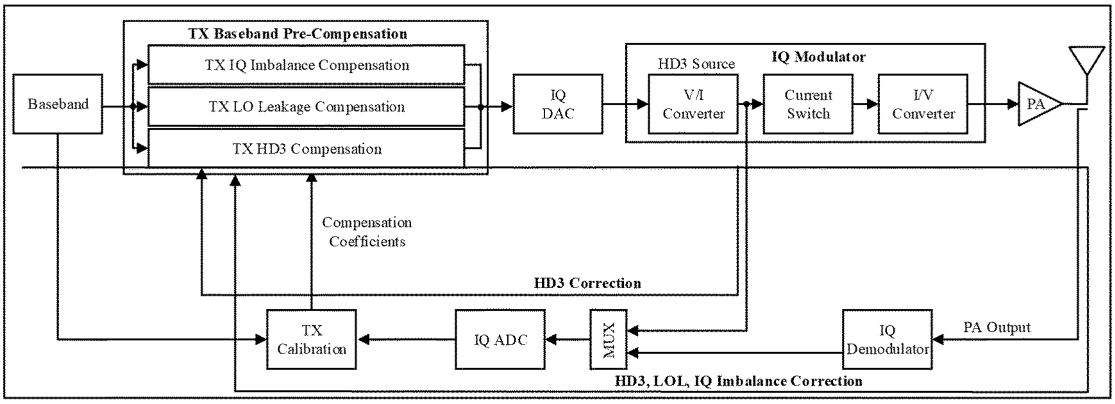


FIG. 13C

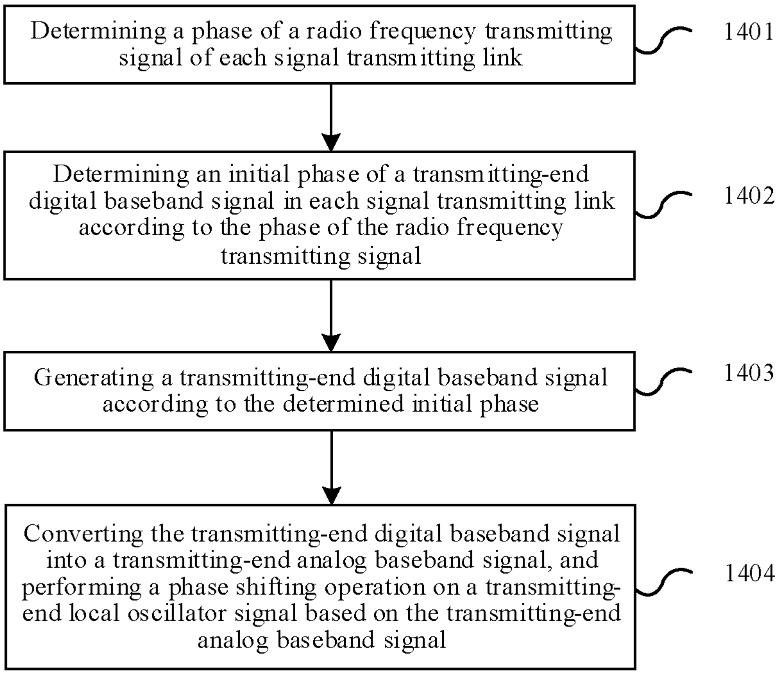


FIG. 14A

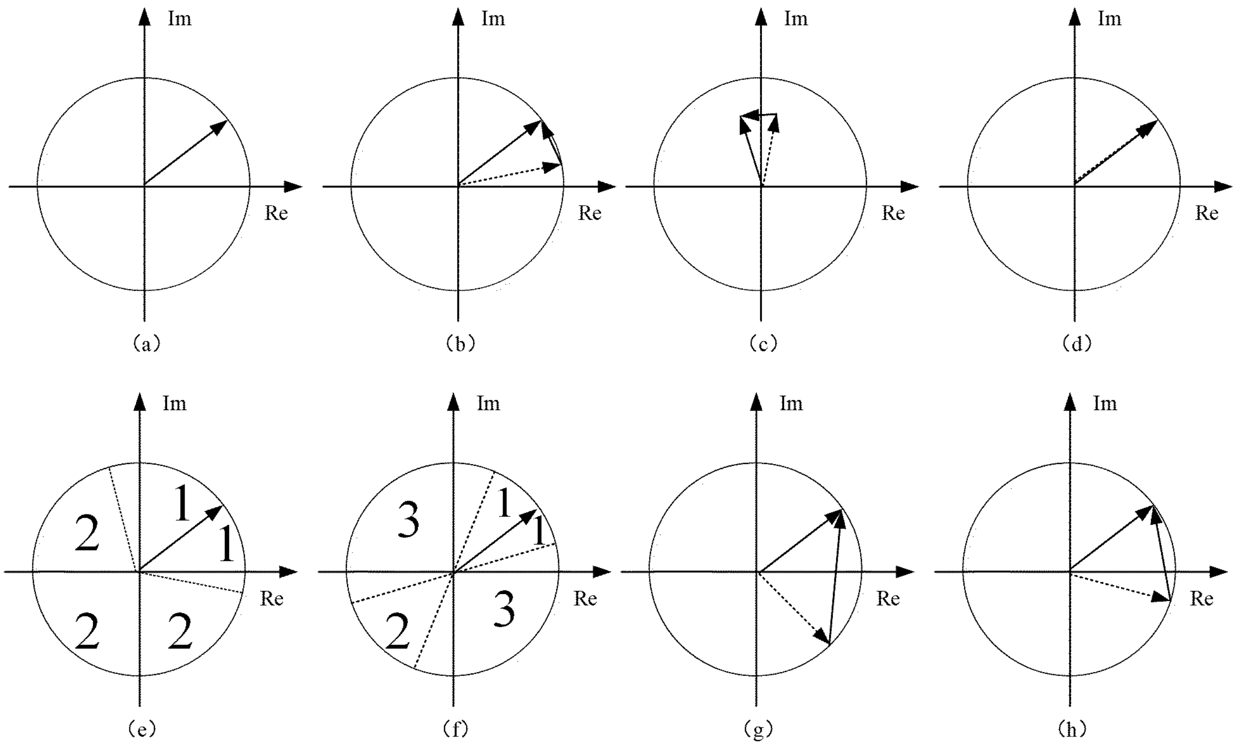


FIG. 14B

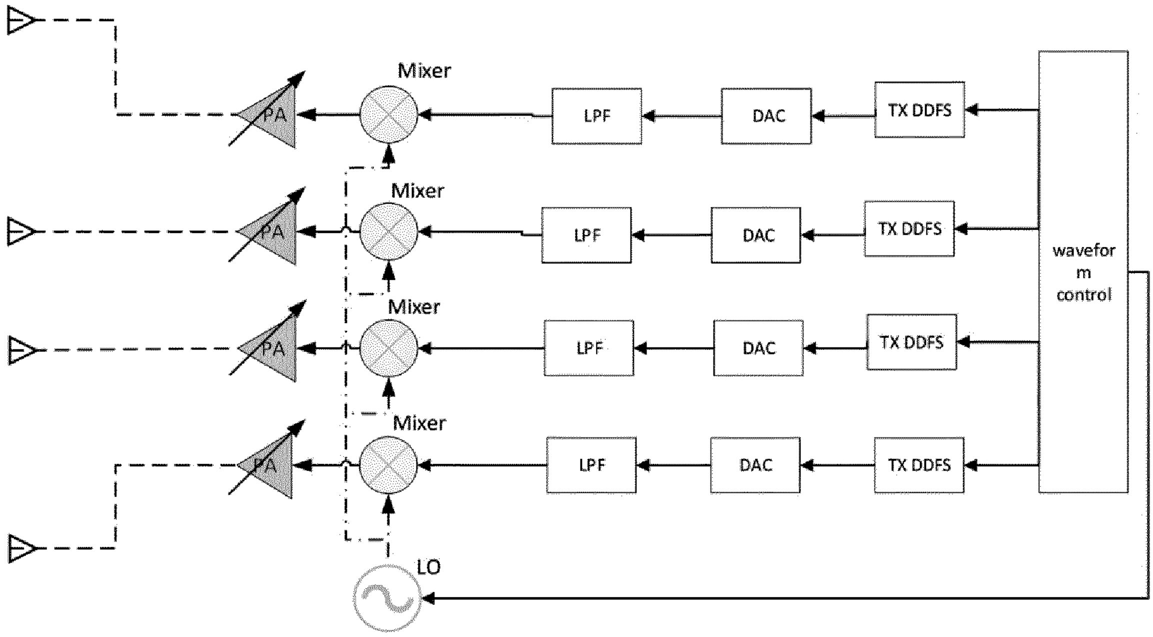


FIG. 15

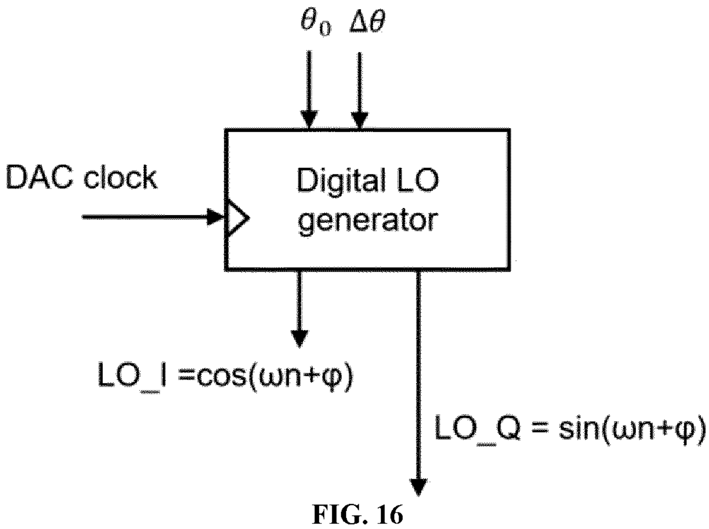


**FIG. 16**

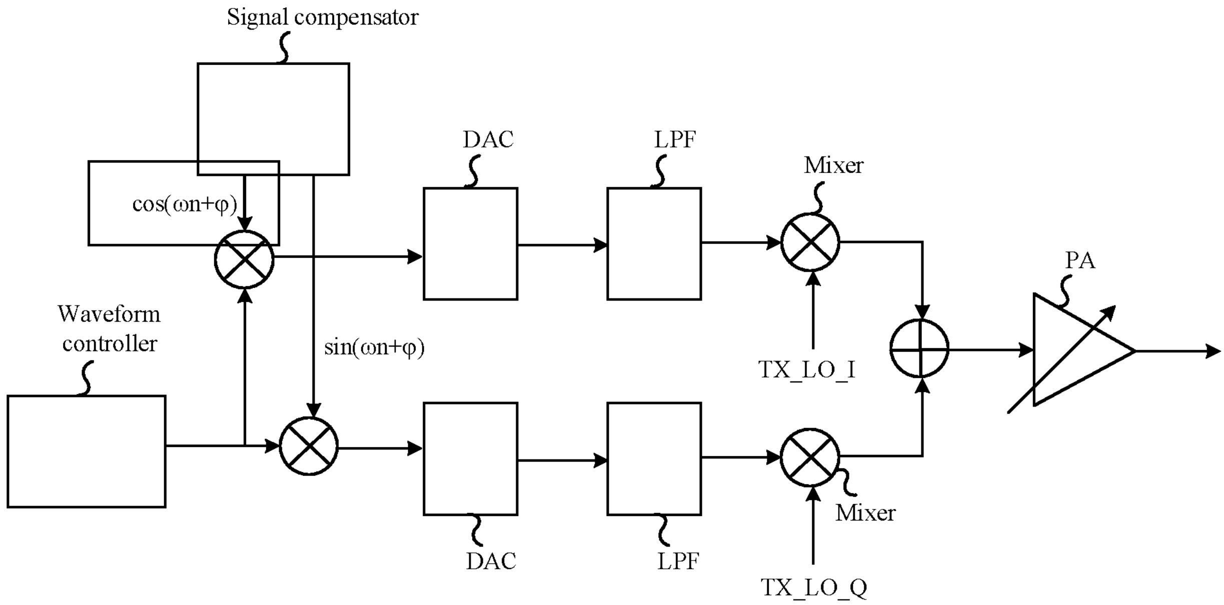


**FIG. 17**

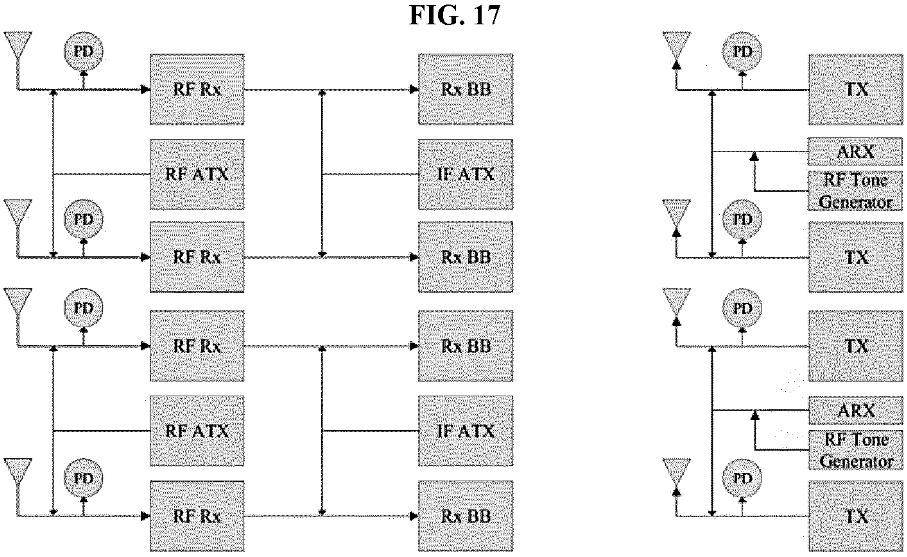


**FIG. 18**

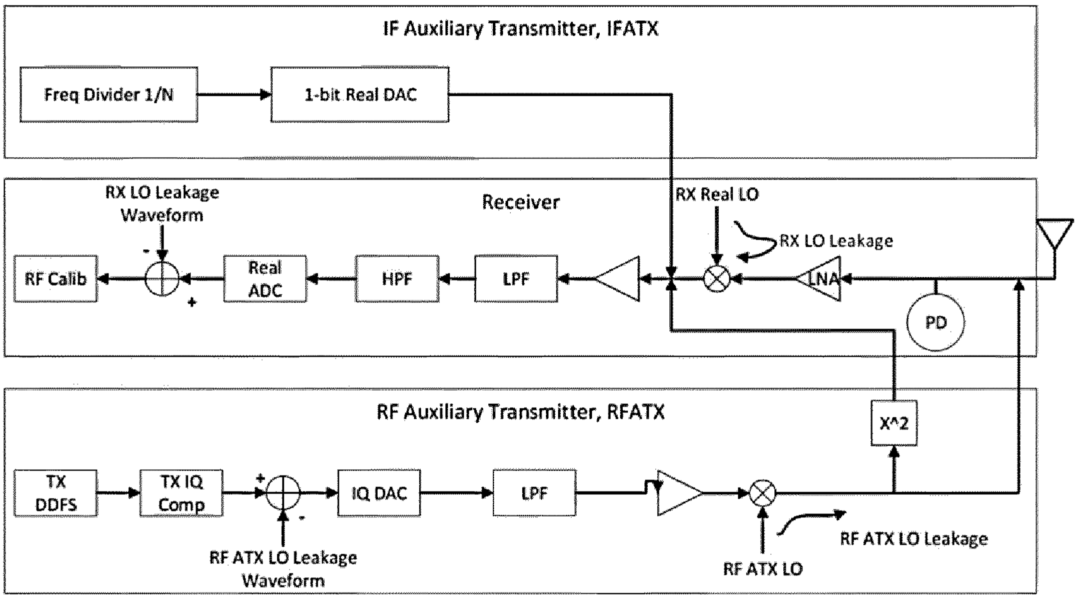


FIG. 19

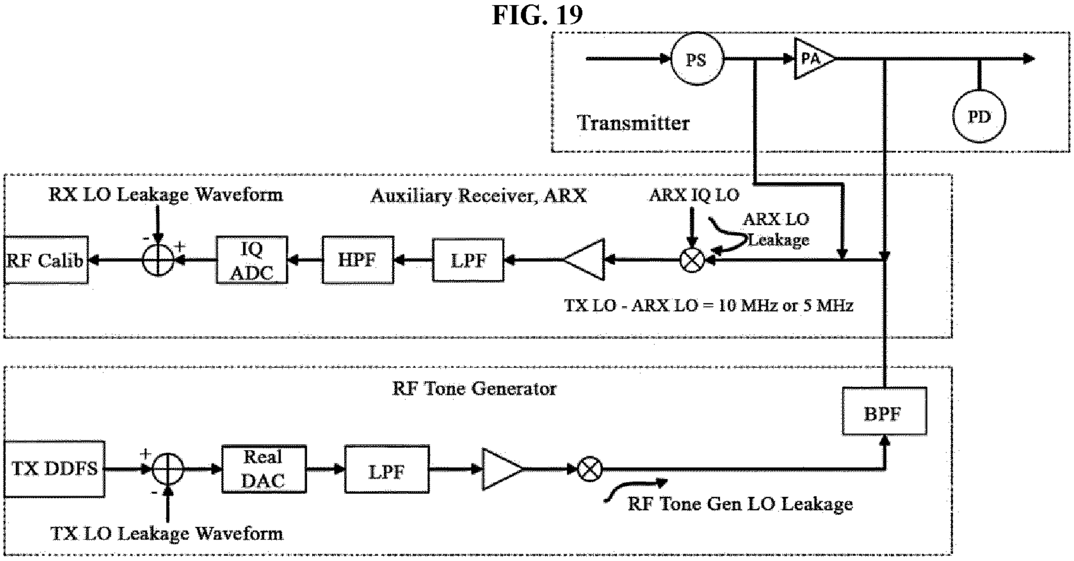


FIG. 20

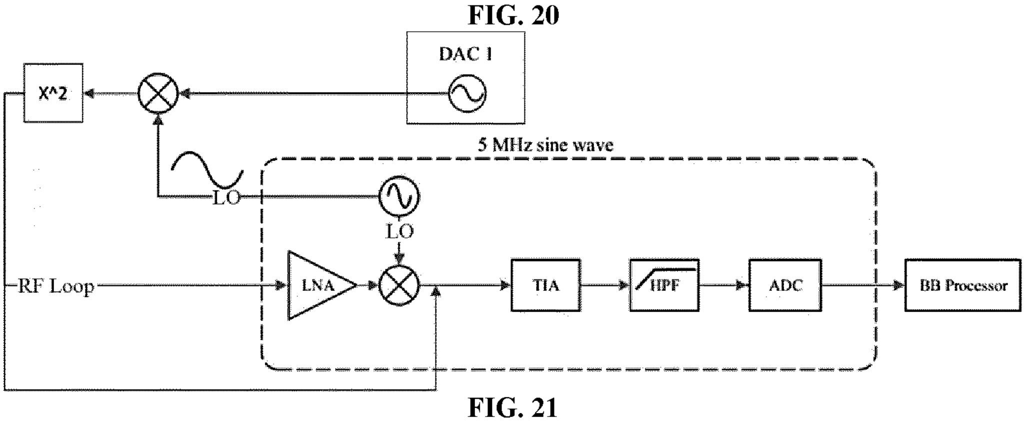


FIG. 21

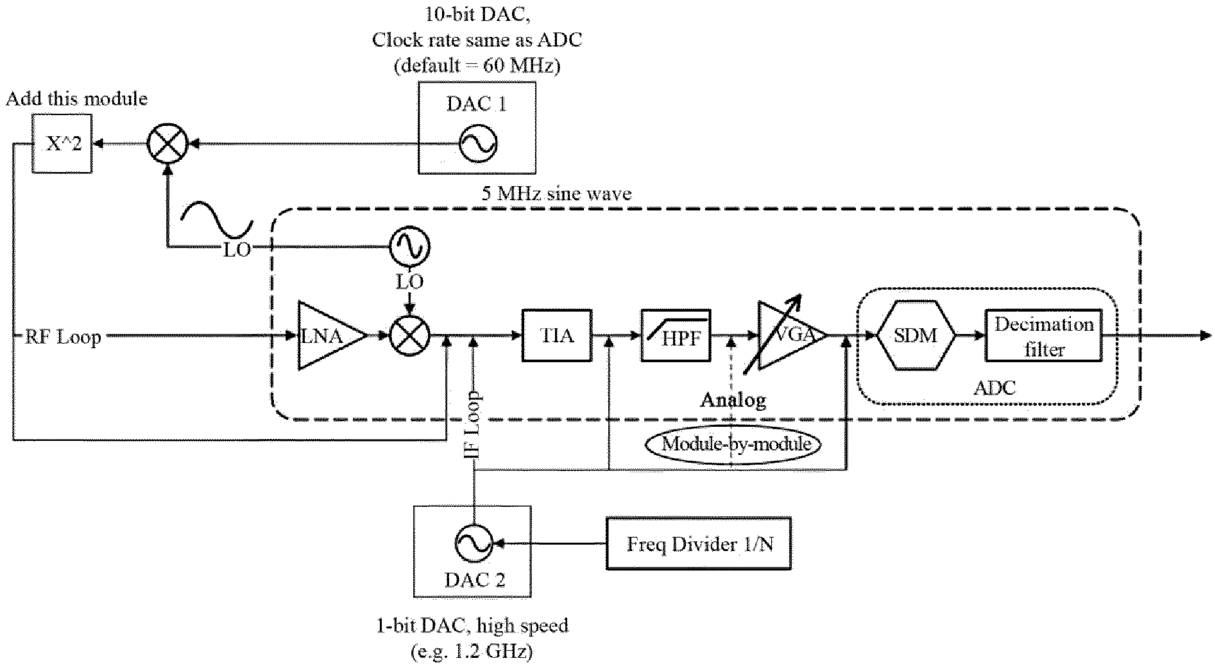


FIG. 22

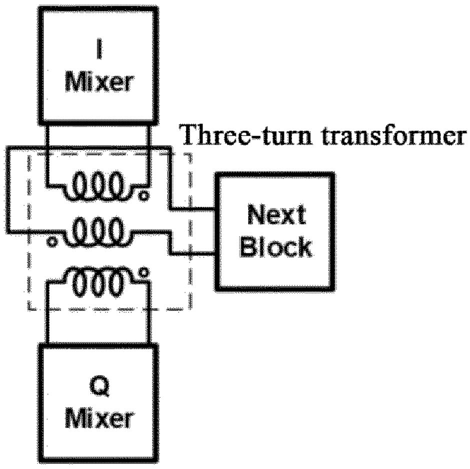


FIG. 23

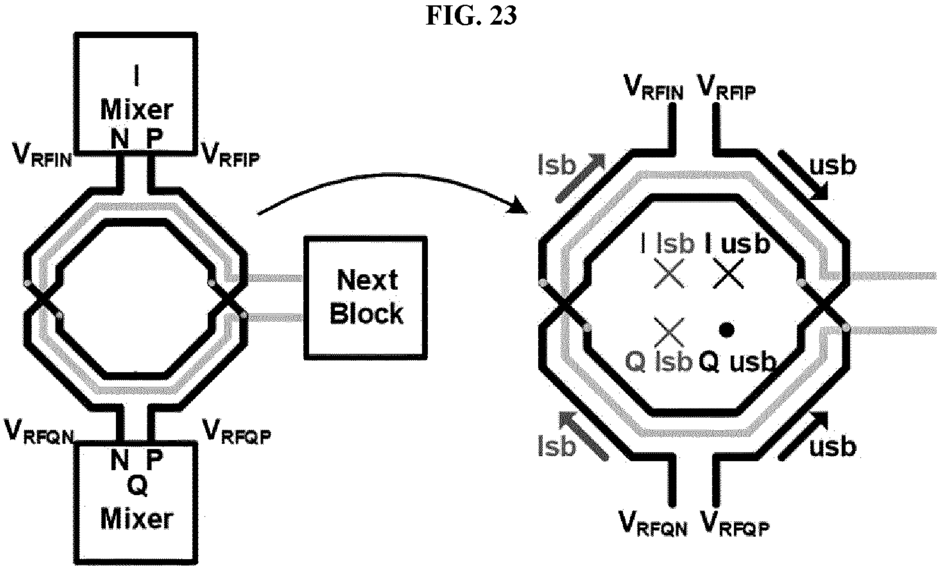


FIG. 24

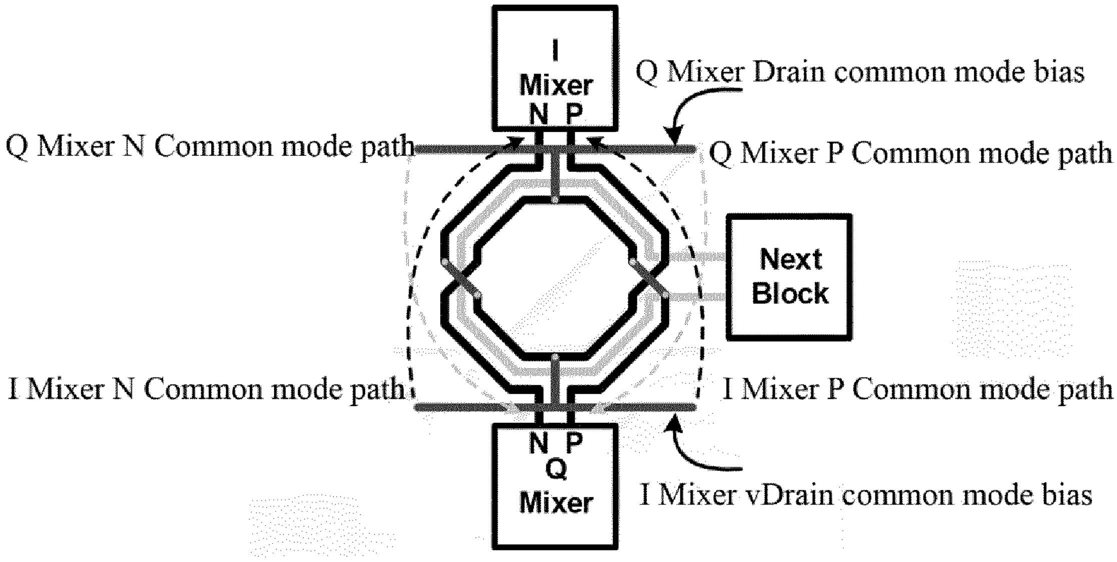
I
Mixer
N P
Q Mixer Drain common mode bias
Q Mixer N Common mode path
Q Mixer P Common mode path
Next
Block
I Mixer N Common mode path
I Mixer P Common mode path
N P
Q
Mixer
I Mixer vDrain common mode bias

FIG. 25

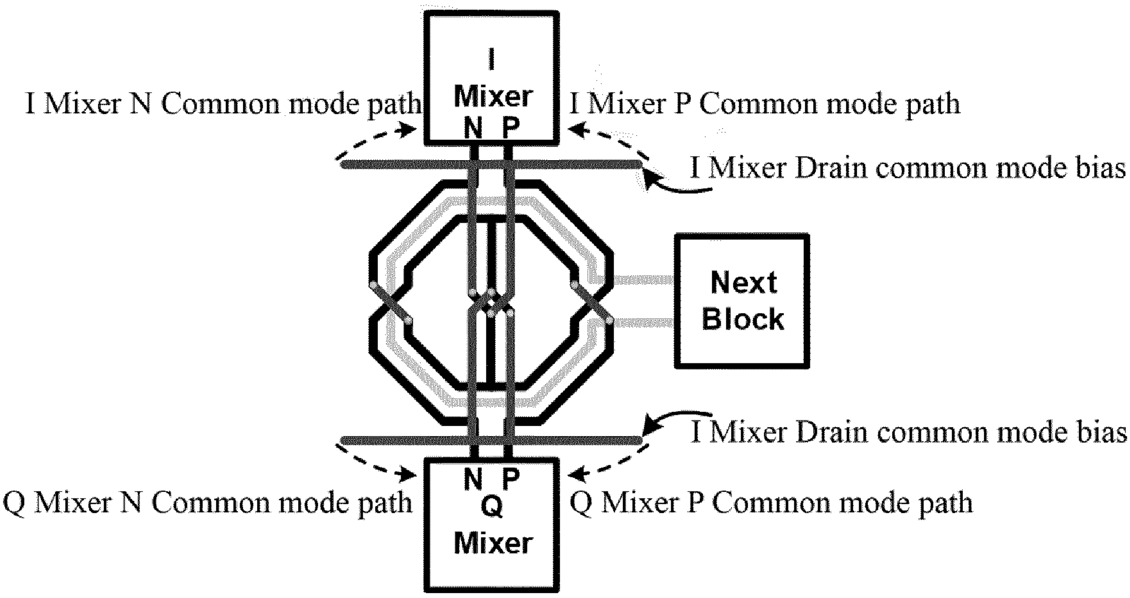
I
Mixer
N P
I Mixer N Common mode path
I Mixer P Common mode path
I Mixer Drain common mode bias
Next
Block
I Mixer Drain common mode bias
N P
Q
Mixer
Q Mixer N Common mode path
Q Mixer P Common mode path

FIG. 26

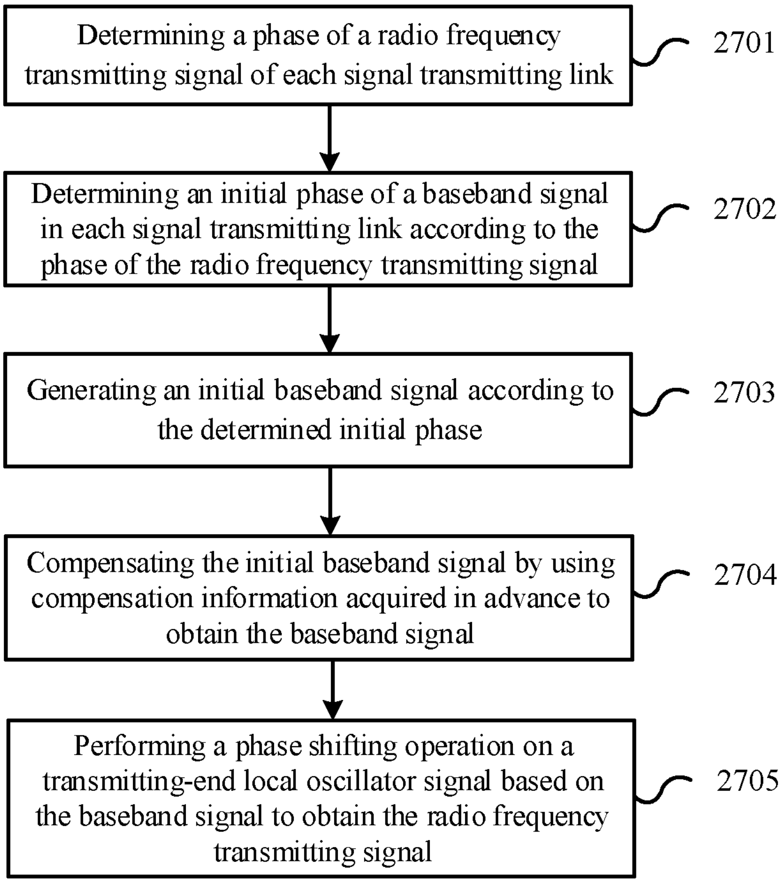
Determining a phase of a radio frequency transmitting signal of each signal transmitting link
2701
Determining an initial phase of a baseband signal in each signal transmitting link according to the phase of the radio frequency transmitting signal
2702
Generating an initial baseband signal according to the determined initial phase
2703
Compensating the initial baseband signal by using compensation information acquired in advance to obtain the baseband signal
2704
Performing a phase shifting operation on a transmitting-end local oscillator signal based on the baseband signal to obtain the radio frequency transmitting signal
2705

FIG. 27

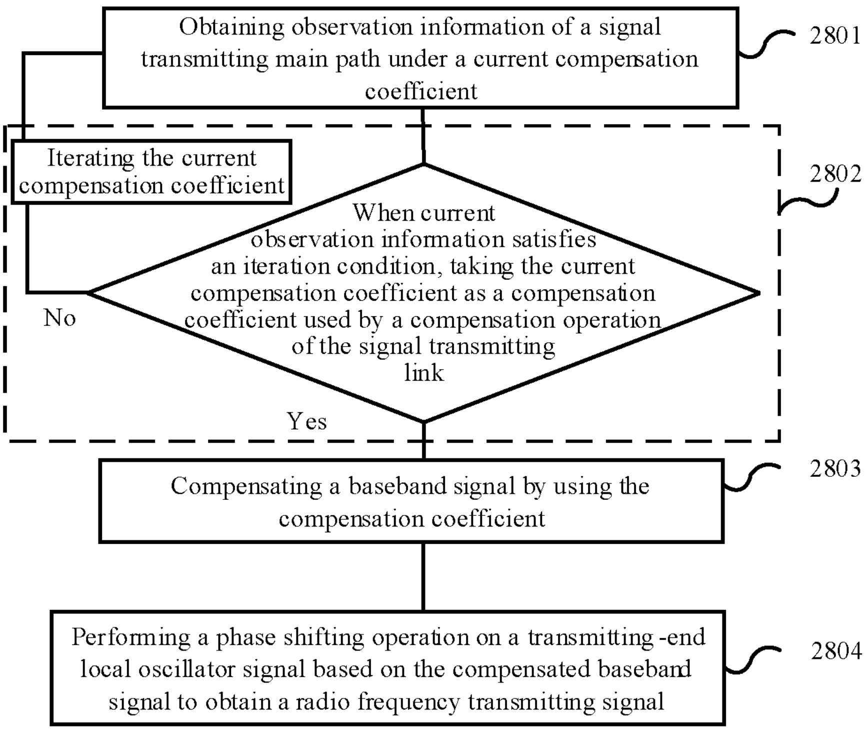
Obtaining observation information of a signal transmitting main path under a current compensation coefficient
2801
Iterating the current compensation coefficient
2802
When current observation information satisfies an iteration condition, taking the current compensation coefficient as a compensation coefficient used by a compensation operation of the signal transmitting link
No
Yes
Compensating a baseband signal by using the compensation coefficient
2803
Performing a phase shifting operation on a transmitting -end local oscillator signal based on the compensated baseband signal to obtain a radio frequency transmitting signal
2804

FIG. 28

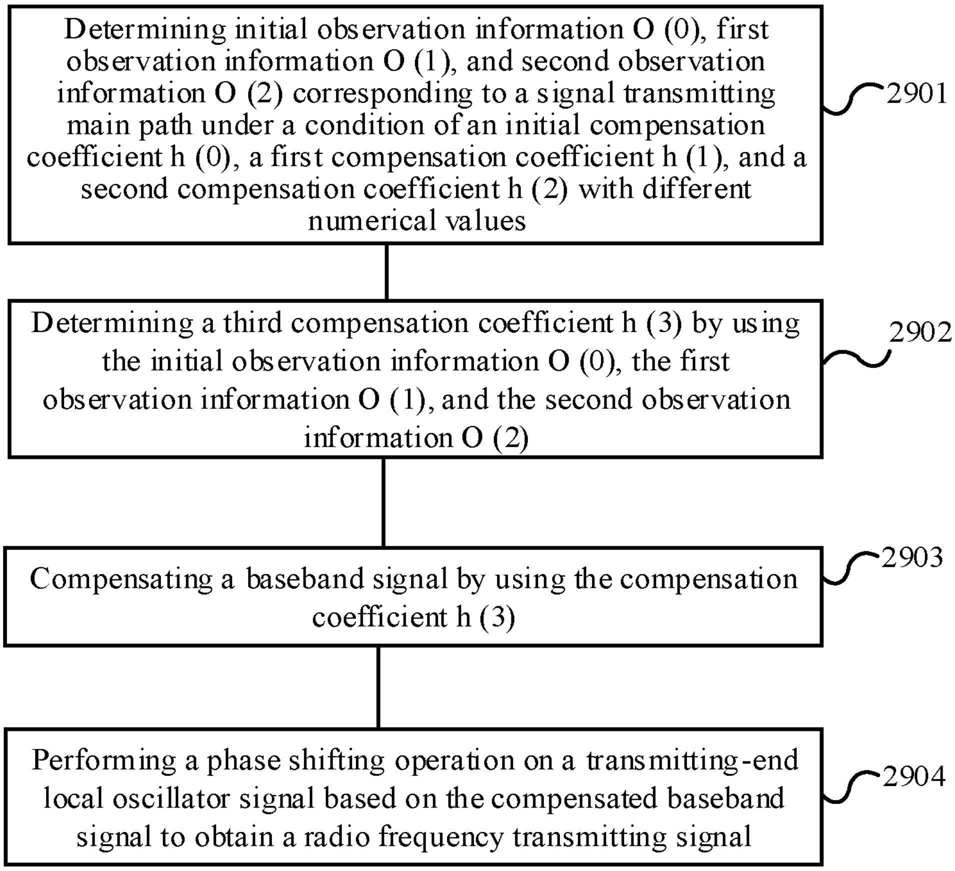
Determining initial observation information O (0), first observation information O (1), and second observation information O (2) corresponding to a signal transmitting main path under a condition of an initial compensation coefficient h (0), a first compensation coefficient h (1), and a second compensation coefficient h (2) with different numerical values
2901
Determining a third compensation coefficient h (3) by using the initial observation information O (0), the first observation information O (1), and the second observation information O (2)
2902
Compensating a baseband signal by using the compensation coefficient h (3)
2903
Performing a phase shifting operation on a transmitting-end local oscillator signal based on the compensated baseband signal to obtain a radio frequency transmitting signal
2904

FIG. 29

**INTERNATIONAL SEARCH REPORT**

International application No. **PCT/CN2024/099438**

**A. CLASSIFICATION OF SUBJECT MATTER**

H04B1/00(2006.01)i

According to International Patent Classification (IPC) or to both national classification and IPC

**B. FIELDS SEARCHED**

Minimum documentation searched (classification system followed by classification symbols)

IPC:H04B

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE; 3GPP: 发射, 发送, 补偿, 校正, 校准, 数字移相, 移相, 相移, 数字, 变频, 混频, 时延, 延迟, 延迟线, 延时, 本振, 振荡, 馈线, 传输线, 电缆, 参考, 基准, 长度, 模拟, 模数, 数模, 接收, 迭代, 线缆, AD, ADC, BIST, delay, digital, phase, shift, feeder, length, line, LO, compensation, transmit, analog, calibrate, correction, A/D, mix

**C. DOCUMENTS CONSIDERED TO BE RELEVANT**

| Category* | Citation of document, with indication, where appropriate, of the relevant passages | Relevant to claim No. |
|---|---|---|
| X | CN 109698802 A (DONGGUAN NEUTRON SCIENCE CENTER) 30 April 2019 (2019-04-30)<br>description, paragraphs [0005]-[0156], and figures 1-7 | 1-6 |
| Y | CN 109698802 A (DONGGUAN NEUTRON SCIENCE CENTER) 30 April 2019 (2019-04-30)<br>description, paragraphs [0005]-[0156], and figures 1-7 | 9-19, 24-25, 27-32 |
| X | WO 2018098629 A1 (HUAWEI TECHNOLOGIES CO., LTD.) 07 June 2018 (2018-06-07)<br>description, page 8, line 16-page 17, line 23, and figures 1-9 | 1-6 |
| Y | WO 2018098629 A1 (HUAWEI TECHNOLOGIES CO., LTD.) 07 June 2018 (2018-06-07)<br>description, page 8, line 16-page 17, line 23, and figures 1-9 | 9-19, 24-25, 27-32 |
| X | CN 101552754 A (RF MICROELECTRONICS CORP.) 07 October 2009 (2009-10-07)<br>description, page 2, paragraph 4-page 17, paragraph 1, and figures 1-11 | 7-8, 20-23 |
| Y | CN 101552754 A (RF MICROELECTRONICS CORP.) 07 October 2009 (2009-10-07)<br>description, page 2, paragraph 4-page 17, paragraph 1, and figures 1-11 | 9-19, 24-25, 27-32 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 August 2024** | **28 August 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/099438**

**C. DOCUMENTS CONSIDERED TO BE RELEVANT**

| Category* | Citation of document, with indication, where appropriate, of the relevant passages | Relevant to claim No. |
|---|---|---|
| Y | US 2010035554 A1 (BA SEYDOU NOUROU et al.) 11 February 2010 (2010-02-11) description, paragraphs [0026]-[0103], and figures 1-12 | 12-19, 24-25, 27-32 |
| X | CN 105785225 A (CHINA SOUTHERN POWER GRID ELECTRIC POWER RESEARCH INSTITUTE CO., LTD.) 20 July 2016 (2016-07-20) description, paragraphs [0005]-[0031] | 26, 33 |
| Y | CN 105785225 A (CHINA SOUTHERN POWER GRID ELECTRIC POWER RESEARCH INSTITUTE CO., LTD.) 20 July 2016 (2016-07-20) description, paragraphs [0005]-[0031] | 27-32 |
| A | CN 116097521 A (CALTERAH SEMICONDUCTOR TECHNOLOGY (SHANGHAI) CO., LTD.) 09 May 2023 (2023-05-09) entire document | 1-33 |
| A | US 2007190952 A1 (TEXAS INSTRUMENTS INC.) 16 August 2007 (2007-08-16) entire document | 1-33 |

Form PCT/ISA/210 (second sheet) (July 2022)

**INTERNATIONAL SEARCH REPORT**
**Information on patent family members**

International application No.
**PCT/CN2024/099438**

| Patent document cited in search report | Publication date (day/month/year) | Patent family member(s) | Publication date (day/month/year) |
|---|---|---|---|
| CN 109698802 A | 30 April 2019 | CN 109698802 B | 03 September 2021 |
| WO 2018098629 A1 | 07 June 2018 | US 2019280730 A1 | 12 September 2019 |
| | | US 10623049 B2 | 14 April 2020 |
| | | EP 3540990 A1 | 18 September 2019 |
| | | EP 3540990 A4 | 16 October 2019 |
| | | EP 3540990 B1 | 16 March 2022 |
| | | JP 6860274 B2 | 14 April 2021 |
| CN 101552754 A | 07 October 2009 | CN 101552754 B | 05 September 2012 |
| US 2010035554 A1 | 11 February 2010 | US 8055217 B2 | 08 November 2011 |
| CN 105785225 A | 20 July 2016 | CN 105785225 B | 26 February 2019 |
| CN 116097521 A | 09 May 2023 | WO 2024065632 A1 | 04 April 2024 |
| US 2007190952 A1 | 16 August 2007 | US 8195103 B2 | 05 June 2012 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310702586
- CN 202410599441